# EUROPÄISCHE PATENTSCHRIFT

(11) **EP 3 794 712 B1**
(45) Veröffentlichungstag und Bekanntmachung des Hinweises auf die Patenterteilung: **24.11.2021**
(21) Anmeldenummer: 19736711.3
(22) Anmeldetag: 05.07.2019
(51) Int. Cl.: H02K 3/28, H02K 3/47, H02K 41/03

(54) **VERBINDUNGEN VON STATORLEITERN FÜR EINEN PLANARMOTOR**
CONNECTIONS OF STATOR CONDUCTORS FOR A PLANAR MOTOR
CONNEXIONS DES CONDUCTEURS STATORIQUES POUR UN MOTEUR PLANAIRE

(30) Priorität: 25.07.2018 DE 102018118004
(43) Veröffentlichungstag der Anmeldung: 24.03.2021
(73) Patentinhaber: Beckhoff Automation GmbH, 33415 Verl (DE)
(72) Erfinder: BRINKMANN, Rolf, 32107 Bad Salzuflen (DE); BENTFELD, Lukas, 33098 Paderborn (DE); PRUESSMEIER, Uwe, 32657 Lemgo (DE)
(74) Vertreter: Patentanwaltskanzlei WILHELM & BECK
(86) Internationale Anmeldenummer: PCT/EP2019/068144
(87) Internationale Veröffentlichungsnummer: WO 2020/020606

(56) Entgegenhaltungen:
- DE-A1-102015 221 710
- US-A1- 2014 183 979

## Beschreibung

Die Erfindung betrifft eine Statoreinheit zum Antreiben eines Läufers eines elektrischen Planarmotors.

Planarantriebssysteme mit elektrischen Planarmotoren können unter anderem in der Automatisierungstechnik, insbesondere der Fertigungstechnik, der Handhabungstechnik und der Verfahrenstechnik eingesetzt werden. Mittels Planarantriebssystemen kann ein bewegliches Element einer Anlage oder Maschine in mindestens zwei linear unabhängigen Richtungen bewegt oder positioniert werden. Planarantriebssysteme können einen permanenterregten elektromagnetischen Planarmotor mit einem planaren Stator und einem auf dem Stator in mindestens zwei Richtungen beweglichen Läufer umfassen.

Bei einem permanenterregten elektromagnetischen Planarmotor wird dadurch eine Antriebskraft auf den Läufer ausgeübt, dass stromdurchflossene Spulenleiter mit Antriebsmagneten einer Magnetanordnung magnetisch wechselwirken. Die Erfindung betrifft insbesondere Ausgestaltungen von Planarantriebssystemen, bei denen die Antriebsmagneten eines elektrischen Planarmotors an dem Läufer und die stromdurchflossenen Spulenleiter des Planarmotors in einem ortsfest angeordneten planaren Stator angeordnet sind.

Bei einem derartigen Antriebssystem umfasst der Läufer mindestens eine erste Magneteinheit und eine zweite Magneteinheit und der Stator umfasst mindestens eine Gruppe bestrombarer erster Spulenleiter und eine Gruppe bestrombarer zweiter Spulenleiter. Für das Antreiben des Läufers wirken die ersten Spulenleiter mit den ersten Antriebsmagneten und die zweiten Spulenleiter mit den zweiten Antriebsmagneten zusammen. Dabei können die ersten Spulenleiter in einer ersten Richtung länglich ausgedehnt und dazu ausgebildet sein, den Läufer in Wechselwirkung mit den ersten Antriebsmagneten in einer zu der ersten Richtung senkrechten Richtung anzutreiben. Die zweiten Spulenleiter können in einer von der ersten Richtung verschiedenen zweiten Richtung länglich ausgedehnt und dazu ausgebildet sein, den Läufer in Wechselwirkung mit den zweiten Antriebsmagneten in einer zu der zweiten Richtung senkrechten Richtung anzutreiben.

Bei derartigen Planarantriebssystemen können die mit dem Antriebsstrom beaufschlagbaren Spulenleiter in einer Statoreinheit des Stators angeordnet sein. Die Spulenleiter können dabei in mehreren Statorlagen angeordnet sein, wobei die Statorlagen in einer zu der ersten und der zweiten Richtung senkrecht orientierten dritten Richtung übereinander angeordnet sind.

Bei einer Statoreinheit mit mehreren Statorlagen können sowohl Spulenleiter einer Statorlage, als auch Spulenleiter verschiedener Statorlagen elektrisch leitend miteinander verbunden sein. Die Verbindungsstrukturen, welche die Spulenleiter miteinander verbinden, benötigen Platz, der nicht mehr für eine Anordnung der Spulenleiter zur Verfügung steht. Außerdem tragen die Antriebsströme auf den Verbindungsstrukturen in der Regel nicht zum Antrieb des Läufers bei.

Die Druckschriften WO 2013/059934 A1, WO 2015/017933 A1, WO 2015/179962 A1, WO 2015/184553 A1, WO 2015/188281 A1, WO 2017/004716 A1 beschreiben jeweils Planarantriebssysteme (*displacement devices*)*,* welche einen elektromagnetischen Planarmotor mit einem permanenterregten Läufer und einem mehrere bestrombare Leiter umfassenden Stator umfassen.

Aus der DE 10 2015 221710 A1 ist eine Statoreinheit mit den Merkmalen des Obergriffs des Anspruchs 1 bekannt. Eine weitere Statoreinheit ist in der US 2014/183979 A1 beschrieben.

Aufgabe der vorliegenden Erfindung ist es, eine verbesserte Statoreinheit anzugeben.

Diese Aufgabe wird durch eine Statoreinheit gemäß dem unabhängigen Anspruch gelöst. Weiterbildungen sind in den abhängigen Ansprüchen angeben.

Eine Statoreinheit zum Antreiben eines Läufers eines elektrischen Planarmotors umfasst in einer Statorlage der Statoreinheit angeordnete Spulenleiter, wobei die Spulenleiter in einer ersten Richtung länglich ausgedehnt sind und in einer zu der ersten Richtung senkrecht orientierten zweiten Richtung nebeneinander angeordnet sind. Die Spulenleiter sind auf der Statoreinheit zu einem Dreiphasensystem mit einer ersten Phase, einer zweiten Phase und einer dritten Phase verschaltet. Die Spulenleiter sind als ein erster Hinleiter und als ein mit dem ersten Hinleiter in Reihe geschalteter erster Rückleiter der ersten Phase, als ein zweiter Hinleiter und als ein mit dem zweiten Hinleiter in Reihe geschalteter zweiter Rückleiter der zweiten Phase und als ein dritter Hinleiter und als ein mit dem dritten Hinleiter in Reihe geschalteter dritter Rückleiter der dritten Phase ausgebildet. Das Dreiphasensystem weist eine erste Seite und eine der ersten Seite gegenüberliegende zweite Seite auf. Der erste Hinleiter und der erste Rückleiter sind mittels eines in der Statorlage und an der zweiten Seite des Dreiphasensystems angeordneten ersten Horizontalverbindungsleiters elektrisch leitend in Reihe geschaltet und der zweite Hinleiter und der zweite Rückleiter sind mittels eines in der Statorlage und an der ersten Seite des Dreiphasensystems angeordneten zweiten Horizontalverbindungsleiters elektrisch leitend in Reihe geschaltet.

Damit sind der erste Hin- und Rückleiter und der zweite Hin- und Rückleiter in der Statorlage an einander gegenüberliegenden Seiten des Dreiphasensystems in Reihe geschaltet. Dadurch können die Horizontalverbindungsleiter besonders platzsparend angeordnet werden. Indem die Hin- und Rückleiter sowohl der ersten Phase, als auch der zweiten Phase in der Statorlage in Reihe geschaltet sind, wird für die Reihenschaltung der Hin- und Rückleiter der ersten und zweiten Phase keine Vertikalverbindungsstruktur durch die Statoreinheit benötigt. Damit steht in der Statorlage besonders viel Fläche zur Anordnung der Spulenleiter zur Verfügung.

Bei einer Weiterbildung der Statoreinheit sind der dritte Hinleiter und der dritte Rückleiter mittels eines an der zweiten Seite des Dreiphasensystems angeordneten dritten Horizontalverbindungsleiters elektrisch leitend miteinander verbunden, wobei der dritte Horizontalverbindungsleiter in einer der Statorlage benachbart angeordneten Nachbarstatorlage angeordnet ist. Der dritte Hinleiter ist über einen ersten Vertikalverbindungsleiter mit dem dritten Horizontalverbindungsleiter elektrisch leitend verbunden und der dritte Rückleiter ist über einen zweiten Vertikalverbindungsleiter mit dem dritten Horizontalverbindungsleiter elektrisch leitend verbunden.

Eine Anordnung des dritten Horizontalverbindungsleiters in einer Nachbarstatorlage der Statorlage ermöglicht es, den ersten und zweiten Vertikalverbindungsleiter besonders kurz auszubilden, so dass in den übrigen Statorlagen der Statoreinheit Platz für die Anordnung weiterer Vertikalverbindungsleiter zur Verfügung steht.

Bei einer Weiterbildung der Statoreinheit umfasst die Statoreinheit eine zweilagige Trägerplatte, wobei die Statorlage auf einer ersten Seite der Trägerplatte und die Nachbarstatorlage auf einer zweiten Seite der Trägerplatte angeordnet sind. Dadurch können die Statorlage und die Nachbarstatorlage einfach nebeneinander angeordnet und über Durchkontaktierungen der Trägerplatte elektrisch leitend miteinander verbunden werden.

Bei einer Weiterbildung der Statoreinheit erstrecken sich der erste Vertikalverbindungsleiter und der zweite Vertikalverbindungsleiter jeweils von der ersten Seite der Trägerplatte bis zu der zweiten Seite der Trägerplatte. Insbesondere enden der erste und zweite Vertikalverbindungsleiter jeweils auf der ersten bzw. zweiten Seite der Trägerplatte. Damit können unter oder über dem ersten oder zweiten Vertikalverbindungsleiter weitere Vertikalverbindungsleiter angeordnet werden, so dass viel Platz für die Anordnung der Spulenleiter zur Verfügung steht. Insbesondere können die Vertikalverbindungsleiter als *buried vias* oder *blind vias* einer Leiterplatte der Statoreinheit ausgebildet werden.

Bei einer Weiterbildung der Statoreinheit umfasst die Statoreinheit eine erste Anschlussstruktur zur Einspeisung der ersten Phase und eine zweite Anschlussstruktur zur Einspeisung der zweiten Phase. Der erste Hinleiter ist in der Statorlage mit einem an der ersten Seite angeordneten dritten Vertikalverbindungsleiter elektrisch leitend verbunden, wobei der erste Hinleiter über den dritten Vertikalverbindungsleiter mit der ersten Anschlussstruktur elektrisch leitend verbunden ist. Der erste Rückleiter ist in der Statorlage mit einem an der ersten Seite angeordneten vierten Vertikalverbindungsleiter elektrisch leitend verbunden, wobei der erste Rückleiter über den vierten Vertikalverbindungsleiter mit einem Sternpunkt des Dreiphasensystems elektrisch leitend verbunden ist. Der zweite Hinleiter ist in der Statorlage mit einem an der zweiten Seite angeordneten fünften Vertikalverbindungsleiter elektrisch leitend verbunden, wobei der zweite Hinleiter über den fünften Vertikalverbindungsleiter mit dem Sternpunkt elektrisch leitend verbunden ist. Der zweite Rückleiter ist in der Statorlage mit einem an der zweiten Seite angeordneten sechsten Vertikalverbindungsleiter elektrisch leitend verbunden, wobei der zweite Rückleiter über den sechsten Vertikalverbindungsleiter mit der zweiten Anschlussstruktur elektrisch leitend verbunden ist.

Über die dritte und sechste Vertikalverbindungsstruktur können der erste Hinleiter und der zweite Rückleiter platzsparend mit der Anschlussstruktur verbunden werden. Insbesondere kontaktieren der erste Hinleiter und der erste Rückleiter die Anschlussstruktur nicht in der Statorlage, so dass in der Statorlage viel Platz zur Anordnung der Spulenleiter zur Verfügung steht. Indem der zweite Rückleiter und nicht der zweite Hinleiter an die der sechste Vertikalverbindungsstruktur zur Verbindung mit der zweiten Anschlussstruktur angeschlossen ist, können der zweite Rückleiter und der zweite Hinleiter besonders einfach auf der der zweiten Seite gegenüberliegenden ersten Seite in der Statorlage miteinander verbunden werden.

Bei einer Weiterbildung der Statoreinheit sind die erste Anschlussstruktur und die zweite Anschlussstruktur an der ersten Seite des Dreiphasensystems angeordnet. Damit kann die Statoreinheit besonders platzsparend kontaktiert werden und es steht an den übrigen Seiten des Dreiphasensystems viel Platz für die Anordnung der Spulenleiter zur Verfügung.

Bei einer Weiterbildung der Statoreinheit umfasst die Statoreinheit eine Anschlussstatorlage, wobei die Anschlussstatorlage einen weiteren ersten Hinleiter der ersten Phase, einen weiteren ersten Rückleiter der ersten Phase und einen weiteren zweiten Hinleiter der zweiten Phase umfasst. Die erste Anschlussstruktur ist in der Anschlussstatorlage mit dem weiteren ersten Hinleiter und die zweite Anschlussstruktur ist in der Anschlussstatorlage mit dem weiteren zweiten Hinleiter elektrisch leitend verbunden. Der weitere erste Hinleiter ist mittels eines in der Anschlussstatorlage und an der zweiten Seite des Dreiphasensystems angeordneten weiteren ersten Horizontalverbindungsleiters elektrisch leitend mit dem weiteren ersten Rückleiter verbunden und der weitere zweite Hinleiter ist an der zweiten Seite des Dreiphasensystems mit dem sechsten Vertikalverbindungsleiter elektrisch leitend verbunden.

Indem der weitere Hinleiter in der Anschlussstatorlage an der der zweiten Anschlussstruktur gegenüberliegenden zweiten Seite des Dreiphasensystems mit der Vertikalverbindungsstruktur elektrisch leitend verbunden ist, können die zweiten Hin- und Rückleiter in den übrigen Statorlagen der Statoreinheit besonders einfach an der ersten Seite des Dreiphasensystems elektrisch leitend miteinander verbunden werden.

Bei einer Weiterbildung der Statoreinheit umfasst die Statoreinheit einen weiteren zweiten Rückleiter der zweiten Phase, wobei der weitere zweite Rückleiter an der zweiten Seite des Dreiphasensystems mit dem fünften Vertikalverbindungsleiter elektrisch leitend verbunden ist. Der weitere zweite Rückleiter ist an der ersten Seite des Dreiphasensystems über einen siebten Vertikalverbindungsleiter mit dem Sternpunkt des Dreiphasensystems elektrisch leitend verbunden.

Über den weiteren zweiten Rückleiter kann die zweite Phase des Antriebsstroms besonders einfach von einem an der zweiten Seite des Dreiphasensystems angeordneten zweiten Ende eines Hinleiters zu dem an der ersten Seite des Dreiphasensystems angeordneten Sternpunkt geleitet werden.

Bei einer Weiterbildung der Statoreinheit ist der weitere zweite Rückleiter in der Anschlussstatorlage angeordnet und in der Anschlussstatorlage mit dem siebten Vertikalverbindungsleiter elektrisch leitend verbunden. Außer in der Anschlussstatorlage können dann alle zweiten Hin- und Rückleiter in ihrer betreffenden Statorlage elektrisch leitend miteinander verbunden sein, wodurch in den übrigen Statorlagen besonders viel Platz für die Anordnung der Spulenleiter zur Verfügung steht. Bei der Statoreinheit kann die Anschlussstatorlage insbesondere eine in einer zu der ersten und zweiten Richtung senkrecht orientierten dritten Richtung oberste Statorlage und die Statorlage kann eine in der dritten Richtung unterste Statorlage der Statoreinheit bilden.

Bei einer Weiterbildung der Statoreinheit ist der Sternpunkt des Dreiphasensystems in der Nachbarstatorlage angeordnet. Dadurch können der erste und dritte Rückleiter der Statorlage über besonders kurze Leiterstrukturen mit dem Sternpunkt in der Nachbarstatorlage verbunden werden.

Soweit zwei Leiterstrukturen innerhalb einer Statorlage der Statoreinheit elektrisch leitend verbunden sind, bedeutet dies, dass alle Leiter, über die die beiden Leiterstrukturen elektrisch leitend miteinander verbunden sind, in der betreffenden Statorlage angeordnet sind. Soweit zwei Leiterstrukturen an einer Seite des Dreiphasensystems elektrisch leitend verbunden sind, bedeutet dies, dass alle Leiter, über die die beiden Leiterstrukturen elektrisch leitend miteinander verbunden sind, an der betreffenden Seite des Dreiphasensystems angeordnet sind.

Die Statoreinheit kann eine erste Statorlage, eine zweite Statorlage, eine dritte Statorlage und eine vierte Statorlage aufweisen, die in einer zu der ersten und zweiten Richtung senkrecht orientierten dritten Richtung übereinander angeordnet sind. Die Anschlussstatorlage der Statoreinheit kann durch die erste Statorlage der Statoreinheit, die Nachbarstatorlage kann durch die dritte Statorlage der Statoreinheit und die Statorlage kann durch die vierte Statorlage der Statoreinheit gebildet werden. Die Spulenleiter können durch erste Spulenleiter der Statoreinheit gebildet werden und die Statoreinheit kann neben den ersten Spulenleitern auch noch zweite Spulenleiter umfassen. Das Dreiphasensystem kann durch ein erstes Dreiphasensystem der Statoreinheit gebildet werden. Die Trägerplatte kann durch eine zweite Trägerplatte gebildet werden und die Statoreinheit kann neben der zweiten Trägerplatte mindestens noch eine erste Trägerplatte aufweisen.

Die Erfindung wird nachfolgend anhand von Ausführungsbeispielen und unter Bezugnahme auf Figuren näher erläutert. Dabei zeigen jeweils in schematischer Darstellung
- Fig. 1: eine perspektivische Ansicht von oben auf ein Planarantriebssystem mit einem Statormodul und einem Läufer;
- Fig. 2: eine perspektivische Ansicht von unten auf den Läufer des Planarantriebssystems mit einer Magnetanordnung;
- Fig. 3: eine perspektivische Ansicht von oben des Statormoduls des Planarantriebssystems;
- Fig. 4: eine Explosionsansicht einer Statoreinheit des Statormoduls mit einer ersten, zweiten, dritten und vierten Statorlage;
- Fig. 5: die Statorlagen eines ersten Statorsektors der Statoreinheit mit einzelnen Statorsegmenten;
- Fig. 6: eine schematische Darstellung einer Aufsicht auf die erste Statorlage des ersten Statorsektors;
- Fig. 7: eine schematische Darstellung einer Aufsicht auf die zweite Statorlage des ersten Statorsektors;
- Fig. 8: ein Ersatzschaltbild erster Statorsegmente des ersten Statorsektors;
- Fig. 9: ein Ersatzschaltbild zweiter Statorsegmente des ersten Statorsektors;
- Fig. 10: ein Ersatzschaltbild der ersten und zweiten Statorsegmente des ersten Statorsektors;
- Fig. 11: eine schematische, nicht maßstabsgetreue Darstellung der Statoreinheit in einer Schnittansicht;
- Fig. 12: eine schematische, nicht maßstabsgetreue Darstellung eines Ausschnitts der Statoreinheit in einer weiteren, vergrößerten Schnittansicht;
- Fig. 13: eine Aufsicht von oben auf die erste Statorlage des ersten Statorsektors der Statoreinheit;
- Fig. 14: eine Aufsicht von oben auf die zweite Statorlage des ersten Statorsektors der Statoreinheit;
- Fig. 15: eine Aufsicht von oben auf die dritte Statorlage des ersten Statorsektors der Statoreinheit;
- Fig. 16: eine Aufsicht von oben auf die vierte Statorlage des ersten Statorsektors der Statoreinheit;
- Fig. 17: eine Verschaltung der Leiterstrukturen zum Leiten der ersten Phase des Antriebsstroms auf der Statoreinheit;
- Fig. 18: eine Verschaltung der Leiterstrukturen zum Leiten der zweiten Phase des Antriebsstroms auf der Statoreinheit;
- Fig. 19: eine Verschaltung der Leiterstrukturen zum Leiten der dritten Phase des Antriebsstroms auf der Statoreinheit;
- Fig. 20: einer weitere Statoreinheit des Statormoduls in einer Schnittansicht;
- Fig. 21: eine Verschaltung der Leiterstrukturen zum Leiten der ersten Phase des Antriebsstroms auf der weiteren Statoreinheit;
- Fig. 22: eine Verschaltung der Leiterstrukturen zum Leiten der zweiten Phase des Antriebsstroms auf der weiteren Statoreinheit;
- Fig. 23: eine Verschaltung der Leiterstrukturen zum Leiten der dritten Phase des Antriebsstroms auf der weiteren Statoreinheit.

Die Erfindung betrifft im Wesentlichen Weiterentwicklungen der in den Veröffentlichungen WO 2013/059934 A1, WO 2015/017933 A1, WO 2015/179962 A1, WO 2015/184553 A1, WO 2015/188281 A1 und WO 2017/004716 A1 offenbarten Planarantriebssysteme.

Außerdem betrifft die Erfindung Weiterentwicklungen der in den deutschen Patentanmeldungen 10 2017 131 304.4, 10 2017 131 314.1, 10 2017 131 320.6, 10 2017 131 321.4, 10 2017 131 324.9, 10 2017 131 326.5, eingereicht am 27. Dezember 2017, sowie 10 2018 117 953.7 und 10 2018 117 981.2, eingereicht am 25. Juli 2018, offenbarten Planarantriebssysteme.

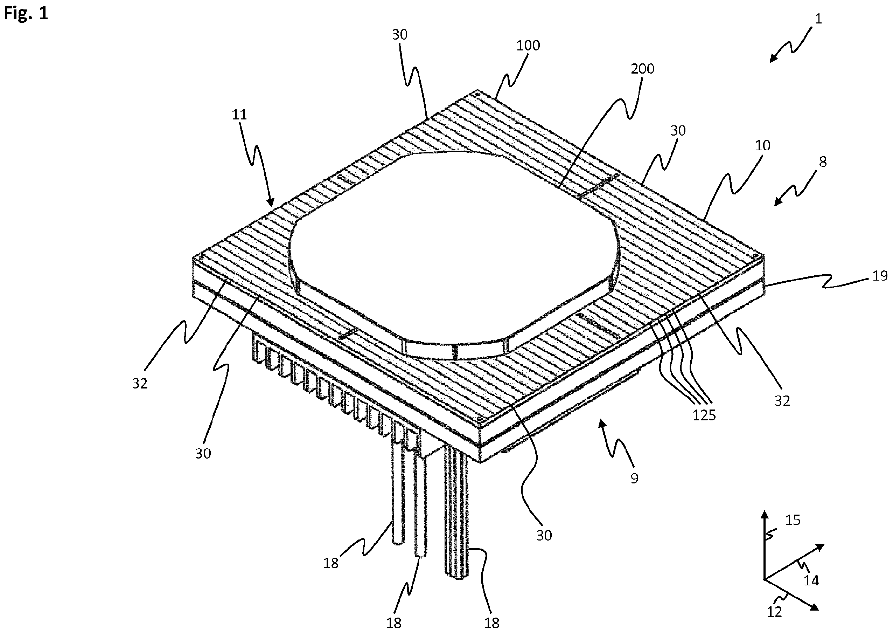

**Fig. 1** zeigt eine perspektivische Ansicht von oben auf ein Planarantriebssystem 1 mit einem Statormodul 10 und einem Läufer 200. Das Statormodul 10 umfasst ein Modulgehäuse 19 und eine Statoreinheit 100. Das Statormodul 10 weist eine Oberseite 8 und eine der Oberseite 8 gegenüberliegende Unterseite 9 auf. Die Statoreinheit 100 ist in einer von der Unterseite 9 zu der Oberseite 8 orientierten dritten oder vertikalen Richtung 15 oberhalb des Modulgehäuses 19 und an der Oberseite 8 des Statormoduls 10 angeordnet. Die Statoreinheit 100 ist als ein Planarstator ausgebildet und weist an der Oberseite 8 des Statormoduls 10 eine ebene, d.h. planare, Statorfläche 11 auf. Die Statorfläche 11 bildet zugleich eine Oberfläche des Statormoduls 10.

Die Statorfläche 11 ist senkrecht zu der dritten Richtung 15 orientiert und erstreckt sich über die gesamte Oberseite 8 der Statoreinheit 100 und des Statormoduls 10. Die Statoreinheit 100 umfasst an der Statorfläche 11 mindestens einen mit einem Antriebsstrom beaufschlagbaren ersten Spulenleiter 125. Die Statoreinheit 100 kann, wie dargestellt, an der Statorfläche 11 eine Mehrzahl der ersten Spulenleiter 125 aufweisen. Die ersten Spulenleiter 125 können jeweils mit einem Antriebsstrom beaufschlagt werden. Mittels der Antriebsströme in den ersten Spulenleitern 125 kann ein Magnetfeld erzeugt werden, welches den Läufer 200 in Wechselwirkung mit in Fig. 1 nicht dargestellten Antriebsmagneten des Läufers 200 antreibt. Der Läufer 200 und die Statoreinheit 100 mit den stromdurchflossenen ersten Spulenleitern 125 bilden einen elektromagnetischen Planarmotor.

Der Läufer 200 ist im Betrieb beweglich über der Statorfläche 11 des Statormoduls 10 angeordnet und kann im Betrieb sowohl in einer ersten Richtung 12, als auch in einer zweiten Richtung 14 angetrieben werden. Die erste Richtung 12 und die zweite Richtung 14 sind voneinander verschieden und linear unabhängig. Insbesondere können die erste Richtung 12 und die zweite Richtung 14, wie in Fig. 1 dargestellt, senkrecht zueinander ausgerichtet sein. Die erste Richtung 12 und die zweite Richtung 14 sind jeweils parallel zu der Statorfläche 11 und senkrecht zu der dritten Richtung 15 orientiert. Indem der Läufer 200 zugleich in der ersten Richtung 12, als auch in der zweiten Richtung 14 angetrieben wird, kann der Läufer 200 über der Statorfläche 11 in einer beliebigen Richtung angetrieben werden. Der Läufer 200 kann im Betrieb in der dritten Richtung 15 schwebend über der Statorfläche 11 gehalten werden, beispielsweise durch eine magnetische Wechselwirkung zwischen den Antriebsmagneten und geeigneten Antriebsströmen in den ersten Spulenleitern 125. Neben einem Antreiben des Läufers 200 in der ersten und zweiten Richtung 12, 14 ist auch ein Antreiben in der dritten, vertikalen Richtung 15 möglich.

Die Statorfläche 11 ist rechteckig ausgebildet. Insbesondere kann die Statorfläche 11, wie dargestellt, quadratisch ausgebildet sein. Die Statorfläche 11 wird durch vier jeweils gerade Außenkanten 30 begrenzt. Jeweils zwei einander gegenüberliegende Außenkanten 30 sind parallel zu der ersten Richtung 12 und zwei einander gegenüberliegende weitere Außenkanten 30 sind parallel zu der zweiten Richtung 14 orientiert.

Eine Ausdehnung der Statoreinheit 100 in der dritten Richtung 15 ist kleiner als eine Ausdehnung der Statoreinheit 100 in der ersten und der zweiten Richtung 12, 14. Die Statoreinheit 100 bildet daher einen flachen in der ersten und zweiten Richtung 12, 14 ausgedehnten Quader oder eine in der ersten und zweiten Richtung 12, 14 ausgedehnte Platte. Zwischen der Statorfläche 11 und einer der Statorfläche 11 gegenüberliegenden Unterseite der Statoreinheit 100 weist die Statoreinheit 100 vier jeweils ebene Seitenflächen 32 auf, die an der Statorfläche 11 mit den Außenkanten 30 der Statorfläche 11 bündig abschließen. Die Seitenflächen 32 der Statoreinheit 100 sind senkrecht zu der Statorfläche 11 orientiert.

Die Statorfläche 11 kann in der ersten Richtung 12 eine Ausdehnung zwischen 100mm und 500mm aufweisen, insbesondere zwischen 120mm und 350mm, insbesondere von 240mm. Die Statorfläche 11 kann in der zweiten Richtung 14 eine Ausdehnung zwischen 100mm und 500mm, insbesondere zwischen 120mm und 350mm, insbesondere von 240mm aufweisen. Das Statormodul 10 kann in der dritten Richtung 15 eine Ausdehnung zwischen 10mm und 100mm, insbesondere zwischen 15mm und 60mm, insbesondere von 30mm aufweisen. Das Modulgehäuse 19 kann in der dritten Richtung 15 eine Ausdehnung zwischen 8mm und 80mm, insbesondere zwischen 13mm und 55mm, insbesondere von 26,6mm aufweisen. Das Modulgehäuse 19 kann in der ersten und/oder zweiten Richtung 12, 14 die gleiche Ausdehnung aufweisen wie die Statorfläche 11. Die Statoreinheit 100 kann in der dritten Richtung 15 eine Ausdehnung von 1mm bis 10mm, insbesondere von 2mm bis 5mm, insbesondere von 3,5mm bis 4,5mm, insbesondere von 3,7mm bis 4mm aufweisen.

Mehrere Exemplare des Statormoduls 10 können derart nebeneinander angeordnet werden, dass die Außenkanten 30 benachbarter Statormodule 10 aneinanderliegen und die Statorflächen 11 der Statormodule 10 eine zusammenhängende Arbeitsfläche bilden, über die der Läufer 200 unterbrechungsfrei bewegt werden kann.

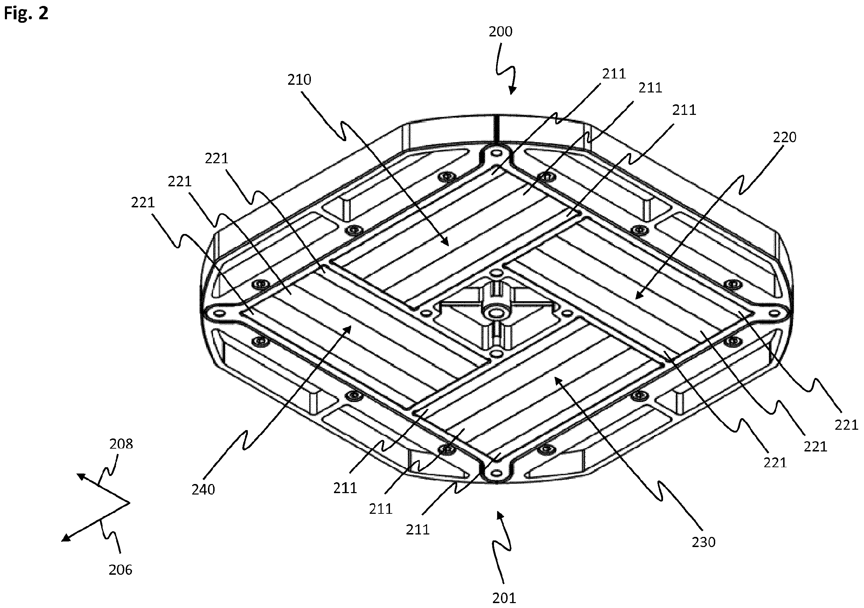

**Fig. 2** zeigt den Läufer 200 des Planarantriebssystems 1 in einer perspektivischen Ansicht von unten auf eine Unterseite des Läufers 200. Im Betrieb des Planarantriebssystem 1 ist die Unterseite des Läufers 200 der Statorfläche 11 des Statormoduls 10 zugewandt angeordnet. Der Läufer 200 weist an der Unterseite eine Magnetanordnung 201 auf. Die Magnetanordnung 201 ist rechteckig, insbesondere quadratisch, ausgebildet und umfasst mehrere Magneten. Die Unterseite des Läufers 200 ist, insbesondere im Bereich der Magneten der Magnetanordnung 201, eben bzw. planar ausgebildet. Im Betrieb ist die Unterseite des Läufers 200 mit der Magnetanordnung 201 im Wesentlichen parallel zu der Statorfläche 11 orientiert und der Statorfläche 11 zugewandt angeordnet.

Die Magnetanordnung 201 umfasst eine erste Magneteinheit 210, eine zweite Magneteinheit 220, eine dritte Magneteinheit 230 und eine vierte Magneteinheit 240. Die erste Magneteinheit 210 und die dritte Magneteinheit 230 weisen jeweils in einer ersten Läuferrichtung 206 länglich ausgedehnte und entlang einer zu der ersten Läuferrichtung 206 senkrecht orientierten zweiten Läuferrichtung 208 nebeneinander angeordnete erste Antriebsmagnete 211 auf. Insbesondere können die erste und die dritte Magneteinheit 210, 230 jeweils drei erste Antriebsmagnete 211 aufweisen. Die zweite Magneteinheit 220 und die vierte Magneteinheit 240 weisen jeweils in der ersten Läuferrichtung 206 nebeneinander angeordnete und entlang der zweiten Läuferrichtung 208 länglich ausgedehnte zweite Antriebsmagnete 221 auf. Insbesondere können die zweite und die vierte Magneteinheit 220, 240 jeweils drei zweite Antriebsmagnete 221 aufweisen.

Die erste und dritte Magneteinheit 210, 230 dient im Betrieb einem Antreiben des Läufers 200 in der zweiten Läuferrichtung 208 und die zweite und vierte Magneteinheit 220, 240 dient im Betrieb einem Antreiben des Läufers 200 in der ersten Läuferrichtung 206. Die ersten Antriebsmagneten 211 der ersten und dritten Magneteinheit 210, 230 und die zweiten Antriebsmagneten 221 der zweiten und vierten Magneteinheit 220, 240 sind jeweils senkrecht zu der ersten und der zweiten Läuferrichtung 206, 208 magnetisiert. Dabei weisen benachbarte Antriebsmagnete 211, 221 der Magneteinheiten 210, 220, 230, 240 jeweils entgegengesetzte Magnetisierungen auf.

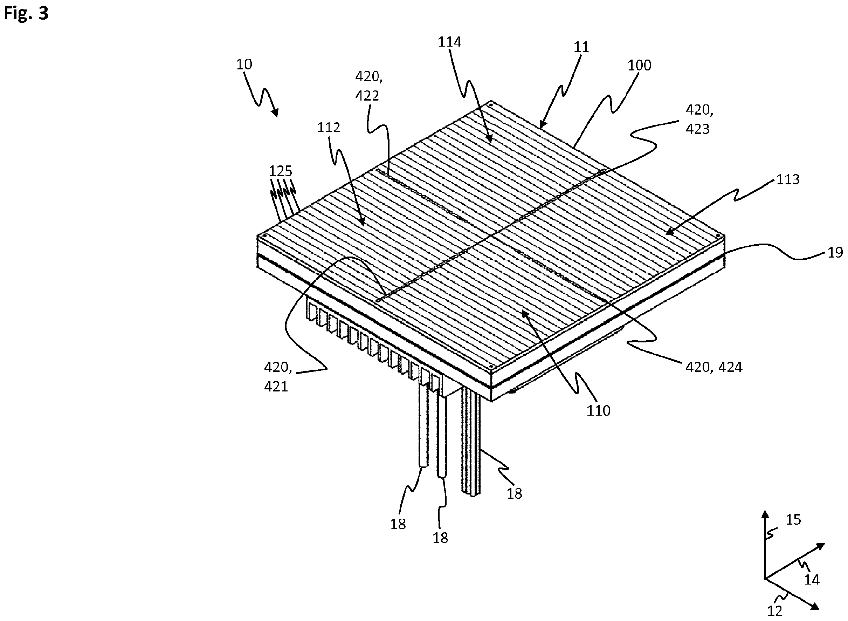

**Fig. 3** zeigt das Statormodul 10 des Planarantriebssystems 1 in einer perspektivischen Ansicht von oben ohne den Läufer 200. Die Statoreinheit 100 des Statormoduls 10 umfasst einen ersten Statorsektor 110, einen zweiten Statorsektor 112, einen dritten Statorsektor 113 und einen vierten Statorsektor 114. Die Statorsektoren 110, 112, 113, 114 umfassen ihrerseits jeweils einen Teil der an der Statorfläche 11 der Statoreinheit 100 angeordneten ersten Spulenleiter 125. Jeder der ersten Spulenleiter 125 an der Statorfläche 11 ist vollständig in einem der Statorsektoren 110, 112, 113, 114 angeordnet. Die Statorsektoren 110, 112, 113, 114 sind rechteckig ausgebildet. Insbesondere können die Statorsektoren 110, 112, 113, 114 quadratisch ausgebildet sein, so dass eine Ausdehnung der Statorsektoren 110, 112, 113, 114 in der ersten Richtung 12 einer Ausdehnung der Statorsektoren 110, 112, 113, 114 in der zweiten Richtung 14 entspricht.

Die Statorsektoren 110, 112, 113, 114 sind in der ersten Richtung 12 in zwei nebeneinanderliegenden Reihen und in der zweiten Richtung 14 ebenfalls in zwei nebeneinanderliegenden Reihen aneinander anschließend angeordnet. Die Statorsektoren 110, 112, 113, 114 benachbarter Reihen sind ebenfalls jeweils aneinander anschließend angeordnet. In der ersten Richtung 12 umfasst die Statoreinheit 100 eine Reihe mit dem zweiten Statorsektor 112 und dem ersten Statorsektor 110 und eine weitere Reihe mit dem vierten Statorsektor 114 und dem dritten Statorsektor 113. In der zweiten Richtung 14 umfasst die Statoreinheit 100 eine Reihe mit dem ersten Statorsektor 110 und dem dritten Statorsektor 113 und eine weitere Reihe mit dem zweiten Statorsektor 112 und dem vierten Statorsektor 114.

Die Statorsektoren 110, 112, 113, 114 weisen in der ersten Richtung 12 und in der zweiten Richtung 14 jeweils eine Ausdehnung auf, die halb so groß ist wie die Ausdehnung der Statoreinheit 100 bzw. die Ausdehnung des Statormoduls 10 in der entsprechenden Richtung 12, 14. Die Grenzen der Statorsektoren 110, 112, 113, 114 verlaufen damit in der ersten und in der zweiten Richtung 12, 14 jeweils in der Mitte der Statoreinheit 100 und schneiden sich im Zentrum der Statoreinheit 100. Die Statorsektoren 110, 112, 113, 114 umfassen jeweils ein Viertel der Fläche, d.h. einen Quadranten, der Statoreinheit 100.

Bei der in Fig. 3 dargestellten Statoreinheit 100 des Statormoduls 10 umfasst die Statorlage an der Statorfläche 11 lediglich erste Spulenleiter 125, welche entlang der ersten Richtung 12 länglich ausgedehnt und entlang einer zu der ersten Richtung 12 senkrechten Richtung nebeneinander und aneinander anschließend angeordnet sind. Sind die erste Richtung 12 und die zweite Richtung 14, wie in Fig. 3 dargestellt, senkrecht zueinander orientiert, so sind die ersten Spulenleiter 125 entlang der zweiten Richtung 14 nebeneinander und aneinander anschließend angeordnet.

Neben den in Fig. 3 dargestellten ersten Spulenleitern 125 umfasst die Statoreinheit 100 in Fig. 3 nicht dargestellte zweite Spulenleiter. Die zweiten Spulenleiter sind entlang der zweiten Richtung 14 länglich ausgedehnt und in einer zu der zweiten Richtung 14 senkrechten Richtung nebeneinander und aneinander anschließend angeordnet. Sind die zweite Richtung 14 und die erste Richtung 12 senkrecht zueinander orientiert, so sind die zweiten Spulenleiter entlang der ersten Richtung 12 nebeneinander und aneinander anschließend angeordnet.

Innerhalb der Statorsektoren 110, 112, 113, 114 sind die ersten Spulenleiter 125 und die zweiten Spulenleiter in mehreren übereinanderliegenden Statorlagen oder Statorebenen angeordnet, wobei jede der Statorlagen entweder erste Spulenleiter 125 oder zweite Spulenleiter umfasst, nicht jedoch sowohl erste Spulenleiter 125, als auch zweite Spulenleiter 126. Von der Ausdehnung der ersten Spulenleiter 125 und der zweiten Spulenleiter abgesehen und soweit im Folgenden keine Unterschiede beschrieben werden, sind die Statorsektoren 110, 112, 113, 114 auf den unterschiedlichen Statorlagen identisch ausgebildet.

Die in Fig. 3 sichtbare Statorlage an der Statorfläche 11 bildet eine erste Statorlage der Statoreinheit 100. In der dritten Richtung 15 unterhalb der ersten Statorlage umfasst die Statoreinheit 100 mindestens noch eine zweite Statorlage, eine dritte Statorlage und eine vierte Statorlage.

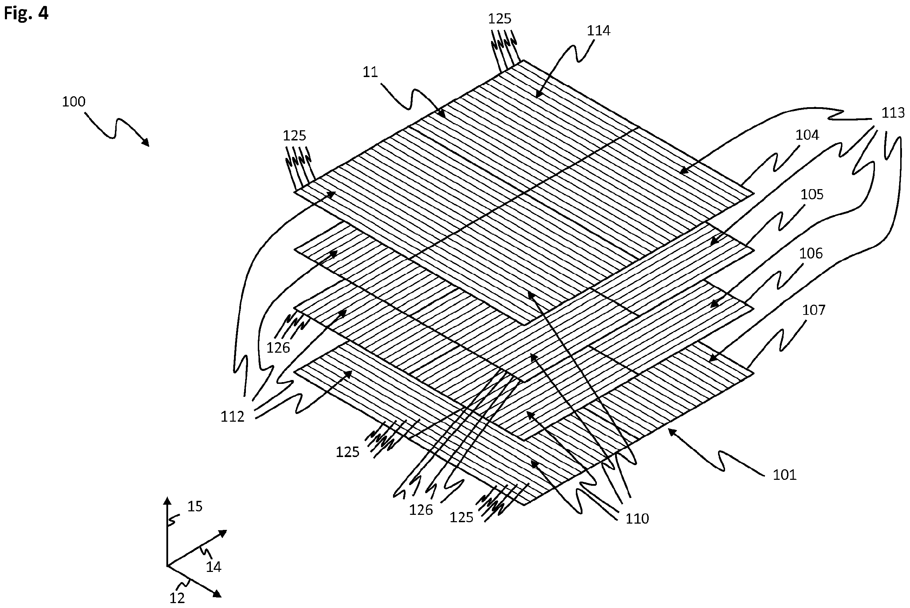

**Fig. 4** zeigt eine schematische perspektivische Darstellung einer Explosionsansicht der Statoreinheit 100 mit den einzelnen Statorlagen.

Die Statoreinheit 100 umfasst in der dritten Richtung 15 unter der an der Statorfläche 11 angeordneten ersten Statorlage 104 eine zweite Statorlage 105, unter der zweiten Statorlage 105 eine dritte Statorlage 106 und unter der dritten Statorlage 106 eine vierte Statorlage 107. Soweit im Folgenden keine Unterscheide beschrieben werden, sind die zweite, dritte und vierte Statorlage 105, 106, 107 ausgebildet, wie es für die in Fig. 3 dargestellte erste Statorlage 104 an der Statorfläche 11 der Statoreinheit 100 beschrieben wird.

Die Statorsektoren 110, 112, 113, 114 umfassen in der vierten Statorlage 107, wie in der ersten Statorlage 104, entlang der ersten Richtung 12 länglich ausgedehnte und in der zu der ersten Richtung 12 senkrecht orientierten Richtung nebeneinander und aneinander anschließend angeordnete erste Spulenleiter 125. In der zweiten Statorlage 105 und in der dritten Statorlage 106 umfassen die Statorsektoren 110, 112, 113, 114 zweite Spulenleiter 126. Soweit im Folgenden keine Unterschiede beschrieben werden, sind die zweiten Spulenleiter 126 ausgebildet, wie es für die ersten Spulenleiter 125 in der ersten Statorlage 104 und in der vierten Statorlage 107 beschrieben wird. Anders als die ersten Spulenleiter 125 der ersten und vierten Statorlage 104, 107, sind die zweiten Spulenleiter 126 der zweiten und dritten Statorlage 105, 106 entlang der zweiten Richtung 14 länglich ausgedehnt und in der zu der zweiten Richtung 14 senkrecht orientierten Richtung nebeneinander und aneinander anschließend angeordnet.

Die Statorsektoren 110, 112, 113, 114 umfassen in der ersten und vierten Statorlage 104, 107 ausschließlich die entlang der ersten Richtung 12 länglich ausgedehnten ersten Spulenleiter 125 und nicht auch noch zusätzlich die entlang der zweiten Richtung 14 länglich ausgedehnten zweiten Spulenleiter 126. Ebenso umfassen die Statorsektoren 110, 112, 113, 114 in der zweiten und dritten Statorlage 105, 106 ausschließlich die entlang der zweiten Richtung 14 länglich ausgedehnten zweiten Spulenleiter 126 und nicht auch noch zusätzlich die entlang der ersten Richtung 12 länglich ausgedehnten ersten Spulenleiter 125.

Die Statorsektoren 110, 112, 113, 114 weisen in allen Statorlagen 104, 105, 106, 107 jeweils die gleichen Abmessungen auf. Insbesondere weisen die Statorsektoren 110, 112, 113, 114 in allen Statorlagen 104, 105, 106, 107 in der ersten Richtung 12 und in der zweiten Richtung 14 jeweils gleiche Abmessungen auf.

Die Anzahl und Anordnung der ersten Spulenleiter 125 ist in den einzelnen übereinanderliegenden Statorlagen 104, 107 mit ersten Spulenleitern 125, insbesondere in der ersten und vierten Statorlage 104, 107, identisch. Insbesondere sind die ersten Spulenleiter 125 in der dritten Richtung 15 übereinanderliegend angeordnet. Außerdem ist die Anzahl und Anordnung der zweiten Spulenleiter 126 in den einzelnen übereinanderliegenden Statorlagen 105, 106 mit zweiten Spulenleitern 126, insbesondere in der zweiten und dritten Statorlage 105, 106, identisch. Insbesondere sind die zweiten Spulenleiter 126 in der dritten Richtung 15 übereinanderliegend angeordnet.

Die Statorsektoren 110, 112, 113, 114 sind unabhängig voneinander bestrombar ausgebildet. Insbesondere sind die ersten Spulenleiter 125 und die zweiten Spulenleiter 126 der einzelnen Statorsektoren 110, 112, 113, 114 auf der Statoreinheit 100 elektrisch isoliert voneinander ausgebildet. Das heißt insbesondere, dass die Spulenleiter 125, 126 des ersten Statorsektors 110 elektrisch isoliert von den Spulenleitern 125, 126 des zweiten Statorsektors 112, von den Spulenleitern 125, 126 des dritten Statorsektors 113 und von den Spulenleitern 125, 126 des vierten Statorsektors 114 ausgebildet sind. Außerdem sind die Spulenleiter 125, 126 des zweiten Statorsektors 112 elektrisch isoliert von den Spulenleitern 125, 126 des ersten Statorsektors 110, von den Spulenleitern 125, 126 des dritten Statorsektors 113 und von den Spulenleitern 125, 126 des vierten Statorsektors 114 ausgebildet. Außerdem sind die Spulenleiter 125, 126 des dritten Statorsektors 113 elektrisch isoliert von den Spulenleitern 125, 126 des ersten Statorsektors 110, von den Spulenleitern 125, 126 des zweiten Statorsektors 112 und von den Spulenleitern 125, 126 des vierten Statorsektors 114 ausgebildet. Schließlich sind die Spulenleiter 125, 126 des vierten Statorsektors 114 elektrisch isoliert von den Spulenleitern 125, 126 des ersten Statorsektors 110, von den Spulenleitern 125, 126 des zweiten Statorsektors 112 und von den Spulenleitern 125, 126 des dritten Statorsektors 113 ausgebildet.

Während die Spulenleiter 125, 126 der einzelnen Statorsektoren 110, 112, 113, 114 auf der Statoreinheit 100 jeweils elektrisch isoliert von den Spulenleitern 125, 126 der übrigen Statorsektoren 110, 112, 113, 114 ausgebildet sind, können die Spulenleiter 125, 126 innerhalb der einzelnen Statorsektoren 110, 112, 113, 114 jeweils elektrisch leitend miteinander verbunden sein. Insbesondere können innerhalb der Statorsektoren 110, 112, 113, 114 jeweils alle in der dritten Richtung 15 übereinanderliegenden ersten Spulenleiter 125, insbesondere alle in der dritten Richtung 15 übereinanderliegenden ersten Spulenleiter 125 der ersten Statorlage 104 und der vierten Statorlage 107, elektrisch leitend miteinander verbunden sein. Dabei können alle in der dritten Richtung 15 übereinanderliegenden ersten Spulenleiter 125 jeweils derart elektrisch leitend miteinander verbunden sein, dass in den übereinanderliegenden ersten Spulenleitern 125 jeweils der gleiche Spulenstrom fließt. Beispielsweise können jeweils alle in der dritten Richtung 15 übereinanderliegenden ersten Spulenleiter 125 der Statorsektoren 110, 112, 113, 114 in Reihe geschaltet sein.

Ebenso können innerhalb der Statorsektoren 110, 112, 113, 114 jeweils alle in der dritten Richtung 15 übereinanderliegenden zweiten Spulenleiter 126, insbesondere alle in der dritten Richtung 15 übereinanderliegenden zweiten Spulenleiter 126 der zweiten Statorlage 105 und der dritten Statorlage 106, elektrisch leitend miteinander verbunden sein. Dabei können alle in der dritten Richtung 15 übereinanderliegenden zweiten Spulenleiter 126 jeweils derart elektrisch leitend miteinander verbunden sein, dass in den übereinanderliegenden zweiten Spulenleitern 126 jeweils der gleiche Spulenstrom fließt. Beispielsweise können innerhalb der einzelnen Statorsektoren 110, 112, 113, 114 jeweils alle übereinanderliegenden zweiten Spulenleiter 126 in Reihe geschaltet sein.

Die Spulenleiter 125, 126 der Statorsektoren 110, 112, 113, 114 sind innerhalb der Statorlagen 104, 105, 106, 107 jeweils zu Statorsegmenten zusammengefasst.

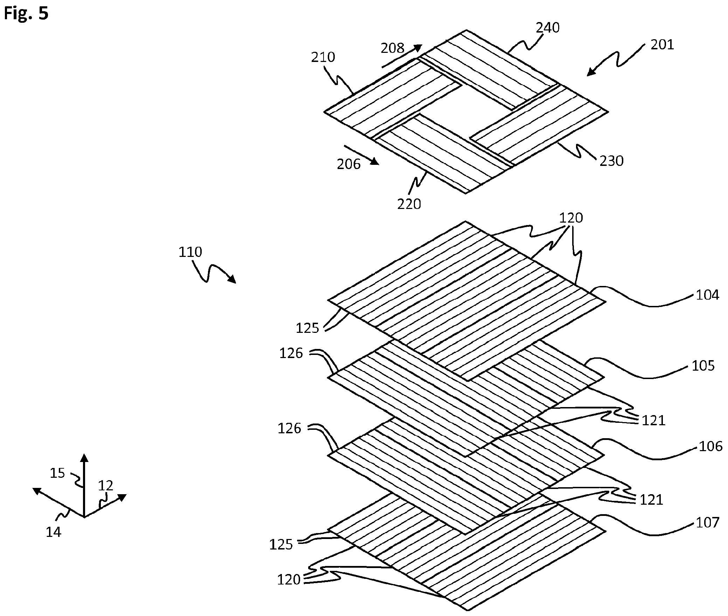

**Fig. 5** zeigt eine schematische Darstellung der Statorlagen 104, 105, 106, 107 des ersten Statorsektors 110 mit den einzelnen Statorsegmenten.

Die Spulenleiter 125, 126 des ersten Statorsektors 110 sind innerhalb der Statorlagen 104, 105, 106, 107 jeweils zu Statorsegmenten 120, 121 zusammengefasst. Der erste Statorsektor 110 umfasst in jeder Statorlage 104, 105, 106, 107 jeweils drei nebeneinander und aneinander anschließend angeordnete Statorsegmente 120, 121. Jedes der Statorsegmente 120, 121 umfasst jeweils sechs nebeneinander angeordnete Spulenleiter 125, 126. Der erste Statorsektor 110 umfasst in der ersten und vierten Statorlage 104, 107 jeweils drei erste Statorsegmente 120 und in der zweiten und dritten Statorlage 105, 106 jeweils drei zweite Statorsegmente 121. Die ersten Statorsegmente 120 umfassen jeweils sechs Nebeneinanderliegende der entlang der zweiten Richtung 14 nebeneinander angeordneten und entlang der ersten Richtung 12 länglich ausgedehnten ersten Spulenleiter 125. Die zweiten Statorsegmente 121 umfassen jeweils sechs Nebeneinanderliegende der entlang der ersten Richtung 12 nebeneinander angeordneten und entlang der zweiten Richtung 14 länglich ausgedehnten zweiten Spulenleiter 126.

Bei alternativen, nicht dargestellten Ausführungsformen der Statoreinheit 100 können die ersten Statorsegmente 120 und/oder die zweiten Statorsegmente 121 auch eine andere Anzahl nebeneinander angeordneter Spulenleiter 125, 126 umfassen. Insbesondere können die ersten Statorsegmente 120 und/oder die zweiten Statorsegmente 121 acht nebeneinander angeordnete Spulenleiter 125, 126 umfassen. Bei alternativen, nicht dargestellten Ausführungsformen der Statoreinheit 100 kann der erste Statorsektor 110 auch eine andere Anzahl nebeneinander und aneinander anschließend angeordneter Statorsegmente 120, 121 umfassen.

Der erste Statorsektor 110 der Statoreinheit 100 umfasst damit in der ersten Statorlage 104 und in der vierten Statorlage 107 ausschließlich erste Spulenleiter 125, die entlang der ersten Richtung 12 länglich ausgedehnt sind, und in der zweiten Statorlage 105 und in der dritten Statorlage 106 ausschließlich zweite Spulenleiter 126, die entlang der zweiten Richtung 14 länglich ausgedehnt sind.

Die ersten und zweiten Statorsegmente 120, 121 weisen, abgesehen von ihrer Orientierung, identische Abmessungen auf. Insbesondere entsprechen die Abmessungen der ersten Statorsegmente 120 in der ersten Richtung 12 den Abmessungen der zweiten Statorsegmente 121 in der zweiten Richtung 14 und die Abmessungen der ersten Statorsegmente 120 in der zweiten Richtung 14 entsprechen den Abmessungen der zweiten Statorsegmente 121 in der ersten Richtung 12.

Die Statorsegmente 120, 121 sind derart übereinanderliegend angeordnet, dass sich jeweils jedes der ersten Statorsegmente 120 der ersten und vierten Statorlage 104, 107 des ersten Statorsektors 110 in der ersten Richtung 12 über die drei in der ersten Richtung 12 nebeneinander angeordneten zweiten Statorsegmente 121 der zweiten und dritten Statorlage 105, 106 des ersten Statorsektors 110 erstreckt. Außerdem erstrecken sich die zweiten Statorsegmente 121 der zweiten und dritten Statorlage 105, 106 des ersten Statorsektors 110 in der zweiten Richtung 14 über alle in der zweiten Richtung 14 nebeneinander angeordneten ersten Statorsegmente 120 der ersten und vierten Statorlage 104, 107 des ersten Statorsektors 110.

Die Anordnung der Spulenleiter 125, 126 in den Statorlagen 104, 105, 106, 107 des zweiten Statorsektors 112, des dritten Statorsektors 113 und des vierten Statorsektors 114 entspricht der in Fig. 5 dargestellten Anordnung der Spulenleiter 125, 126 in den Statorlagen 104, 105, 106, 107 des ersten Statorsektors 110.

Im Betrieb des Planarantriebssystems 1 kann der Läufer 200 derart über der Statoreinheit 100 ausgerichtet sein, dass die erste Läuferrichtung 206 entlang der ersten Richtung 12 und die zweite Läuferrichtung 208 entlang der zweiten Richtung 14 orientiert ist. Die erste Magneteinheit 210 und die dritte Magneteinheit 230 können im Betrieb mit dem durch die ersten Spulenleiter 125 der ersten Statorsegmente 120 erzeugten Magnetfeld wechselwirken, um den Läufer 200 entlang der zweiten Richtung 14 anzutreiben. Die zweite Magneteinheit 220 und die vierte Magneteinheit 240 können im Betrieb mit dem durch die zweiten Spulenleiter 126 der zweiten Statorsegmente 121 erzeugten Magnetfeld wechselwirken, um den Läufer 200 entlang der ersten Richtung 12 anzutreiben.

Alternativ kann der Läufer 200, anders als in Fig. 5 dargestellt, auch derart ausgerichtet sein, dass die erste Läuferrichtung 206 entlang der zweiten Richtung 14 und die zweite Läuferrichtung 208 entlang der ersten Richtung 12 orientiert ist. In diesem Fall wirken die erste und die dritte Magneteinheit 210, 230 mit dem Magnetfeld der zweiten Statorsegmente 121 zum Antreiben des Läufers 200 in die erste Richtung 12 und die zweite und die vierte Magneteinheit 220, 240 mit dem Magnetfeld der ersten Statorsegmente 120 zum Antreiben des Läufers 200 in die zweite Richtung 14 zusammen.

Bei der Statoreinheit 100 sind die ersten Spulenleiter 125 damit dazu ausgebildet, mit den ersten Antriebsmagneten 211 des Läufers 200 wechselzuwirken, um den Läufer 200 in der zu der ersten Richtung 12 senkrechten Richtung anzutreiben. Die zweiten Spulenleiter 126 sind dazu ausgebildet, mit den zweiten Antriebsmagneten 221 des Läufers 200 wechselzuwirken, um den Läufer 200 in der zu der zweiten Richtung 14 senkrechten Richtung anzutreiben.

Die ersten Spulenleiter 125 sind räumlich in der zu der ersten Richtung 12 senkrechten Richtung um jeweils ein Drittel einer wirksamen ersten Wellenlänge der mit den ersten Spulenleitern 125 wechselwirkenden ersten Antriebsmagnete 211 der ersten und dritten Magneteinheit 210, 230 versetzt angeordnet. Die zweiten Spulenleiter 126 sind räumlich in der zu der zweiten Richtung 14 senkrechten Richtung um jeweils ein Drittel einer wirksamen zweiten Wellenlänge der mit den zweiten Spulenleitern 126 wechselwirkenden zweiten Antriebsmagnete 221 der zweiten und vierten Magneteinheit 220, 240 versetzt angeordnet.

Die Spulenleiter 125, 126 der einzelnen Statorsegmente 120, 121 sind jeweils unabhängig von den Spulenleitern 125, 126 der übrigen Statorsegmente 120, 121 mit den Antriebsströmen bestrombar. Insbesondere hängen die Antriebsströme in einem der Statorsegmente 120, 121 nicht zwingend von Antriebsströmen in einem anderen der Statorsegmente 120, 121 ab. Außerdem können die Spulenleiter 125, 126 eines der Statorsegmente 120, 121 mit Antriebsströmen beaufschlagt werden, während die Spulenleiter 125, 126 eines anderen, beispielsweise eines benachbarten, Statorsegments 120, 121 stromlos sind. Die Spulenleiter 125, 126 der einzelnen Statorsegmente 120, 121 sind auf der Statoreinheit 100 elektrisch isoliert von den Spulenleitern 125, 126 der übrigen Statorsegmente 120, 121 ausgeführt. Die Spulenleiter 125, 126 unterschiedlicher Statorsegmente 120, 121 können beispielsweise aus jeweils separaten Leistungsmodulen oder aus separaten Stromerzeugungseinheiten bzw. Endstufen eines Leistungsmoduls des Statormoduls 10 mit den Antriebsströmen beaufschlagt werden.

Die Spulenleiter 125, 126 in den einzelnen Statorsektoren 110, 112, 113, 114 können jeweils zu Mehrphasensystemen mit einem gemeinsamen Sternpunkt zusammengeschaltet sein. Der Sternpunkt kann auf der Statoreinheit 100 ausgebildet sein. Insbesondere können die Spulenleiter 125, 126 zu Dreiphasensystemen mit einem gemeinsamen Sternpunkt zusammengeschaltet sein. Die Dreiphasensysteme können jeweils sechs benachbarte erste Spulenleiter 125 oder sechs benachbarte zweite Spulenleiter 126 umfassen. Die Anzahl benachbarter Spulenleiter 125, 126 in einem der Dreiphasensysteme kann auch jeweils drei, zwölf oder ein anderes Vielfaches von drei betragen.

Die Mehrphasensysteme können auf der Statoreinheit 100 derart kontaktierbar sein, dass jedes der Mehrphasensysteme unabhängig von den übrigen Mehrphasensystemen mit einem Antriebsstrom beaufschlagbar ist. Alternativ können auch jeweils zwei oder mehr der Mehrphasensysteme auf der Statoreinheit 100 derart miteinander verbunden sein, dass die verbundenen Mehrphasensysteme jeweils zusammen mit einem gemeinsamen Antriebsstrom beaufschlagt werden. Beispielsweise können die verbundenen Mehrphasensysteme auf der Statoreinheit 100 seriell oder parallel geschaltet sein.

Bei einer Verschaltung der Spulenleiter 125, 126 zu Mehrphasensystemen werden zur Bestromung der Spulenleiter 125, 126 weniger Kontakte benötigt als bei einer separaten Bestromung der einzelnen Spulenleiter 125, 126. Dadurch wird der für die Bestromung der erste Spulenleiter 125, 126 benötigte Hardwareaufwand, insbesondere die Anzahl der für die Bestromung benötigten Stromerzeugungseinheiten, reduziert.

Die Statorsektoren 110, 112, 113, 114 können, wie in den Fig. 4 und 5 dargestellt, in jeder Statorlage 104, 105, 106, 107 jeweils achtzehn Spulenleiter 125, 126 umfassen. Jeweils sechs benachbarte Spulenleiter 125, 126 können zu einem Dreiphasensystem verschaltet sein und die Statorsektoren 110, 112, 113, 114 können jeweils drei in der ersten Richtung 12 nebeneinanderliegende Dreiphasensysteme und jeweils drei in der zweiten Richtung 14 nebeneinanderliegende Dreiphasensysteme umfassen. Dabei können Spulenleiter 125, 126, die im Wesentlichen in der gleichen Richtung 12, 14 ausgedehnt sind und in den Statorlagen 104, 105, 106, 107 übereinanderliegen, in Serie zu einem gemeinsamen Dreiphasensystem verschaltet sein. Die Spulenleiter 125, 126 können dabei derart verschaltet sein, dass in der dritten Richtung 15 übereinanderliegende Spulenleiter 125, 126 jeweils mit dem gleichen Antriebsstrom beaufschlagt werden. Die Dreiphasensysteme weisen damit drei Phasen auf, die aus in den Statorlagen 104, 105, 106, 107 übereinanderliegenden Spulenleiter 125, 126 zusammengeschaltet sind.

Beispielsweise können in den einzelnen Statorlagen 104, 105, 106, 107 jeweils alle übereinanderliegenden und parallel ausgerichteten Spulenleiter 125, 126 in Serie geschaltet sein. Insbesondere können die ersten Spulenleiter 125 von übereinanderliegenden, insbesondere von in der ersten Statorlage 104 und in der vierten Statorlage 107 übereinanderliegenden Dreiphasensystemen, sowie die zweiten Spulenleiter 126 von übereinanderliegenden, insbesondere von in der zweiten Statorlage 105 und in der dritten Statorlage 106 übereinanderliegenden Dreiphasensystemen jeweils seriell zu einem gemeinsamen Dreiphasensystem verschaltet sein. Dabei können jeweils alle in der dritten Richtung 15 übereinanderliegenden und parallel orientierten Spulenleiter 125, 126 in Serie geschaltet sein.

Insbesondere sind bei der Statoreinheit 100 innerhalb der einzelnen ersten Statorsegmente 120 die entlang der ersten Richtung 12 länglich ausgedehnten ersten Spulenleiter 125 jeweils zu Mehrphasensystemen mit einem gemeinsamen Sternpunkt verschaltet. Dabei sind die einzelnen Mehrphasensysteme verschiedener erster Statorsegmente 120 jeweils unabhängig voneinander bestrombar. Ebenso sind alle zweiten Spulenleiter 126 der einzelnen zweiten Statorsegmente 121 jeweils zu weiteren Mehrphasensystemen verschaltet. Die einzelnen weiteren Mehrphasensysteme der zweiten Statorsegmente 121 sind jeweils unabhängig voneinander und unabhängig von den Mehrphasensystemen der ersten Statorsegmente 120 bestrombar. Insbesondere sind die ersten Spulenleiter 125 der ersten Statorsegmente 120 und die zweiten Spulenleiter 126 der zweiten Statorsegmente 121 jeweils zu Dreiphasensystemen verschaltet. Die ersten Spulenleiter 125 und die zweiten Spulenleiter 126 eines Statorsegments 120, 121 können jeweils mit einem dreiphasigen Antriebsstrom beaufschlagt werden. Die Antriebsströme umfassen jeweils eine erste Phase U, eine zweite Phase V und eine dritte Phase W, die untereinander jeweils einen Phasenversatz von 120° aufweisen.

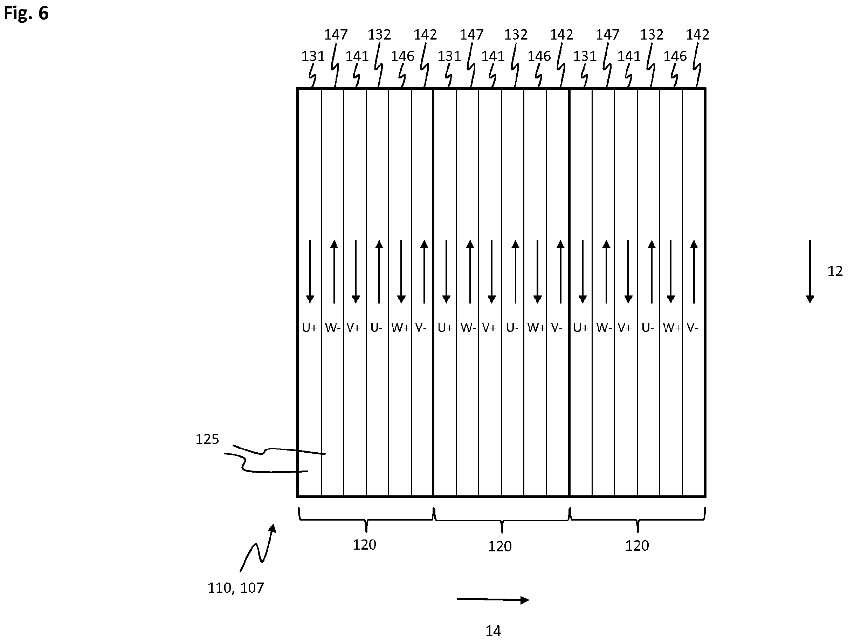

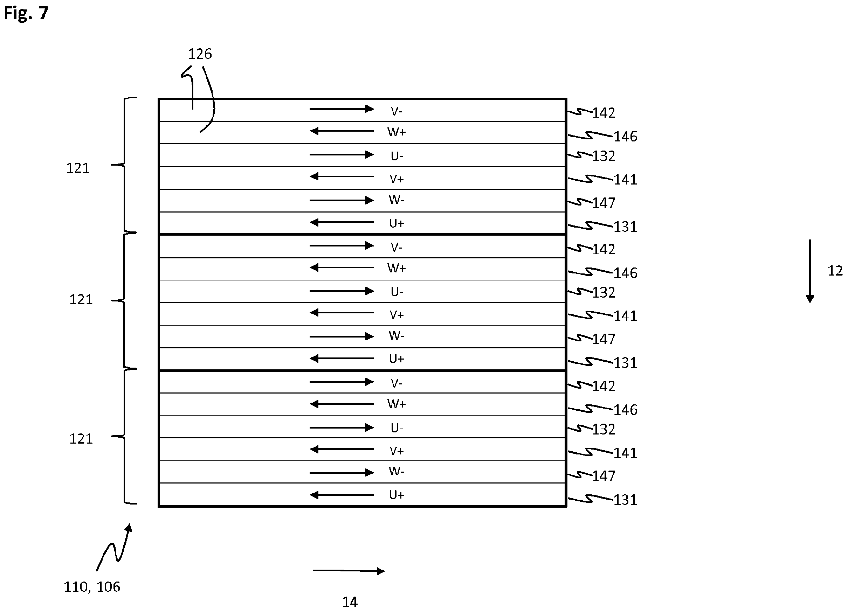

**Fig. 6** zeigt eine schematische Darstellung einer Aufsicht auf die vierte Statorlage 107 des ersten Statorsektors 110. **Fig. 7** zeigt eine schematische Darstellung einer Aufsicht auf die dritte Statorlage 106 des ersten Statorsektors 110. In Fig. 6 und in Fig. 7 ist die Verteilung der Phasen U, V, W auf die Spulenleiter 125, 126 der ersten und zweiten Statorsegmente 120, 121 des ersten Statorsektors 110 dargestellt. Die Statorsegmente 120, 121 weisen jeweils einen ersten Hinleiter 131 und einen ersten Rückleiter 132 für die ersten Phasen U der Antriebsströme, einen zweiten Hinleiter 141 und einen zweiten Rückleiter 142 für die zweiten Phasen V der Antriebsströme und einen dritten Hinleiter 146 und einen dritten Rückleiter 147 für die dritten Phasen W der Antriebsströme auf. Nachdem die einzelnen Statorsegmente 120, 121 jeweils unabhängig voneinander bestrombar sind, können die Antriebsströme, mit denen die einzelnen Statorsegmente 120, 121 beaufschlagt werden, verschieden sein. Insbesondere können jeweils die einzelnen ersten Phasen U, mit denen die verschiedenen Statorsegmente 120, 121 beaufschlagt werden, verschieden sein. Außerdem können jeweils die einzelnen zweiten Phasen V, mit denen die verschiedenen Statorsegmente 120, 121 beaufschlagt werden, und die einzelnen dritten Phasen W, mit denen die verschiedenen Statorsegmente 120, 121 beaufschlagt werden, verschieden sein.

Die Hinleiter 131, 141, 146 und die Rückleiter 132, 142, 147 der einzelnen Statorsegmente 120, 121 sind jeweils entlang einer Breitenrichtung der Statorsegmente 120, 121 nebeneinander angeordnet. Bei den in Fig. 6 dargestellten ersten Statorsegmenten 120 entspricht die Breitenrichtung der zweiten Richtung 14. Bei den in Fig. 7 dargestellten zweiten Statorsegmenten 121 verläuft die Breitenrichtung parallel und entgegen der ersten Richtung 12.

Der erste Hinleiter 131 ist jeweils an einer ersten Längsseite der Statorsegmente 120, 121 angeordnet. Bei den ersten Statorsegmenten 120 ist die erste Längsseite entlang der ersten Richtung 12 und bei den zweiten Statorsegmenten 121 entlang der zweiten Richtung 14 orientiert. Dem ersten Hinleiter 131 nachfolgend sind bei den Statorsegmenten 120, 121 in der Breitenrichtung der Reihe nach der dritte Rückleiter 147, der zweite Hinleiter 141, der erste Rückleiter 132, der dritte Hinleiter 146 und der zweite Rückleiter 142 nebeneinander und aneinander anschließend angeordnet.

Die erste Phase U wird bei den Statorsegmenten 120, 121 auf dem ersten Hinleiter 131 von einer ersten Seite der Statorsegmente 120, 121 zu einer der ersten Seite gegenüberliegenden zweiten Seite der Statorsegmente 120, 121 und auf dem ersten Rückleiter 132 von der zweiten Seite zu der ersten Seite geleitet. Die zweite Phase V wird auf dem zweiten Hinleiter 141 von der ersten Seite der Statorsegmente 120, 121 zu der zweiten Seite der Statorsegmente 120, 121 und auf dem zweiten Rückleiter 142 von der zweiten Seite zu der ersten Seite geleitet. Die dritte Phase W wird auf dem dritten Hinleiter 146 von der ersten Seite der Statorsegmente 120, 121 zu der zweiten Seite der Statorsegmente 120 und auf dem dritten Rückleiter 147 von der zweiten Seite zu der ersten Seite geleitet.

Die Phasen U, V und W werden damit jeweils an der ersten Seite der Statorsegmente 120, 121 auf die Hinleiter 131, 141, 146 und auf der zweiten Seite der Statorsegmente 120, 121 auf die Rückleiter 132, 142, 147 eingespeist. Außerdem werden die Phasen U, V und W jeweils an der zweiten Seite der Statorsegmente 120, 121 aus den Hinleitern 131, 141, 146 und auf der ersten Seite der Statorsegmente 120, 121 aus den Rückleitern 132, 142, 147 ausgekoppelt.

Bei den ersten Statorsegmenten 120 sind die erste und die zweite Seite jeweils parallel zu der zweiten Richtung 14 ausgerichtet. Bei den zweiten Statorsegmenten 121 sind die erste und die zweite Seite jeweils parallel zu der ersten Richtung 12 ausgerichtet.

Die ersten Hin- und Rückleiter 131, 132 von auf mehreren Statorlagen 104, 107 übereinanderliegenden ersten Statorsegmenten 120 können jeweils seriell verschaltet sein. Insbesondere können der in der ersten Statorlage 104 angeordnete erste Hinleiter 131 und der in der ersten Statorlage 104 angeordnete erste Rückleiter 132 mit dem in der vierten Statorlage 107 angeordneten ersten Hinleiter 131 und dem in der vierten Statorlage 107 angeordneten ersten Rückleiter 132 seriell verschaltet sein. Analog können die zweiten Hin- und Rückleiter 141, 142 und die dritten Hin- und Rückleiter 146, 147 von auf mehreren Statorlagen 104, 105 übereinanderliegenden zweiten Statorsegmenten 121 jeweils seriell verschaltet sein.

Insbesondere können die Phasen U, V, W jeweils auf der ersten oder der vierten Statorlage 104, 107 in die Hinleiter 131, 141, 146 eines der ersten Statorsegmente 120 eingekoppelt werden, anschließend jeweils alle der betreffenden Phase U, V, W zugeordneten Hin- und Rückleiter 131, 141, 146, 132, 142, 147 auf allen Statorlagen 104, 107, des betreffenden ersten Statorsegments 120 durchlaufen und schließlich in einem Sternpunkt zusammengeführt werden. Analog zu den ersten Statorsegmenten 120 können auch jeweils die ersten Hin- und Rückleiter 131, 132, die zweiten Hin- und Rückleiter 141, 142 und die dritten Hin- und Rückleiter 146, 147 von auf mehreren Statorlagen 105, 106 übereinanderliegenden zweiten Statorsegmenten 121 seriell verschaltet und in einem Sternpunkt zusammengeführt sein.

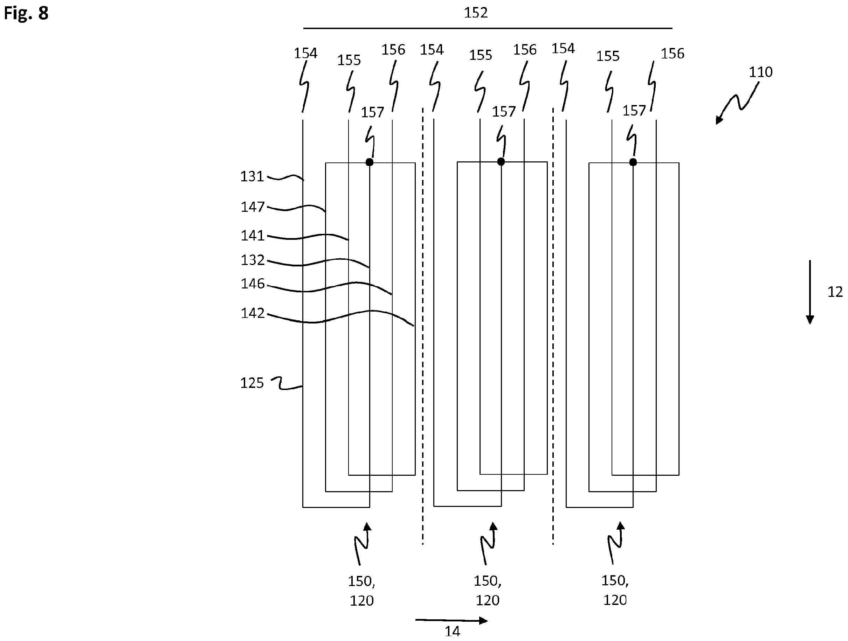

**Fig. 8** zeigt ein Ersatzschaltbild der ersten Statorsegmente 120 des ersten Statorsektors 110. Bei dem in Fig. 8 dargestellten Ersatzschaltbild sind alle übereinanderliegenden und in Serie geschalteten Spulenleiter 125 der ersten Statorsegmente 120 als ein einziger Leiter dargestellt. Insbesondere umfasst der dargestellte erste Hinleiter 131 alle in verschiedenen Statorlagen 104, 107 übereinanderliegenden und in Serie geschalteten Hinleiter 131 der ersten Statorsegmente 120 und der dargestellte erste Rückleiter 132 umfasst alle in verschiedenen Statorlagen 104, 107 übereinanderliegenden und in Serie geschalteten ersten Rückleiter 132 der ersten Statorsegmente 120. Analog umfassen die dargestellten zweiten Hinleiter 141, zweiten Rückleiter 142, dritten Hinleiter 146 und dritten Rückleiter 147 jeweils alle in verschiedenen Statorlagen 104, 107 übereinanderliegenden und in Serie geschalteten zweiten Hinleiter 141, zweiten Rückleiter 142, dritten Hinleiter 146 bzw. dritten Rückleiter 147 der ersten Statorsegmente 120.

Die Spulenleiter 125 der einzelnen ersten Statorsegmente 120 sind jeweils zu ersten Dreiphasensystemen 150 verschaltet. An einer entlang der zweiten Richtung 14 orientierten ersten Seite 152 der einzelnen ersten Statorsegmente 120 sind jeweils ein erster Anschlusspunkt 154 für das Einspeisen der ersten Phasen U, ein zweiter Anschlusspunkt 155 für das Einspeisen der zweiten Phasen V und ein dritter Anschlusspunkt 156 für das Einspeisen der dritten Phasen W angeordnet. Der erste Anschlusspunkt 154 ist mit einem in einer der Statorlagen 104, 107 angeordneten ersten Hinleiter 131 verbunden. Der zweite Anschlusspunkt 155 ist mit einem in einer der Statorlagen 104, 107 angeordneten zweiten Hinleiter 141 verbunden. Der dritte Anschlusspunkt 156 ist mit einem in einer der Statorlagen 104, 107 angeordneten dritten Hinleiter 146 verbunden. Außerdem ist an der ersten Seite 152 der einzelnen ersten Statorsegmente 120 jeweils ein Sternpunkt 157 angeordnet. In den Sternpunkten 157 sind jeweils ein erster Rückleiter 132 einer der Statorlagen 104, 107, ein zweiter Rückleiter 142 einer der Statorlagen 104, 107 und ein dritter Rückleiter 147 einer der Statorlagen 104, 107 miteinander verbunden.

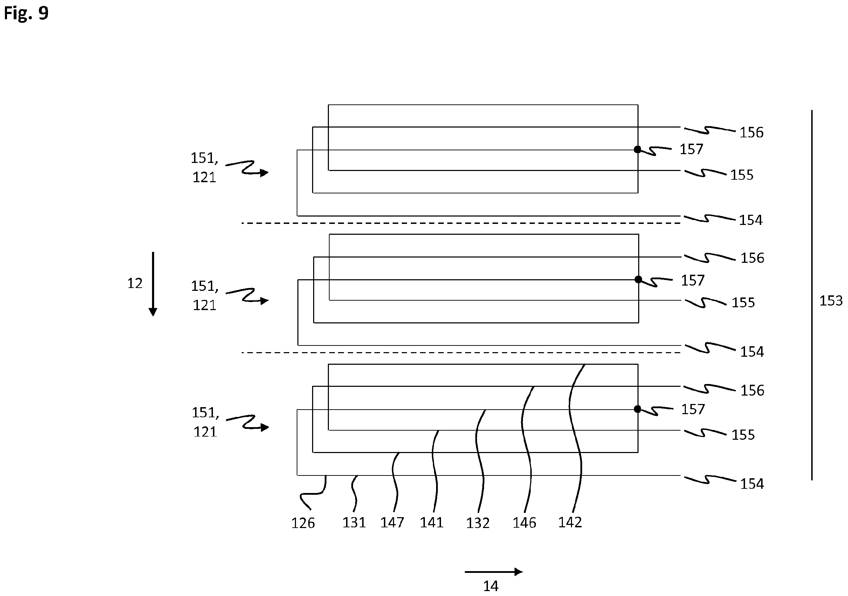

**Fig. 9** zeigt ein Ersatzschaltbild der zweiten Statorsegmente 121 des ersten Statorsektors 110. Bei dem in Fig. 9 dargestellten Ersatzschaltbild sind, wie bei dem in Fig. 8 dargestellten Ersatzschaltbild der ersten Statorsegmente 120, alle übereinanderliegenden und in Serie geschalteten zweiten Spulenleiter 126 der zweiten Statorsegmente 121 als ein einziger Leiter dargestellt.

Die zweiten Spulenleiter 126 der zweiten Statorsegmente 121 sind jeweils auf die gleiche Weise wie die Spulenleiter 125 der ersten Statorsegmente 120 zu zweiten Dreiphasensystemen 151 verschaltet. An einer entlang der ersten Richtung 12 orientierten ersten Seite 153 der zweiten Statorsegmente 121 sind jeweils ein erster Anschlusspunkt 154 für das Einspeisen der ersten Phasen U, ein zweiter Anschlusspunkt 155 für das Einspeisen der zweiten Phasen V und ein dritter Anschlusspunkt 156 für das Einspeisen der dritten Phasen W angeordnet. Der erste Anschlusspunkt 154 ist mit einem in einer der Statorlagen 105, 106 angeordneten ersten Hinleiter 131 verbunden. Der zweite Anschlusspunkt 155 ist mit einem in einer der Statorlagen 105, 106 angeordneten zweiten Hinleiter 141 verbunden. Der dritte Anschlusspunkt 156 ist mit einem in einer der Statorlagen 105, 106 angeordneten dritten Hinleiter 146 verbunden. Außerdem ist an der ersten Seite 153 der einzelnen zweiten Statorsegmente 121 jeweils ein Sternpunkt 157 angeordnet. In den Sternpunkten 157 sind jeweils ein erster Rückleiter 132 einer der Statorlagen 105, 106, ein zweiter Rückleiter 142 einer der Statorlagen 105, 106 und ein dritter Rückleiter 147 einer der Statorlagen 105, 106 miteinander verbunden.

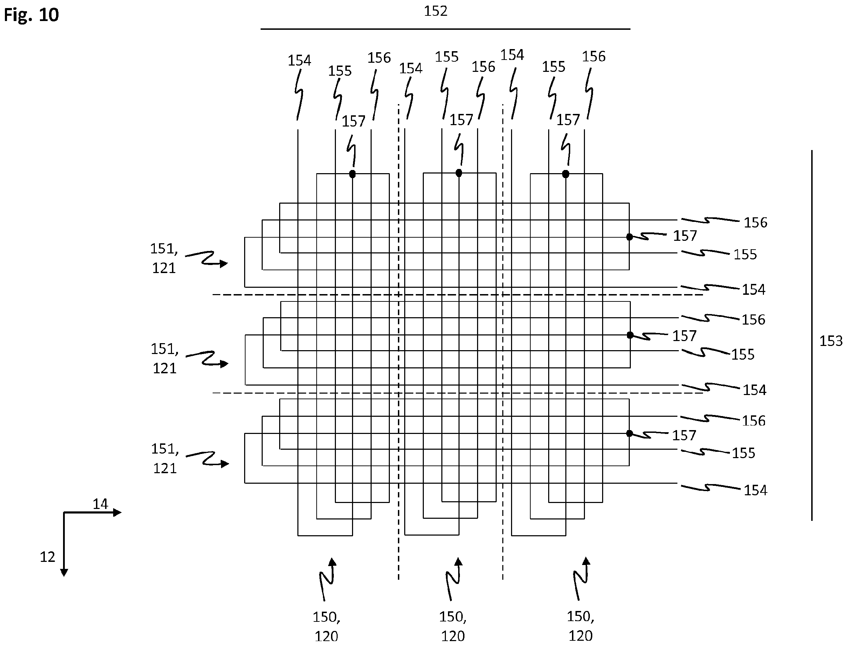

**Fig. 10** zeigt ein Ersatzschaltbild des ersten Statorsektors 110 mit den zu Fig. 8 beschriebenen und die ersten Statorsegmente 120 repräsentierenden ersten Dreiphasensystemen 150 und den zu Fig. 9 beschriebenen und die zweiten Statorsegmente 121 repräsentierenden zweiten Dreiphasensystemen 151. Die ersten Dreiphasensysteme 150 und die zweiten Dreiphasensysteme 151 sind um 90° gegeneinander verdreht angeordnet. Insbesondere sind die erste Seite 152 der ersten Statorsegmente 120 und die erste Seite 153 der zweiten Statorsegmente 121 senkrecht zueinander angeordnet.

Soweit im Folgenden keine Unterschiede beschrieben werden, entsprechen die Ersatzschaltbilder des zweiten Statorsektors 112, des dritten Statorsektors 113 und des vierten Statorsektors 114 jeweils dem in Fig. 10 dargestellten Ersatzschaltbild des ersten Statorsektors 110. Insbesondere entspricht das Ersatzschaltbild des zweiten Statorsektors 112 dem an der ersten Seite 152 der ersten Statorsegmente 120 gespiegelten Ersatzschaltbild des ersten Statorsektors 110, das Ersatzschaltbild des dritten Statorsektors 113 entspricht dem an der ersten Seite 153 der zweiten Statorsegmente 121 gespiegelten Ersatzschaltbild des ersten Statorsektors 110 und das Ersatzschaltbild des vierten Statorsektors 114 entspricht dem um 180° gedrehten Ersatzschaltbild des ersten Statorsektors 110.

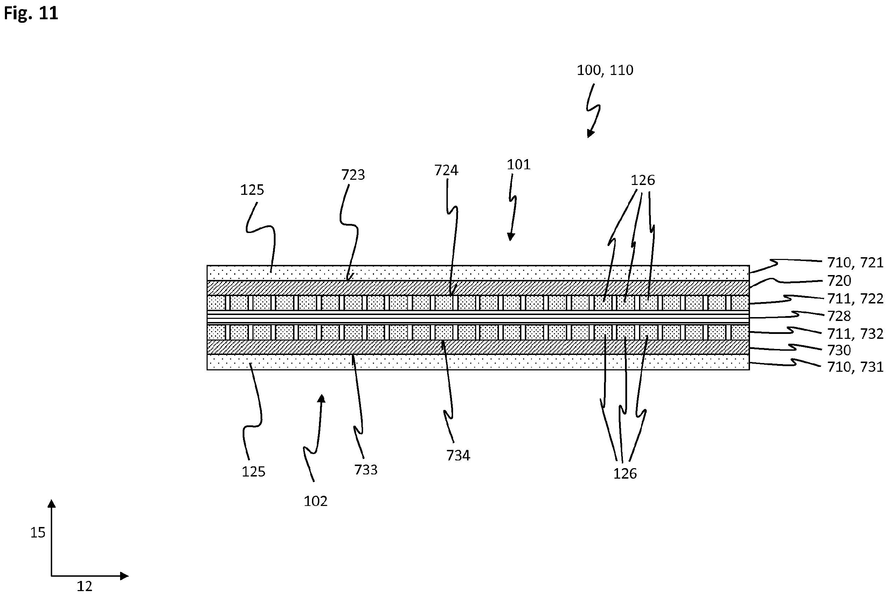

**Fig. 11** zeigt eine weitere schematische, nicht maßstabsgetreue Darstellung der Statoreinheit 100 in einer Schnittansicht, wobei die Schnittebene senkrecht zu der zweiten Richtung 14 orientiert ist.

Die Statoreinheit 100 weist eine erste Anordnung von Statorlängslagen 710 und eine zweite Anordnung von Statorschräglagen 711 auf. Die Statorlängslagen 710 werden von allen Statorlagen 104, 107 der Statoreinheit 100 gebildet, die die entlang der ersten Richtung 12 ausgedehnten ersten Spulenleiter 125 umfassen. Die Statorschräglagen 711 werden von allen Statorlagen 105, 106 der Statoreinheit 100 gebildet, die die entlang der zweiten Richtung 14 ausgedehnten zweiten Spulenleiter 126 umfassen. Bei der ersten Statoreinheit 100 werden die Statorlängslagen 710 durch die erste Statorlage 104 und durch die vierte Statorlage 107 und die Statorschräglagen 711 durch die zweite Statorlage 105 und die dritte Statorlage 106 gebildet. Die Statorschräglagen 711 können allgemein auch als Statorquerlagen bezeichnet werden.

Die Statoreinheit 100 weist eine erste Trägerplatte 720 und eine zweite Trägerplatte 730 auf. Soweit keine Unterschiede beschrieben werden, ist die zweite Trägerplatte 730 ausgebildet, wie es für die erste Trägerplatte 720 beschrieben wird.

Die erste Trägerplatte 720 ist in der ersten Richtung 12 und in der zweiten Richtung 14 plattenförmig, insbesondere als eine in der ersten und zweiten Richtung 12, 14 ausgedehnte Platte, ausgebildet. Die erste Trägerplatte 720 ist in der ersten Richtung 12 und in der zweiten Richtung 14 ausgedehnt und weist in der dritten Richtung 15 eine geringere Ausdehnung auf als in der ersten Richtung 12 und in der zweiten Richtung 14. Die erste Trägerplatte 720 erstreckt sich in der ersten Richtung 12 zwischen den entlang der zweiten Richtung 14 orientierten Seitenflächen 32 der Statoreinheit 100. In der zweiten Richtung 14 erstreckt sich die erste Trägerplatte 720 zwischen den entlang der ersten Richtung 12 orientierten Seitenflächen 32 der Statoreinheit 100.

Die erste Trägerplatte 720 ist zweilagig ausgebildet, umfasst also zwei Statorlagen der Statoreinheit 100. Die erste Trägerplatte 720 weist eine erste Seite 723 und eine der ersten Seite 723 in der dritten Richtung 15 gegenüberliegende zweite Seite 724 auf. Auf der ersten Seite 723 der ersten Trägerplatte 720 ist eine als erste Statorlängslage 721 bezeichnete Statorlängslage 710 der Statoreinheit 100 mit ersten Spulenleitern 125 angeordnet. Auf der zweiten Seite 724 der ersten Trägerplatte 720 ist eine als erste Statorschräglage 722 bezeichnete Statorschräglage 711 der Statoreinheit 100 mit zweiten Spulenleitern 126 angeordnet. Die erste Seite 723 der ersten Trägerplatte 720 und die zweite Seite 724 der ersten Trägerplatte 720 sind jeweils eben ausgebildet und parallel zueinander angeordnet.

Die erste Trägerplatte 720 umfasst ein elektrisch isolierendes Material, beispielsweise eine Keramik, einen Kunststoff oder einen glasfaserverstärkten Kunststoff. Das elektrisch isolierende Material ist in der dritten Richtung 15 zwischen der ersten Statorlängslage 721 und der ersten Statorschräglage 722 angeordnet. Die erste Statorlängslage 721 mit den ersten Spulenleitern 125 und die erste Statorschräglage 722 mit den zweiten Spulenleitern 126 sind als in der dritten Richtung 15 flache und elektrisch leitfähige Schichten, beispielsweise metallische Schichten, ausgebildet.

Die erste Trägerplatte 720 kann als eine Leiterplatte, insbesondere als eine gedruckte Leiterplatte (*printed circuit board*)*,* und die erste Statorlängslage 721 und die erste Statorschräglage 722 können als Leiterbahnlagen der Leiterplatte ausgebildet sein. Die ersten Spulenleiter 125 der ersten Statorlängslage 721 und die zweiten Spulenleiter 126 der ersten Statorschräglage 722 können auf den Seiten 723, 724 oder Lagen der ersten Trägerplatte 720 als länglich ausgedehnte Leiterstreifen und/oder Leiterbahnen mit einer Dicke zwischen 10µm und 500µm ausgebildet sein, insbesondere können die Leiterstreifen und/oder Leiterbahnen eine Dicke zwischen 50µm und 250µm aufweisen. Die ersten Spulenleiter 125 der ersten Statorlängslage 721 und die zweiten Spulenleiter 126 der zweiten Statorschräglage 722 können auch als Metallstreifen oder Metalldrähte ausgebildet sein.

Die zweite Trägerplatte 730 ist ausgebildet, wie es für die erste Trägerplatte 720 beschrieben wird. Insbesondere weist die zweite Trägerplatte 730 eine erste Seite 733 und eine der ersten Seite 733 der zweiten Trägerplatte 730 in der dritten Richtung 15 gegenüberliegende zweite Seite 734 auf. Auf der ersten Seite 733 der zweiten Trägerplatte 730 ist eine als zweite Statorlängslage 731 bezeichnete Statorlängslage 710 mit ersten Spulenleitern 125 und auf der zweiten Seite 734 der zweiten Trägerplatte 733 ist eine als zweite Statorschräglage 732 bezeichnete Statorschräglage 711 mit zweiten Spulenleitern 126 angeordnet. Analog zu der ersten Trägerplatte 720 kann die zweite Trägerplatte 730 als eine Leiterplatte, insbesondere als eine gedruckte Leiterplatte (*printed circuit board*)*,* und die zweite Statorlängslage 731 und die erste Statorschräglage 732 können als Leiterbahnlagen der Leiterplatte ausgebildet sein.

Die erste Trägerplatte 720 ist derart ausgerichtet, dass die erste Seite 723 der ersten Trägerplatte 720 in der dritten Richtung 15 über der zweiten Seite 724 der ersten Trägerplatte 720 liegt. Damit bildet die erste Seite 723 der ersten Trägerplatte 720 in der dritten Richtung 15 die Oberseite der ersten Trägerplatte 720 und die zweite Seite 724 der ersten Trägerplatte 720 bildet in der dritten Richtung 15 die Unterseite der ersten Trägerplatte 720. Die zweite Trägerplatte 730 ist derart ausgerichtet, dass die erste Seite 733 der zweiten Trägerplatte 730 in der dritten Richtung 15 unter der zweiten Seite 734 der zweiten Trägerplatte 730 liegt. Damit bildet die erste Seite 733 der zweiten Trägerplatte 730 in der dritten Richtung 15 die Unterseite der zweiten Trägerplatte 730 und die zweite Seite 734 der zweiten Trägerplatte 730 bildet in der dritten Richtung 15 die Oberseite der zweiten Trägerplatte 730.

Die erste Trägerplatte 720 und die zweite Trägerplatte 730 der Statoreinheit 100 sind in der dritten Richtung 15 nebeneinander angeordnet. Die erste Trägerplatte 720 und die zweite Trägerplatte 730 sind parallel zueinander ausgerichtet. Die erste Trägerplatte 720 ist in der dritten Richtung 15 über der zweiten Trägerplatte 730 angeordnet. Insbesondere ist die zweite Seite 724 der ersten Trägerplatte 720 der zweiten Seite 734 der zweiten Trägerplatte 730 zugewandt angeordnet. Die erste Seite 723 der ersten Trägerplatte 720 bildet in der dritten Richtung 15 eine Oberseite 101 der Statoreinheit 100 und die erste Seite 733 der zweiten Trägerplatte 730 bildet in der dritten Richtung 15 eine Unterseite 102 der Statoreinheit 100.

Bei der Statoreinheit 100 bildet die erste Statorlängslage 721 die erste Statorlage 104 der Statoreinheit 100. Die erste Statorschräglage 722 bildet die zweite Statorlage 105, die zweite Statorschräglage 732 bildet die dritte Statorlage 106 und die zweite Statorlängslage 731 bildet die vierte Statorlage 107 der Statoreinheit 100.

Zwischen der ersten Trägerplatte 720 und der zweiten Trägerplatte 730 ist eine Isolierlage 728 angeordnet. Die Isolierlage 728 ist elektrisch isolierend ausgebildet. Die Isolierlage 728 kann beispielsweise einen Kunststoff oder eine Keramik aufweisen. Die Isolierlage 728 kann sich in der ersten Richtung 12 zwischen den entlang der zweiten Richtung 14 verlaufenden Seitenflächen 32 der Statoreinheit 100 und in der zweiten Richtung 14 zwischen den entlang der ersten Richtung 12 verlaufenden Seitenflächen 32 der Statoreinheit 100 erstrecken. Die Isolierlage 728 und die Trägerplatten 720, 730 können in der dritten Richtung 15 eine gleiche Dicke aufweisen. Die Dicke der Trägerplatten 720, 730 und der Isolierlage 728 kann in der dritten Richtung 15 beispielsweise zwischen 35µm und 200µm, insbesondere zwischen 50µm und 100µm, insbesondere 75µm betragen. Die Isolierlage 728 kann in der dritten Richtung 15 aber auch eine geringere oder eine größere Dicke als die Trägerplatten 720, 730 aufweisen.

Die Isolierlage 728 ist mit der ersten Trägerplatte 720 und mit der zweiten Trägerplatte 730 mechanisch fest verbunden. Beispielsweise kann die Isolierlage 728 mit den Trägerplatten 720, 730 verklebt sein. Alternativ oder zusätzlich kann in der dritten Richtung 15 ein Verbindungselement durch die Statoreinheit 100 verlaufen und die Trägerplatten 720, 730 und die Isolierlage 728 mechanisch miteinander verbinden. Das Verbindungselement kann beispielsweise von der Oberseite 101 der Statoreinheit 100 bis zu der Unterseite 102 der Statoreinheit 100 verlaufen. Das Verbindungselement kann beispielsweise von der ersten Seite 723 der ersten Trägerplatte 720 bis zu der ersten Seite 733 der zweiten Trägerplatte 730 verlaufen. Das Verbindungselement kann beispielsweise als ein Einpressverbinder ausgebildet sein. Neben dem Verbindungselement kann die Statoreinheit 100 weitere, identisch ausgebildete Verbindungselemente aufweisen.

Die Statoreinheit 100 umfasst insgesamt eine mehrlagige Statorlagenanordnung mit einer geraden Anzahl von Statorlagen 104, 105, 106, 107. Die Statoreinheit 100 umfasst insbesondere eine vierlagige Statorlagenanordnung. Die Statoreinheit 100 umfasst mehrere in der dritten Richtung 15 übereinander angeordnete zweilagige Trägerplatten 720, 730. Insbesondere umfasst die Statoreinheit 100 zwei in der dritten Richtung 15 übereinander angeordnete zweilagige Trägerplatten 720, 730.

Die Statoreinheit 100 kann im Bereich der Statorsegmente 120, 121 jeweils Verbindungsstrukturen aufweisen. Die Verbindungsstrukturen können auf den Spulenleitern 125, 126 oder zwischen den Spulenleitern 125, 126 der Statorsegmente 120, 121 angeordnet sein.

Die Verbindungsstrukturen können als Horizontalverbindungsstrukturen oder als Vertikalverbindungsstrukturen ausgebildet sein. Die Horizontalverbindungsstrukturen sind in einer der Statorlagen 104, 105, 106, 107 angeordnet und erstrecken sich in der durch die erste und zweite Richtung 12, 14 aufgespannten Ebene. Die Horizontalverbindungsstrukturen können länglich ausgedehnt sein. Die Horizontalverbindungsstrukturen können, wie die Spulenleiter 125, 126, als Leiterbahnen oder Leiterbahnabschnitte einer Lage einer Leiterplatte der Statoreinheit 100 ausgebildet sein.

Die Horizontalverbindungsstrukturen können als Längsverbinder ausgebildet sein und parallel zu den Spulenleitern 125, 126 der Statorlage 104, 105, 106, 107, in der sie angeordnet sind, verlaufen. Beispielsweise sind als Längsverbinder ausgebildete und in den Statorlängslagen 710 mit ersten Spulenleitern 125 angeordnete Horizontalverbindungsstrukturen entlang der ersten Richtung 12 länglich ausgedehnt. Als Längsverbinder ausgebildete und in den Statorschräglagen 711 mit zweiten Spulenleitern 126 angeordnete Horizontalverbindungsstrukturen sind entsprechend entlang der zweiten Richtung 14 länglich ausgedehnt. Als Längsverbinder ausgebildete Horizontalverbindungsstrukturen können auch als Parallelverbinder bezeichnet werden.

Die Horizontalverbindungsstrukturen können auch als Querverbinder ausgebildet sein und senkrecht zu den Spulenleitern 125, 126 der Statorlage 104, 105, 106, 107, in der sie angeordnet sind, verlaufen. Beispielsweise sind als Querverbinder ausgebildete und in den Statorlängslagen 710 mit ersten Spulenleitern 125 angeordnete Horizontalverbindungsstrukturen entlang der zu der ersten Richtung 12 senkrechten Richtung, bei der Statoreinheit 100 entlang der zweiten Richtung 14, länglich ausgedehnt. Als Querverbinder ausgebildete und in den Statorschräglagen 711 mit zweiten Spulenleitern 126 angeordnete Horizontalverbindungsstrukturen sind entsprechend entlang der zu der zweiten Richtung 14 senkrechten Richtung, bei der Statoreinheit 100 entlang der ersten Richtung 12, länglich ausgedehnt.

Die Statorlagen 104, 105, 106, 107 können damit eine Mehrzahl von Leiterstrukturen umfassen. Die Leiterstrukturen umfassen die in der jeweiligen Statorlage 104, 105, 106, 107 angeordneten ersten oder zweiten Spulenleiter 125, 126, sowie die in der jeweiligen Statorlage 104, 105, 106, 107 angeordneten Horizontalverbindungsstrukturen, insbesondere die in der jeweiligen Statorlage 104, 105, 106, 107 angeordneten Längsverbinder und/oder Querverbinder.

Ein Teil der Verbindungstrukturen kann als Vertikalverbindungsstrukturen ausgebildet sein, welche Leiterstrukturen, insbesondere Spulenleiter 125, 126 oder Horizontalverbindungsstrukturen, die in den einzelnen Statorsegmenten 120, 121 in verschiedenen Statorlagen 104, 105, 106, 107 übereinander angeordnet sind, miteinander verbinden. Die Vertikalverbindungsstrukturen können als Durchkontaktierungen oder als Vias (*vertical interconnect access*) zwischen den einzelnen Statorlagen 104, 105, 106, 107 der Trägerplatten 710, 720 der Statoreinheit 100 ausgebildet sein.

Die Horizontalverbindungsstrukturen können als in den Lagen der Trägerplatten 720, 730 angeordnete Leiterstreifen und/oder Leiterbahnen ausgebildet sein.

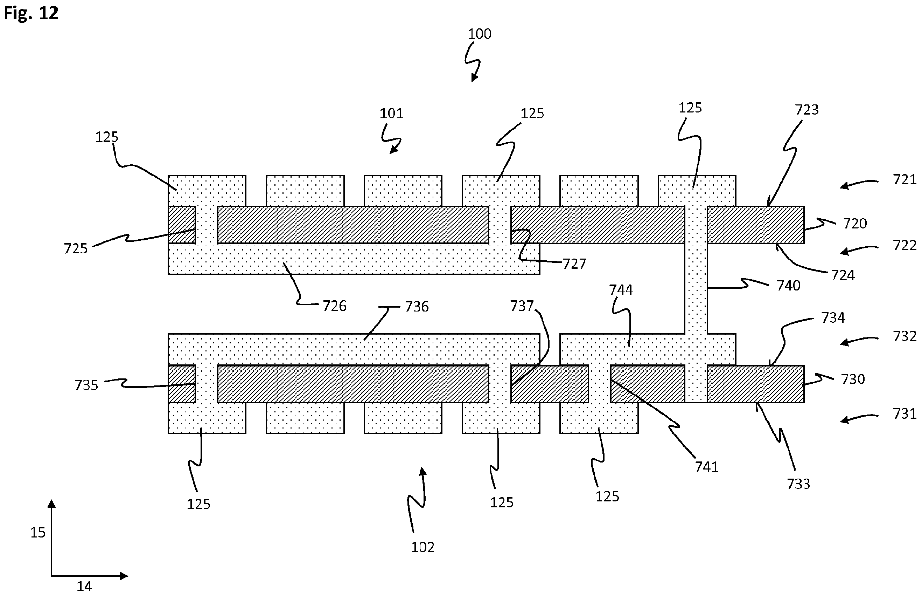

**Fig. 12** zeigt eine schematische, nicht maßstabsgetreue Darstellung eines Ausschnitts der Statoreinheit 100 in einer weiteren, vergrößerten Schnittansicht. Bei der in Fig. 12 dargestellten weiteren Schnittansicht ist die Schnittebene, anders als bei der in Fig. 11 dargestellten Schnittansicht, senkrecht zu der ersten Richtung 12 orientiert. Bei der schematischen Darstellung der Fig. 12 ist die zwischen der ersten Trägerplatte 720 und der zweiten Trägerplatte 730 angeordnete Isolierlage 728 nicht dargestellt.

Die erste Trägerplatte 720 umfasst eine erste Vertikalverbindungsstruktur 725. Die erste Vertikalverbindungsstruktur 725 ist parallel zu der dritten Richtung 15 ausgerichtet und verläuft in der dritten Richtung 15 durch die erste Trägerplatte 720. Die erste Vertikalverbindungsstruktur 725 erstreckt sich in der dritten Richtung 15 von der ersten Seite 723 der ersten Trägerplatte 720 bis zu der zweiten Seite 724 der ersten Trägerplatte 720. Insbesondere ragt die erste Vertikalverbindungsstruktur 725 in der dritten Richtung 15 nicht über die erste Trägerplatte 720 hinaus. Die erste Vertikalverbindungsstruktur 725 kann insbesondere in der dritten Richtung 15 auf der ersten Seite 723 der ersten Trägerplatte 720 und auf der zweiten Seite 724 der ersten Trägerplatte 720 enden.

Die erste Vertikalverbindungsstruktur 725 verbindet einen auf der ersten Seite 723 der ersten Trägerplatte 720 angeordneten ersten Spulenleiter 125 der ersten Statorlängslage 721 elektrisch leitend mit einer auf der zweiten Seite 724 der ersten Trägerplatte 720 angeordneten ersten Leiterstruktur 726. Die erste Leiterstruktur 726 kann auf der zweiten Seite 724 der ersten Trägerplatte 720 parallel zu den hier nicht dargestellten zweiten Spulenleitern 126 der ersten Statorschräglage 722 verlaufen. Die erste Leiterstruktur 726 kann eine erste Horizontalverbindungsstruktur, insbesondere ein erster Querverbinder oder ein erster Längsverbinder sein. Die erste Leiterstruktur 726 kann elektrisch isoliert von den zweiten Spulenleitern 126 der zweiten Seite 724 der ersten Trägerplatte 720 ausgebildet sein, so dass keine elektrische Verbindung zwischen den ersten Spulenleitern 125 auf der ersten Seite 723 der ersten Trägerplatte 720 und den zweiten Spulenleitern 126 auf der zweiten Seite 724 der ersten Trägerplatte 720 besteht.

Der erste Spulenleiter 125 der ersten Statorlängslage 721 kann direkt mit der ersten Vertikalverbindungsstruktur 725 elektrisch leitend verbunden sein. Der erste Spulenleiter 125 der ersten Statorlängslage 721 kann bei einer nicht dargestellten Ausführungsform aber auch über eine auf der ersten Statorlängslage 721 angeordnete Horizontalverbindungsstruktur, insbesondere über einen auf der ersten Statorlängslage 721 angeordneten Querverbinder oder über einen auf der ersten Statorlängslage 721 angeordneten Längsverbinder, mit der ersten Vertikalverbindungsstruktur 725 elektrisch leitend verbunden sein.

Neben der ersten Vertikalverbindungsstruktur 725 kann die erste Trägerplatte 720 weitere Vertikalverbindungsstrukturen umfassen, die ausgebildet sind, wie die erste Vertikalverbindungsstruktur 725. Beispielsweise kann die erste Trägerplatte 720, wie in Fig. 12 dargestellt, eine weitere erste Vertikalverbindungsstruktur 727 umfassen, die die auf der ersten Statorschräglage 722 angeordnete erste Leiterstruktur 726 mit einem weiteren ersten Spulenleiter 125 der ersten Statorlängslage 721 elektrisch leitend verbindet. Der weitere erste Spulenleiter 125 und die weitere erste Vertikalverbindungsstruktur 727 können dabei direkt oder über eine Horizontalverbindungsstruktur elektrisch leitend verbunden sein.

Die zweite Trägerplatte 730 umfasst eine zweite Vertikalverbindungsstruktur 735. Soweit keine Unterschiede beschrieben werden, ist die zweite Vertikalverbindungsstruktur 735 ausgebildet, wie es für die erste Vertikalverbindungsstruktur 725 beschrieben wird. Die zweite Vertikalverbindungsstruktur 735 ist parallel zu der dritten Richtung 15 ausgerichtet und verläuft in der dritten Richtung 15 durch die zweite Trägerplatte 730. Die zweite Vertikalverbindungsstruktur 735 erstreckt sich in der dritten Richtung 15 von der ersten Seite 733 der zweiten Trägerplatte 730 bis zu der zweiten Seite 734 der zweiten Trägerplatte 730. Insbesondere ragt die zweite Vertikalverbindungsstruktur 735 in der dritten Richtung 15 nicht über die zweite Trägerplatte 730 hinaus. Die zweite Vertikalverbindungsstruktur 735 kann insbesondere in der dritten Richtung 15 auf der ersten Seite 733 der zweiten Trägerplatte 730 und auf der zweiten Seite 734 der zweiten Trägerplatte 730 enden.

Die zweite Vertikalverbindungsstruktur 735 verbindet einen auf der ersten Seite 733 der zweiten Trägerplatte 730 angeordneten ersten Spulenleiter 125 der zweiten Statorlängslage 731 elektrisch leitend mit einer auf der zweiten Seite 734 der zweiten Trägerplatte 730 angeordneten zweiten Leiterstruktur 736. Soweit keine Unterschiede beschrieben werden, ist die zweite Leiterstruktur 736 ausgebildet, wie es für die erste Leiterstruktur 726 beschrieben wird. Die zweite Leiterstruktur 736 kann auf der zweiten Seite 734 der zweiten Trägerplatte 730 parallel zu den nicht dargestellten zweiten Spulenleitern 126 der zweiten Statorschräglage 732 verlaufen. Die zweite Leiterstruktur 736 kann eine zweite Horizontalverbindungsstruktur, insbesondere ein zweiter Querverbinder oder ein zweiter Längsverbinder sein. Die zweite Leiterstruktur 736 kann elektrisch isoliert von den zweiten Spulenleitern 126 der zweiten Seite 734 der zweiten Trägerplatte 730 ausgebildet sein, so dass keine elektrische Verbindung zwischen den ersten Spulenleitern 125 auf der ersten Seite 733 der zweiten Trägerplatte 730 und den zweiten Spulenleitern 126 auf der zweiten Seite 734 der zweiten Trägerplatte 730 besteht.

Der erste Spulenleiter 125 der zweiten Statorlängslage 731 kann direkt mit der zweiten Vertikalverbindungsstruktur 735 elektrisch leitend verbunden sein. Der erste Spulenleiter 125 der zweiten Statorlängslage 731 kann bei einer nicht dargestellten Ausführungsform aber auch über eine auf der zweiten Statorlängslage 731 angeordnete Horizontalverbindungsstruktur, insbesondere über einen auf der zweiten Statorlängslage 731 angeordneten Querverbinder oder über einen auf der zweiten Statorlängslage 731 angeordneten Längsverbinder, mit der zweiten Vertikalverbindungsstruktur 735 elektrisch leitend verbunden sein.

Neben der zweiten Vertikalverbindungsstruktur 735 kann die zweite Trägerplatte 730 weitere Vertikalverbindungsstrukturen umfassen, die ausgebildet sind, wie die zweite Vertikalverbindungsstruktur 735. Beispielsweise kann die zweite Trägerplatte 730, wie in Fig. 12 dargestellt, eine weitere zweite Vertikalverbindungsstruktur 737 umfassen, die die auf der zweiten Statorschräglage 732 angeordnete zweite Leiterstruktur 736 mit einem weiteren ersten Spulenleiter 125 der zweiten Statorlängslage 731 elektrisch leitend verbindet. Der weitere erste Spulenleiter 125 der zweiten Statorlängslage 731 und die weitere zweite Vertikalverbindungsstruktur 737 können dabei direkt oder über eine auf der zweiten Statorlängslage 731 angeordnete Horizontalverbindungsstruktur elektrisch leitend verbunden sein.

Die erste Vertikalverbindungsstruktur 725 und die zweite Vertikalverbindungsstruktur 735 sind in der dritten Richtung 15 übereinander angeordnet. Insbesondere liegen die erste Vertikalverbindungsstruktur 725 und die zweite Vertikalverbindungsstruktur 735 in der dritten Richtung 15 auf einer Linie. Die erste Vertikalverbindungsstruktur 725 und die zweite Vertikalverbindungsstruktur 735 sind durch die in Fig. 12 nicht dargestellte Isolierlage 728 elektrisch voneinander isoliert. Insbesondere erstreckt sich die erste Vertikalverbindungsstruktur 725 auf der zweiten Seite 724 der ersten Trägerplatte 720 nur bis zu der Isolierlage 728, insbesondere nur bis zu einer Oberseite der Isolierlage 728. Die zweite Vertikalverbindungsstruktur 735 erstreckt sich auf der zweiten Seite 734 der zweiten Trägerplatte 730 ebenfalls nur bis zu der Isolierlage 728, insbesondere nur bis zu einer Unterseite der Isolierlage 728.

Analog zu der ersten und zweiten Vertikalverbindungsstruktur 725, 735 können auch weitere Vertikalverbindungsstrukturen der ersten und zweiten Trägerplatte 720, 730 in der dritten Richtung 15 übereinander angeordnet sein. Insbesondere können die weitere erste Vertikalverbindungsstruktur 727 und die weitere zweite Vertikalverbindungsstruktur 737 analog zu der ersten und zweiten Vertikalverbindungsstruktur 725, 735 in der dritten Richtung 15 übereinander angeordnet sein.

Die Statoreinheit 100 umfasst eine dritte Vertikalverbindungsstruktur 740. Soweit keine Unterschiede beschrieben werden, ist die dritte Vertikalverbindungsstruktur 740 ausgebildet, wie es für die erste Vertikalverbindungsstruktur 725 beschrieben wird. Die dritte Verbindungsstruktur 740 verbindet einen auf der ersten Seite 723 der ersten Trägerplatte 720 angeordneten ersten Spulenleiter 125 elektrisch leitend mit einer auf der zweiten Seite 734 der zweiten Trägerplatte 730 angeordneten dritten Leiterstruktur 744. Die dritte Leiterstruktur 744 kann beispielsweise eine dritte Horizontalverbindungsstruktur, insbesondere ein dritter Längsverbinder oder ein dritter Querverbinder sein. Die dritte Leiterstruktur 740 kann elektrisch isoliert von den zweiten Spulenleitern 126 der zweiten Seite 734 der zweiten Trägerplatte 730 ausgebildet sein, so dass keine elektrische Verbindung zwischen den ersten Spulenleitern 125 auf der ersten Seite 723 der ersten Trägerplatte 720 und den zweiten Spulenleitern 126 auf der zweiten Seite 734 der zweiten Trägerplatte 730 besteht.

Die dritte Vertikalverbindungsstruktur 740 verläuft parallel zu der dritten Richtung 15. Die dritte Vertikalverbindungsstruktur 740 verläuft in der dritten Richtung 15 durch die erste Trägerplatte 720 und die in Fig. 12 nicht dargestellte Isolierlage 728. Die dritte Vertikalverbindungsstruktur 740 kann zudem durch die zweite Trägerplatte 730 verlaufen. Insbesondere kann sich die dritte Vertikalverbindungsstruktur 740 von der Oberseite 101 der Statoreinheit 100 bis zu der Unterseite 102 der Statoreinheit 100 und von der obersten Statorlage bis zu der untersten Statorlage erstrecken. Bei der in Fig. 12 dargestellten Statoreinheit 100 erstreckt sich die dritte Vertikalverbindungsstruktur 740 dann von der ersten Seite 723 der ersten Trägerplatte 720 bis zu der ersten Seite 733 der zweiten Trägerplatte 730.

Die dritte Vertikalverbindungsstruktur 740 berührt lediglich auf zwei Statorlagen 104, 105, 106, 107 der Statoreinheit 100 Leiterstrukturen der betreffenden Statorlage 104, 105, 106, 107. Auf den übrigen Statorlagen 104, 105, 106, 107 sind die Leiterstrukturen der betreffenden Statorlage 104, 105, 106, 107 beabstandet von der dritten Vertikalverbindungsstruktur 740 ausgebildet. Insbesondere können auf den übrigen Statorlagen 104, 105, 106, 107 zwischen der dritten Vertikalverbindungsstruktur 740 und den Leiterstrukturen der betreffenden Statorlage 104, 105, 106, 107 jeweils ringförmige isolierende Bereiche umlaufend um die dritte Vertikalverbindungsstruktur 740 angeordnet sein. Insbesondere berührt die dritte Vertikalverbindungsstruktur 740 lediglich Leiterstrukturen der ersten Statorlängslage 721 und Leiterstrukturen der zweiten Statorschräglage 732, so dass die dritte Vertikalverbindungsstruktur 740 eine elektrisch leitende Verbindung zwischen den Leiterstrukturen der ersten Statorschräglage 722 und den Leiterstrukturen der zweiten Statorlängslage 731 ausgebildet. Dabei ist die dritte Vertikalverbindungsstruktur 740 lediglich auf der ersten Statorlängslage 721 mit ersten Spulenleitern 125 elektrisch leitend verbunden und auf der zweiten Statorschräglage 732 elektrisch isoliert von den dort angeordneten zweiten Spulenleitern 126 ausgebildet, so dass keine elektrisch leitende Verbindung zwischen den ersten und den zweiten Spulenleitern 125, 126 besteht.

Die zweite Trägerplatte 730 umfasst eine vierte Vertikalverbindungsstruktur 741. Soweit keine Unterschiede beschrieben werden, ist die vierte Vertikalverbindungsstruktur 741 ausgebildet, wie es für die zweite Vertikalverbindungsstruktur 735 beschrieben wird. Die vierte Vertikalverbindungsstruktur 741 verbindet die als Horizontalverbindungsstruktur, insbesondere als Längsverbinder oder Querverbinder, ausgebildete dritte Leiterstruktur 744 der zweiten Statorschräglage 732 elektrisch leitend mit einem ersten Spulenleiter 125 der zweiten Statorlängslage 731. Die vierte Vertikalverbindungsstruktur 741 erstreckt sich, wie die zweite Vertikalverbindungsstruktur 735, von der ersten Seite 733 der zweiten Trägerplatte 730 bis zu der zweiten Seite 734 der zweiten Trägerplatte 730. Bei der Statoreinheit 100 ist ein erster Spulenleiter 125 der ersten Statorlängslage 721 über die dritte Vertikalverbindungsstruktur 740, die dritte Leiterstruktur 744 und die vierte Vertikalverbindungsstruktur 741 elektrisch leitend mit einem ersten Spulenleiter 125 der zweiten Statorlängslage 731 verbunden.

Anstatt der oder zusätzlich zu der dritten Vertikalverbindungsstruktur 740 kann die Statoreinheit 100 auch weitere Vertikalverbindungsstrukturen umfassen, welche sich, wie die dritte Vertikalverbindungsstruktur 740, von der Oberseite 101 der Statoreinheit 100 bis zu der Unterseite 102 der Statoreinheit 100 erstrecken. Derartige Vertikalverbindungsstrukturen können zwei Leiterstrukturen, die in anderen Statorlagen 722, 731 als der ersten Statorlängslage 721 und der zweiten Statorschräglage 732 angeordnet sind, berühren. Beispielsweise kann eine derartige Vertikalverbindungsstruktur eine Leiterstruktur auf der ersten Statorlängslage 721, beispielsweise einen ersten Spulenleiter 125, einen Längsverbinder oder einen Querverbinder der ersten Statorlängslage 721, mit einer Leiterstruktur der zweiten Statorlängslage 731, beispielsweise mit einem ersten Spulenleiter 125, einem Längsverbinder oder einem Querverbinder der zweiten Statorlängslage 731, elektrisch leitend verbinden. Eine derartige Vertikalverbindungsstruktur kann auch eine auf der ersten Statorschräglage 722 angeordnete Leiterstruktur mit einer auf der zweiten Statorlängslage 733 oder mit einer auf der zweiten Statorschräglage 734 angeordneten Leiterstruktur elektrisch leitend verbinden

Neben den ersten Vertikalverbindungsstrukturen 725, 727 kann die erste Trägerplatte 720 auch weitere Vertikalverbindungsstrukturen umfassen, welche analog zu den ersten Vertikalverbindungsstrukturen 725, 727 ausgebildet sind und auf der zweiten Seite 724 der ersten Trägerplatte 720 angeordnete zweite Spulenleiter 126 mit auf der ersten Seite 723 der ersten Trägerplatte 720 angeordneten Leiterstrukturen verbinden. Beispielsweise kann die erste Trägerplatte 720 eine Vertikalverbindungsstruktur umfassen, die einen auf der zweiten Seite 724 der ersten Trägerplatte 720 angeordneten zweiten Spulenleiter 126 mit einem auf der ersten Seite 723 der ersten Trägerplatte 720 angeordneten Längsverbinder elektrisch leitend verbindet.

Neben den zweiten Vertikalverbindungsstrukturen 735, 737 kann die zweite Trägerplatte 730 auch weitere Vertikalverbindungsstrukturen umfassen, welche analog zu den zweiten Vertikalverbindungsstrukturen 735, 737 ausgebildet sind und auf der zweiten Seite 734 der zweiten Trägerplatte 730 angeordnete zweite Spulenleiter 126 mit auf der ersten Seite 733 der zweiten Trägerplatte 730 angeordneten Leiterstrukturen verbinden. Beispielsweise kann die zweite Trägerplatte 730 eine Vertikalverbindungsstruktur umfassen, die einen auf der zweiten Seite 734 der zweiten Trägerplatte 730 angeordneten zweiten Spulenleiter 126 mit einem auf der ersten Seite 733 der zweiten Trägerplatte 730 angeordneten Längsverbinder elektrisch leitend verbindet.

Die ersten Vertikalverbindungsstrukturen 725, 727 der ersten Trägerplatte 720 können jeweils leitfähig beschichtete Durchgangsöffnungen durch die erste Trägerplatte 720 umfassen. Die zweiten Vertikalverbindungsstrukturen 735, 737 und die vierte Vertikalverbindungsstruktur 741 der zweiten Trägerplatte 730 können jeweils leitfähig beschichtete Durchgangsöffnungen durch die zweite Trägerplatte 730 umfassen.

Die Durchkontaktierungen der ersten Vertikalverbindungsstrukturen 725, 727 und die Durchkontaktierungen der zweiten Vertikalverbindungsstrukturen 735, 737 und der vierten Vertikalverbindungsstruktur 741 können sich dabei jeweils nur über diejenige Trägerplatte 720, 730 erstrecken, auf der die über die betreffende Durchkontaktierung verbundenen Statorlagen 721, 722, 731, 732 angeordnet sind, nicht jedoch über die gesamte Statoreinheit 100. Derartige Durchkontaktierungen einer aus mehreren zweilagigen Trägerplatten 720, 730 aufgebauten Statoreinheit 100 werden auch als *blind vias* oder *buried vias* bezeichnet.

Insbesondere erstrecken sich die als *blind vias* oder *buried vias* ausgebildeten Vertikalverbindungsstrukturen 725, 727 durch die erste Trägerplatte 720 von der ersten Seite 723 der ersten Trägerplatte 720 bis zu der zweiten Seite 724 der ersten Trägerplatte 720. Insbesondere erstrecken sich die als *blind vias* oder *buried vias* ausgebildeten Vertikalverbindungsstrukturen 735, 737, 741 durch die zweite Trägerplatte 730 von der ersten Seite 733 der zweiten Trägerplatte 730 bis zu der zweiten Seite 734 der zweiten Trägerplatte 730. Damit sind die Leiterstrukturen der Statorlängslagen 710 und die Leiterstrukturen der Statorschräglagen 711 der einzelnen Trägerplatten 720, 730 unter anderem jeweils mittels ausschließlich auf der betreffenden Trägerplatte 720, 730 ausgeführten Vertikalverbindungsstrukturen 725, 727, 735, 737, 741 elektrisch leitend miteinander verbunden.

Dabei sind die ersten Spulenleiter 125 der Statorlängslage 710 und die zweiten Spulenleiter 126 der Statorschräglagen 711 der einzelnen Trägerplatten 720, 730 jeweils elektrisch isoliert voneinander ausgebildet. Die ausschließlich auf der ersten Trägerplatte 720 ausgeführten Vertikalverbindungsstrukturen 725, 727 verbinden jeweils einen ersten Spulenleiter 125 auf der ersten Seite 723 der ersten Trägerplatte 720 elektrisch leitend mit einer Horizontalverbindungsstruktur, insbesondere mit einem Längsverbinder oder einem Querverbinder, auf der zweiten Seite 724 der ersten Trägerplatte 720 oder einen zweiten Spulenleiter 126 auf der zweiten Seite 724 der ersten Trägerplatte 720 elektrisch leitend mit einer Horizontalverbindungsstruktur, insbesondere einem Längsverbinder oder einem Querverbinder, auf der ersten Seite 723 der ersten Trägerplatte 720. Analog verbinden die ausschließlich auf der zweiten Trägerplatte 730 ausgeführten Vertikalverbindungsstrukturen 735, 737, 741 jeweils einen ersten Spulenleiter 125 auf der ersten Seite 733 der zweiten Trägerplatte 730 mit einer Horizontalverbindungsstruktur, insbesondere mit einem Längsverbinder oder einem Querverbinder, auf der zweiten Seite 734 der zweiten Trägerplatte 730 oder einen zweiten Spulenleiter 126 auf der zweiten Seite 734 der zweiten Trägerplatte 730 mit einer Horizontalverbindungsstruktur, insbesondere einem Längsverbinder oder einem Querverbinder, auf der ersten Seite 733 der zweiten Trägerplatte 720.

Die dritte Vertikalverbindungsstruktur 740 kann eine leitfähig beschichtete Durchgangsöffnung durch die gesamte Statoreinheit 100 aufweisen, die sich in der dritten Richtung 15 über die gesamte Statoreinheit 100 erstreckt. Insbesondere kann sich die Durchgangsöffnung der dritten Vertikalverbindungsstruktur 740 in der dritten Richtung 15 von der Oberseite 101 der Statoreinheit 100 bis zu der Unterseite 102 der Statoreinheit 100 erstrecken. Derartige Durchkontaktierungen werden auch als *through vias* oder *through hole vias* bezeichnet.

Vertikalverbindungsstrukturen, die, wie die ersten Vertikalverbindungsstrukturen 725, 727 und die zweiten Vertikalverbindungsstrukturen 735, 737, nur Leiterstrukturen in zwei nebeneinander bzw. benachbart liegenden Statorlagen 104, 105, 106, 107 der Statoreinheit elektrisch leitend verbinden und sich nur zwischen den benachbarten bzw. nebeneinanderliegenden Statorlagen 104, 105, 106, 107 erstrecken, können auch als Nachbarlagenverbinder bezeichnet werden. Vertikalverbindungsstrukturen, die sich, wie die dritte Vertikalverbindungsstruktur 740 und anders als die Nachbarlagenverbinder, von der Oberseite 101 der Statoreinheit 100 bis zu der Unterseite 102 der Statoreinheit 100 erstrecken, können auch als Durchgangsverbinder bezeichnet werden. Nachbarlagenverbinder können als *buried vias* oder als *blind vias* ausgebildet sein, Durchgangsverbinder als *through vias* oder *through hole* vias.

Die Antriebsströme der einzelnen Dreiphasensysteme 150, 151 werden über eine in Fig. 3 dargestellte Kontaktanordnung 420 auf die Statoreinheit 100 und in die Spulenleiter 125, 126 eingespeist. Die Kontaktanordnung 420 wird in der deutschen Patentanmeldung 102017131326.5 beschrieben. Diese Beschreibung wird durch Bezugnahme in die vorliegende Beschreibung vollumfänglich aufgenommen.

Die Kontaktanordnung 420 ist kreuzförmig ausgebildet und verläuft in der ersten Richtung 12 zwischen dem ersten und dem dritten Statorsektor 110, 113 und zwischen dem zweiten und dem vierten Statorsektor 112, 114. In der zweiten Richtung 14 verläuft die Kontaktanordnung 420 zwischen dem ersten und dem zweiten Statorsektor 110, 112 und dem dritten und dem vierten Statorsektor 113, 114. Die Kontaktanordnung 420 umfasst eine erste Kontaktstruktur 421, welche zwischen dem ersten und dem zweiten Statorsektor 110, 112 angeordnet ist, eine zweite Kontaktstruktur 422, welche zwischen dem zweiten und dem vierten Statorsektor 112, 114 angeordnet ist, eine dritte Kontaktstruktur 423, welche zwischen dem dritten und dem vierten Statorsektor 113, 114 angeordnet ist, und eine vierte Kontaktstruktur 424, welche zwischen dem ersten und dem dritten Statorsektor 110, 113 angeordnet ist.

Mit der ersten Kontaktstruktur 421 sind die ersten Spulenleiter 125 des ersten und des zweiten Statorsektors 110, 112 elektrisch leitend verbunden. Mit der zweiten Kontaktstruktur 422 sind die zweiten Spulenleiter 126 des zweiten und vierten Statorsektors 112, 114 elektrisch leitend verbunden. Mit der dritten Kontaktstruktur 423 sind die ersten Spulenleiter 125 des dritten und vierten Statorsektors 113, 114 elektrisch leitend verbunden. Mit der vierten Kontaktstruktur 424 sind die zweiten Spulenleiter 126 des ersten und dritten Statorsektors 110, 113 elektrisch leitend verbunden. Damit umfasst die erste Kontaktstruktur 421 die in Fig. 8 und 10 dargestellten, an der ersten Seite 152 des ersten Dreiphasensystems 150 angeordneten Anschlusspunkte 154, 155, 156 der ersten Dreiphasensysteme 150. Die vierte Kontaktstruktur 424 umfasst die in Fig. 9 und 10 dargestellten, an der ersten Seite 153 der zweiten Dreiphasensysteme 151 angeordneten Anschlusspunkte 154, 155, 156 der zweiten Dreiphasensysteme 151.

Die Kontaktstrukturen 421, 422, 423, 424 umfassen jeweils mehrere nebeneinander angeordnete Kontakteinheiten, welche ausführlich in der eingangs genannten deutschen Patentanmeldung 102017131326.5 beschrieben werden. Die Kontakteinheiten können insbesondere jeweils als Kontaktlöcher bzw. Vias (vertical interconnect access) in der Statoreinheit 100 ausgebildet sein und leitfähig beschichtete Durchgangsöffnungen durch die Statoreinheit 100 umfassen. Die Kontakteinheiten, insbesondere die Durchgangsöffnungen, können sich dabei, wie die Durchgangsverbinder, von der Oberseite 101 der Statoreinheit 100 bis zu der Unterseite 102 der Statoreinheit 100 erstrecken.

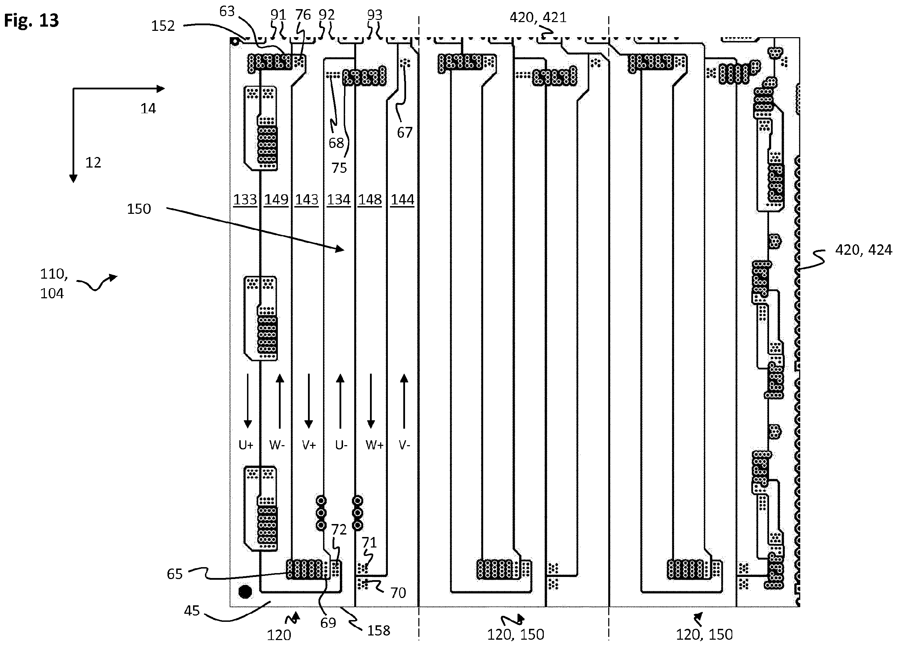

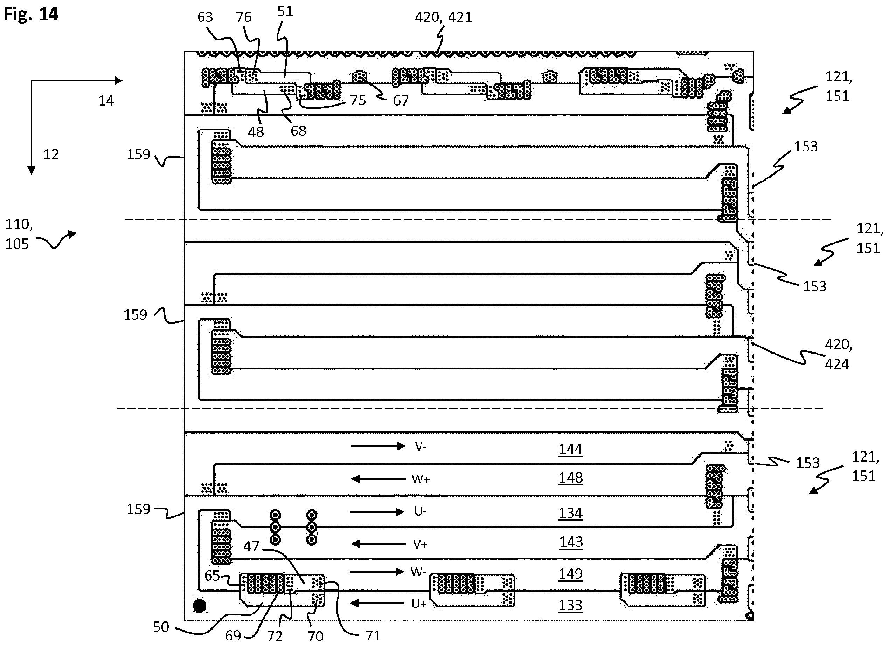

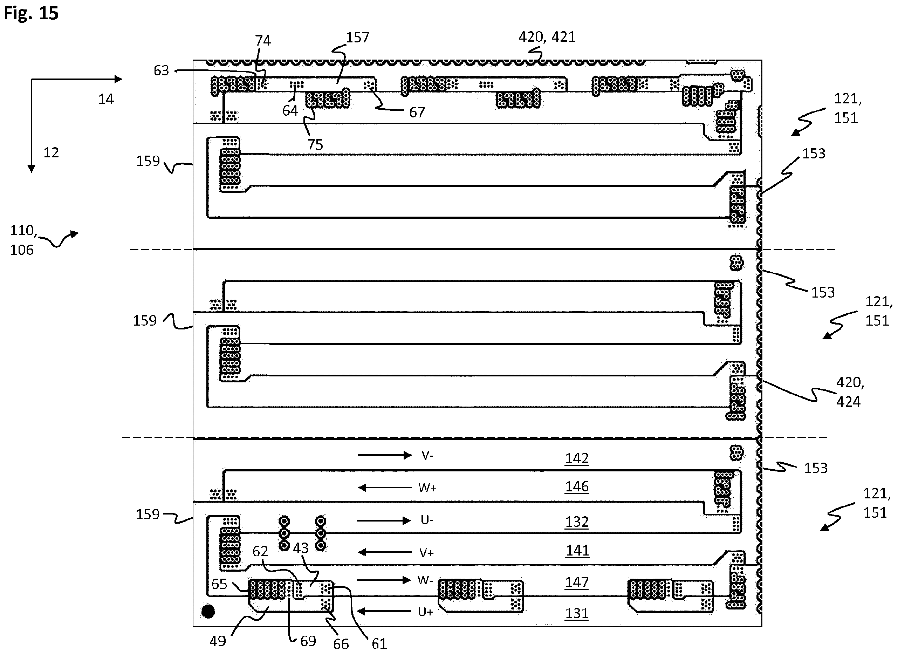

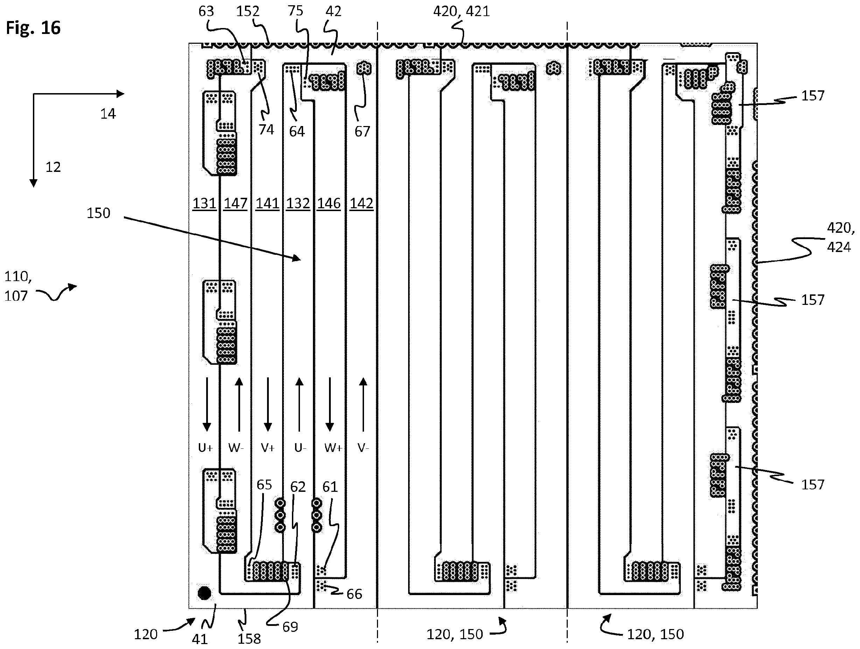

**Fig. 13** zeigt eine schematische Darstellung einer Aufsicht von oben auf die erste Statorlage 104 des ersten Statorsektors 110. **Fig. 14** zeigt eine schematische Darstellung einer Aufsicht von oben auf die zweite Statorlage 105 des ersten Statorsektors 110. **Fig. 15** zeigt eine schematische Darstellung einer Aufsicht von oben auf die dritte Statorlage 106 des ersten Statorsektors 110. **Fig. 16** zeigt eine schematische Darstellung einer Aufsicht von oben auf die vierte Statorlage 107 des ersten Statorsektors 110. Im Folgenden wird die Verschaltung der Spulenleiter der Statorsegmente 120, 121 zu den Dreiphasensystemen 150, 151 anhand des entgegen der zweiten Richtung 14 am äußeren Rand des ersten Statorsektors 110 angeordneten äußeren ersten Statorsegments 120 beschrieben.

Die ersten Spulenleiter 125 des äußeren ersten Statorsegments 120 sind auf der Statoreinheit 100, innerhalb des ersten Statorsektors 110 und innerhalb des äußeren ersten Statorsegments 120 zu dem ersten Dreiphasensystem 150 verschaltet, wie es im Zusammenhang mit den Fig. 6 bis 10 beschrieben wird. Dabei sind insbesondere in der dritten Richtung 15 übereinanderliegende erste Spulenleiter 125 der ersten und vierten Statorlage 104, 107 des ersten Dreiphasensystems 150 auf der Statoreinheit 100 derart in Reihe geschaltet, dass jeweils übereinanderliegende erste Spulenleiter 125 mit dem gleichen Antriebsstrom einer der Phasen U, V, W durchflossen werden.

Das äußere erste Statorsegment 120 umfasst in der vierten Statorlage 107, wie im Zusammenhang mit Fig. 6 beschrieben wird, den ersten Hinleiter 131, den dritten Rückleiter 147, den zweiten Hinleiter 141, den ersten Rückleiter 132, den dritten Hinleiter 146 und den zweiten Rückleiter 142.

Wie in Fig. 13 dargestellt ist, umfasst das äußere erste Statorsegment 120 in der ersten Statorlage 104 einen weiteren ersten Hinleiter 133 der ersten Phase U, welcher entgegen der zweiten Richtung 14 am äußersten Rand des ersten Statorsegments 120 angeordnet ist. In der zweiten Richtung 14 umfasst das äußere erste Statorsegment 120 in der ersten Statorlage 104 neben dem ersten Hinleiter 133 der Reihe nach einen weiteren dritten Rückleiter 149 der dritten Phase W, einen weiteren zweiten Hinleiter 143 der zweiten Phase V, einen weiteren ersten Rückleiter 134 der ersten Phase U, einen weiteren dritten Hinleiter 148 der dritten Phase W und einen weiteren zweiten Rückleiter 144 der zweiten Phase V. Soweit keine Unterschiede dargestellt werden, sind die weiteren Hinleiter 133, 143, 148 ausgebildet, wie es für die in der vierten Statorlage 107 angeordneten Hinleiter 131, 141, 145 beschrieben wird.

Der in Fig. 13 dargestellte weitere erste Hinleiter 133 und der in Fig. 16 dargestellte erste Hinleiter 131 sind auf der Statoreinheit 100, insbesondere innerhalb des ersten Statorsegments 120, derart in Reihe geschaltet, dass sie in der ersten Richtung 12 mit dem Antriebsstrom der ersten Phase U durchflossen werden. Der in Fig. 13 dargestellte weitere erste Rückleiter 134 und der in Fig. 16 dargestellte erste Rückleiter 132 sind auf der Statoreinheit 100, insbesondere innerhalb des ersten Statorsegments 120, derart in Reihe geschaltet, dass sie entgegen der ersten Richtung 12 mit dem Antriebsstrom der ersten Phase U durchflossen werden.

Der in Fig. 13 dargestellte weitere zweite Hinleiter 143 und der in Fig. 16 dargestellte zweite Hinleiter 141 sind auf der Statoreinheit 100, insbesondere innerhalb des ersten Statorsegments 120, derart in Reihe geschaltet, dass sie in der ersten Richtung 12 mit dem Antriebsstrom der zweiten Phase V durchflossen werden. Der in Fig. 13 dargestellte weitere zweite Rückleiter 144 und der in Fig. 16 dargestellte zweite Rückleiter 142 sind auf der Statoreinheit 100, insbesondere innerhalb des ersten Statorsegments 120, derart in Reihe geschaltet, dass sie entgegen der ersten Richtung 12 mit dem Antriebsstrom der zweiten Phase V durchflossen werden.

Der in Fig. 13 dargestellte weitere dritte Hinleiter 148 und der in Fig. 16 dargestellte dritte Hinleiter 145 sind auf der Statoreinheit 100, insbesondere innerhalb des ersten Statorsegments 120, derart in Reihe geschaltet, dass sie in der ersten Richtung 12 mit dem Antriebsstrom der dritten Phase W durchflossen werden. Der in Fig. 13 dargestellte weitere dritte Rückleiter 149 und der in Fig. 16 dargestellte dritte Rückleiter 146 sind auf der Statoreinheit 100, insbesondere innerhalb des ersten Statorsegments 120, derart in Reihe geschaltet, dass sie entgegen der ersten Richtung 12 mit dem Antriebsstrom der dritten Phase W durchflossen werden.

Die erste Statorlage 104 bildet eine Anschlussstatorlage der Statoreinheit 100. In der Anschlussstatorlage sind die ersten Spulenleiter 125 des ersten Statorsektors 110 mit der ersten Kontaktstruktur 421 elektrisch leitend verbunden. Insbesondere ist der weitere erste Hinleiter 133 mit einer ersten Anschlussstruktur 91 der ersten Kontaktstruktur 421, der weitere zweite Hinleiter 143 mit einer zweiten Anschlussstruktur 92 der ersten Kontaktstruktur 421 und der weitere dritte Hinleiter 148 mit einer dritten Anschlussstruktur 93 der ersten Kontaktstruktur 421 elektrisch leitend verbunden. Über die erste Anschlussstruktur 91 wird der Antriebsstrom der ersten Phase U auf den weiteren ersten Hinleiter 133, über die zweite Anschlussstruktur 92 wird der Antriebsstrom der zweiten Phase V auf den weiteren zweiten Hinleiter 143 und über die dritte Anschlussstruktur 93 wird der Antriebsstrom der dritten Phase W auf den weiteren dritten Hinleiter 148 eingespeist.

Die erste Anschlussstruktur 91 bildet den in Fig. 8 dargestellten ersten Anschlusspunkt 154. Die zweite Anschlussstruktur 92 bildet den in Fig. 8 dargestellten zweiten Anschlusspunkt 155. Die dritte Anschlussstruktur 93 bildet den in Fig. 8 dargestellten dritten Anschlusspunkt 156.

Der weitere erste Hinleiter 133 kann mit weiteren ersten Anschlussstrukturen 91 zur Einspeisung der ersten Phase U elektrisch leitend verbunden sein. Ebenso können der weitere zweite Hinleiter 143 mit weiteren zweiten Anschlussstrukturen 92 zur Einspeisung der zweiten Phase V und der weitere dritte Hinleiter 148 mit weiteren dritten Anschlussstrukturen 93 zur Einspeisung der dritten Phase W elektrisch leitend verbunden sein. Insbesondere kann der weitere erste Hinleiter 133, wie dargestellt, mit einer weiteren ersten Anschlussstruktur 91, der weitere zweite Hinleiter 143 mit einer weiteren zweiten Anschlussstruktur 92 und der weitere dritte Hinleiter 148 mit einer weiteren dritten Anschlussstruktur 93 elektrisch leitend verbunden sein. Die Anschlussstrukturen 91, 92, 93 können durch die nebeneinander angeordneten Kontakteinheiten der ersten Kontaktstruktur 421 gebildet werden.

Die in den Figuren 13 und 16 dargestellte erste Seite 152 des ersten Dreiphasensystems 150 verläuft entlang der zweiten Richtung 14 und ist in der ersten Richtung 12 an dem zweiten Statorsektor 112, insbesondere in der Mitte der Statoreinheit 100, angeordnet. Das erste Dreiphasensystem 150 weist eine der ersten Seite 152 in der ersten Richtung 12 gegenüberliegende zweite Seite 158 auf. Die zweite Seite 158 des ersten Dreiphasensystems 150 verläuft parallel zur ersten Seite 152 und entlang der zweiten Richtung 14. Die zweite Seite 158 des ersten Dreiphasensystems 150 ist in der zweiten Richtung 12 am Rand der Statoreinheit 100 angeordnet. Die Hinleiter 131, 133, 141, 143, 146, 148 und die Rückleiter 132, 134, 142, 144, 147, 149 des ersten Dreiphasensystems 150 weisen jeweils an der ersten Seite 152 des ersten Dreiphasensystems 150 angeordnete erste Enden und an der zweiten Seite 158 des ersten Dreiphasensystems 150 angeordnete zweite Enden auf.

Die Anschlussstrukturen 91, 92, 93 sind an der ersten Seite 152 des ersten Dreiphasensystems 150 angeordnet. Die weiteren ersten Hinleiter 133, 143, 148 sind jeweils in der als Anschlussstatorlage fungierenden ersten Statorlage 104 mit den Anschlussstrukturen 91, 92, 93 elektrisch leitend verbunden, so dass die elektrisch leitenden Verbindungen zwischen den Anschlussstrukturen 91, 92, 93 und den weiteren Hinleitern 133, 143, 148 jeweils ausschließlich über Leiterstrukturen hergestellt werden, welche ausschließlich in der ersten Statorlage 104 angeordnet sind. Die weiteren Hinleiter 133, 143, 148 sind in der Anschlussstatorlage jeweils an ihren an der ersten Seite 152 des ersten Dreiphasensystems 150 angeordneten ersten Enden mit den Anschlussstrukturen 91, 92, 93 elektrisch leitend verbunden.

Wie in den Figuren 13 und 16 dargestellt ist, sind die ersten Hinleiter 131, 133 und die ersten Rückleiter 132, 134 an ihren an der zweiten Seite 158 des ersten Dreiphasensystems 150 angeordneten zweiten Enden jeweils in derjenigen Statorlage 104, 107, in der sie angeordnet sind, mittels Horizontalverbindungsleitern elektrisch leitend miteinander verbunden. Insbesondere ist der erste Hinleiter 131 an seinem zweiten Ende in der vierten Statorlage 107 mittels eines in der vierten Statorlage 107 und an der zweiten Seite 158 des ersten Dreiphasensystems 150 angeordneten ersten Horizontalverbindungsleiter 41 elektrisch leitend mit dem ersten Rückleiter 132 an dessen zweitem Ende verbunden. Der weitere erste Hinleiter 133 ist an seinem zweiten Ende in der ersten Statorlage 104 mittels eines in der ersten Statorlage 104 und an der zweiten Seite 158 des ersten Dreiphasensystems 150 angeordneten weiteren ersten Horizontalverbindungsleiter 45 elektrisch leitend mit dem weiteren ersten Rückleiter 134 an dessen zweitem Ende verbunden.

Die ersten Horizontalverbindungsleiter 41, 45 können, wie dargestellt, in den Statorlagen 104, 107 durch als Querverbinder ausgebildete Horizontalverbindungsstrukturen gebildet werden. Die Horizontalverbindungsleiter 41, 45 können insbesondere durch Leiterbahnen ausgebildet werden, die quer zu den in der ersten Richtung 12 länglich ausgedehnten ersten Spulenleitern 125 der ersten und vierten Statorlage 104, 107 orientiert sind. Die Horizontalverbindungsleiter 41, 45 sind in der dritten Richtung 15 übereinander und miteinander fluchtend angeordnet.

Wie in Fig. 16 dargestellt ist, sind der zweite Hinleiter 141 und der zweite Rückleiter 142 an ihren an der ersten Seite 152 des ersten Dreiphasensystems 150 angeordneten zweiten Enden in derjenigen Statorlage, in der sie angeordnet sind, also in der vierten Statorlage 107, mittels eines zweiten Horizontalverbindungsleiters 42 elektrisch leitend miteinander verbunden. Der zweite Horizontalverbindungsleiter 42 ist an der ersten Seite 152 des ersten Dreiphasensystems 150 und in der vierten Statorlage 107 angeordnet.

Der zweite Horizontalverbindungsleiter 42 kann ausgebildet sein, wie es für die ersten Horizontalverbindungsleiter 41, 45 beschrieben wird. Insbesondere kann der zweite Horizontalverbindungsleiter 42, wie dargestellt, in der vierten Statorlage 107 durch eine als Querverbinder ausgebildete Horizontalverbindungsstruktur gebildet werden. Der zweite Horizontalverbindungsleiter 42 kann insbesondere durch Leiterbahnen ausgebildet werden, die quer zu den in der ersten Richtung 12 länglich ausgedehnten ersten Spulenleitern 125 der vierten Statorlage 107 orientiert sind.

Das erste Dreiphasensystem 150 umfasst mehrere Vertikalverbindungsleiter. Die Vertikalverbindungsleiter können als Vertikalverbindungsstrukturen, insbesondere als Durchgangsverbinder oder als Nachbarlagenverbinder, ausgebildet sein. Insbesondere umfasst das erste Dreiphasensystem 150, wie in Fig. 16 dargestellt ist, einen ersten Vertikalverbindungsleiter 61, einen zweiten Vertikalverbindungsleiter 62, einen dritten Vertikalverbindungsleiter 63, einen vierten Vertikalverbindungsleiter 64, einen fünften Vertikalverbindungsleiter 65, einen sechsten Vertikalverbindungsleiter 66, einen siebten Vertikalverbindungsleiter 67 und einen achten Vertikalverbindungsleiter 68.

Als Nachbarlagenverbinder ausgebildete Vertikalverbindungsstrukturen verbinden jeweils Leiterstrukturen, welche in einander benachbart angeordneten Nachbarstatorlagen angeordnet sind. Umfasst die Statoreinheit 100 mehrere in der dritten Richtung 15 übereinander angeordnete Trägerplatten 720, 730, so bilden jeweils diejenigen Statorlagen 104, 105, 106, 107 Nachbarstatorlagen, die jeweils auf gegenüberliegenden Seiten 723, 724, 733, 734 der Trägerplatten 720, 730 angeordnet sind. Insbesondere bilden in diesem Fall die erste und die zweite Statorlage 104, 105 Nachbarstatorlagen und die dritte und die vierte Statorlage 106, 107 bilden ebenfalls Nachbarstatorlagen.

Der in der vierten Statorlage 107 angeordnete und in Fig. 16 dargestellte dritte Hinleiter 146 und der in der vierten Statorlage 107 angeordnete dritte Rückleiter 147 sind über einen in Fig. 15 dargestellten dritten Horizontalverbindungsleiter 43 elektrisch leitend miteinander verbunden. Der dritte Horizontalverbindungsleiter 43 ist in der die Nachbarstatorlage der vierten Statorlage 107 bildenden dritten Statorlage 106 und an der zweiten Seite 158 des ersten Dreiphasensystems 150 angeordnet.

Der erste und zweite Vertikalverbindungsleiter 61, 62 sind an der zweiten Seite 158 des Dreiphasensystems 150 angeordnet. Der dritte Hinleiter 146 ist an seinem zweiten Ende in der vierten Statorlage 107 mit dem ersten Vertikalverbindungsleiter 61 elektrisch leitend verbunden und der dritte Horizontalverbindungsleiter 43 ist in der dritten Statorlage 106 ebenfalls elektrisch leitend mit dem ersten Vertikalverbindungsleiter 61 verbunden. Damit ist der dritte Hinleiter 146 an seinem zweiten Ende über den ersten Vertikalverbindungsleiter 61 elektrisch leitend mit dem in der dritten Statorlage 106 angeordneten dritten Horizontalverbindungsleiter 43 verbunden.

Der dritte Rückleiter 147 ist an seinem zweiten Ende in der vierten Statorlage 107 elektrisch leitend mit dem zweiten Vertikalverbindungsleiter 62 verbunden. Genauer ist der dritte Rückleiter 147 über einen in der vierten Statorlage 107 und an der zweiten Seite 158 des Dreiphasensystems 150 angeordneten Querverbinder mit dem zweiten Vertikalverbindungsleiter 62 verbunden. In der dritten Statorlage 106 ist der zweite Vertikalverbindungsleiter 62 mit dem dritten Horizontalverbindungsleiter 43 elektrisch leitend verbunden. Damit ist der dritte Rückleiter 147 an seinem zweiten Ende über den zweiten Vertikalverbindungsleiter 62 elektrisch leitend mit dem in der dritten Statorlage 106 angeordneten dritten Horizontalverbindungsleiter 43 verbunden.

Der dritte Horizontalverbindungsleiter 43 kann, wie dargestellt, als eine Horizontalverbindungsstruktur, insbesondere als ein in der dritten Statorlage 106 und parallel zu den dort angeordneten zweiten Spulenleitern 126 ausgebildeter Längsverbinder, ausgebildet sein. Der erste und zweite Vertikalverbindungsleiter 61, 62 können als Nachbarlagenverbinder ausgebildet sein und sich in der dritten Richtung 15 nur von der vierten Statorlage 107 bis zu der dritten Statorlage 106 erstrecken.

Der erste Vertikalverbindungsleiter 61 kann durch die in Fig. 12 dargestellte weitere zweite Vertikalverbindungsstruktur 737 und der dritte Horizontalverbindungsleiter 43 kann durch die in Fig. 12 dargestellte zweite Leiterstruktur 736 gebildet werden. Der zweite Vertikalverbindungsleiter 62 kann durch die in Fig. 12 dargestellte zweite Vertikalverbindungsstruktur 735 gebildet werden, wobei mit der zweiten Vertikalverbindungsstruktur 735 in der vierten Statorlage 107 anstelle des ersten Spulenleiters 125 der mit dem dritten Rückleiter 147 verbundene Querverbinder elektrisch leitend verbunden ist. Der dritte Hinleiter 146 und der dritte Rückleiter 147 sind dann auf der in den Figuren 11 und 12 dargestellten ersten Seite 733 der zweiten Trägerplatte 730 und der dritte Horizontalverbindungsleiter 43 ist auf der in den Figuren 11 und 12 dargestellten zweiten Seite 734 der zweiten Trägerplatte 730 angeordnet.

Wie in Fig. 13 dargestellt ist, ist der weitere dritte Hinleiter 148 mit dem weiteren dritten Rückleiter 149 über einen in der zweiten Statorlage 105 angeordneten und in Fig. 14 dargestellten weiteren dritten Horizontalverbindungsleiter 47 elektrisch leitend verbunden. Die zweite Statorlage 105 bildet eine der ersten Statorlage 104 in der dritten Richtung 15 benachbart angeordnete Nachbarstatorlage. Soweit keine Unterschiede beschrieben werden, ist der weitere dritte Horizontalverbindungsleiter 47 angeordnet und ausbildet, wie es für den dritten Horizontalverbindungsleiter 43 beschrieben wird. Insbesondere ist der weitere dritte Horizontalverbindungsleiter 47 an der zweiten Seite 158 des ersten Dreiphasensystems 150 angeordnet. Der weitere dritte Verbindungsleiter 47 ist als ein Längsverbinder ausgebildet.

Der weitere dritte Hinleiter 148 ist an seinem zweiten Ende über einen an der zweiten Seite 158 des ersten Dreiphasensystems 150 angeordneten weiteren ersten Vertikalverbindungsleiter 71 mit dem weiteren dritten Horizontalverbindungsleiter 47 elektrisch leitend verbunden. Der weitere dritte Rückleiter 149 ist an seinem zweiten Ende über einen an der zweiten Seite 158 des ersten Dreiphasensystems 150 angeordneten weiteren zweiten Vertikalverbindungsleiter 72 mit dem weiteren dritten Horizontalverbindungsleiter 47 elektrisch leitend verbunden. Der weitere dritte Hinleiter 148 ist in der ersten Statorlage 104 direkt mit dem weiteren ersten Vertikalverbindungsleiter 71 elektrisch leitend verbunden. Der weitere dritte Rückleiter 149 ist in der ersten Statorlage 104 über einen Querverbinder mit dem weiteren zweiten Vertikalverbindungsleiter 72 elektrisch leitend verbunden.

Der weitere erste Vertikalverbindungsleiter 71 und der weitere zweite Vertikalverbindungsleiter 72 sind als sich zwischen der ersten und der zweiten Statorlage 104, 105 erstreckende Nachbarlagenverbinder ausgebildet. Der weitere erste Vertikalverbindungsleiter 71 kann durch die in Fig. 12 dargestellte weitere erste Vertikalverbindungsstruktur 727 und der weitere dritte Horizontalverbindungsleiter 47 kann durch die in Fig. 12 dargestellte erste Leiterstruktur 726 gebildet werden. Der weitere zweite Vertikalverbindungsleiter 72 kann durch die in Fig. 12 dargestellte erste Vertikalverbindungsstruktur 725 gebildet werden, wobei mit der ersten Vertikalverbindungsstruktur 725 in der ersten Statorlage 106 anstelle des ersten Spulenleiters 125 der mit dem dritten Rückleiter 147 verbundene Querverbinder elektrisch leitend verbunden ist. Der weitere dritte Hinleiter 148 und der weitere dritte Rückleiter 149 sind auf der in den Figuren 11 und 12 dargestellten ersten Seite 723 der ersten Trägerplatte 720 und der weitere dritte Horizontalverbindungsleiter 47 ist auf der in den Figuren 11 und 12 dargestellten zweiten Seite 724 der ersten Trägerplatte 720 angeordnet.

Der erste Vertikalverbindungsleiter 61 und der weitere erste Vertikalverbindungsleiter 71 sind in der dritten Richtung 15 übereinander und miteinander fluchtend angeordnet, wie es in Fig. 12 für die weitere erste Vertikalverbindungsstruktur 727 und die weitere zweite Vertikalverbindungsstruktur 737 dargestellt und beschrieben ist. Der zweite Vertikalverbindungsleiter 62 und der weitere zweite Vertikalverbindungsleiter 72 sind in der dritten Richtung 15 übereinander und miteinander fluchtend angeordnet, wie es in Fig. 12 für die erste Vertikalverbindungsstruktur 725 und die zweite Vertikalverbindungsstruktur 735 dargestellt und beschrieben ist. Der dritte Horizontalverbindungsleiter 43 und der weitere dritte Horizontalverbindungsleiter 47 sind in der dritten Richtung 15 übereinander und miteinander fluchtend angeordnet.

Wie in Fig. 16 dargestellt ist, ist der erste Hinleiter 131 an seinem ersten Ende in der vierten Statorlage 107 mit dem an der ersten Seite 152 des ersten Dreiphasensystems 150 angeordneten dritten Vertikalverbindungsleiter 63 elektrisch leitend verbunden. Der erste Hinleiter 131 kann, wie dargestellt, über einen in der vierten Statorlage 107 angeordneten Querverbinder mit dem dritten Vertikalverbindungsleiter 63 elektrisch leitend verbunden sein. Der dritte Vertikalverbindungsleiter 63 ist als ein Durchgangsverbinder ausgebildet und erstreckt sich von der ersten Statorlage 104 bis zu der vierten Statorlage 107 und von der Oberseite 101 der Statoreinheit 100 bis zu der Unterseite 102 der Statoreinheit 100.

Über den dritten Vertikalverbindungsleiter 63 ist der erste Hinleiter 131 elektrisch leitend mit der ersten Anschlussstruktur 91 zur Einspeisung der ersten Phase des ersten Dreiphasensystems 150 verbunden. Wie in Fig. 14 dargestellt ist, ist in der zweiten Statorlage 105 ein an der ersten Seite 152 des ersten Dreiphasensystems 150 angeordneter vierter Horizontalverbindungsleiter 48 elektrisch leitend mit dem dritten Vertikalverbindungsleiter 63 verbunden. In der zweiten Statorlage 105 ist der vierte Horizontalverbindungsleiter 48 weiter mit dem an der ersten Seite 152 des ersten Dreiphasensystems 150 angeordneten achten Vertikalverbindungsleiter 68 elektrisch leitend verbunden. Auf der ersten Statorlage 104 ist der achte Vertikalverbindungsleiter 68 elektrisch leitend mit dem weiteren ersten Rückleiter 134 der ersten Phase U des ersten Dreiphasensystems 150 verbunden, so dass der achte Vertikalverbindungsleiter 68 und der erste Hinleiter 131 über den weiteren ersten Rückleiter 134, den dritten Horizontalverbindungsleiter 45 und den weiteren ersten Hinleiter 133 mit der ersten Anschlussstruktur 91 elektrisch leitend verbunden ist.

Der vierte Horizontalverbindungsleiter 48 ist in der zweiten Statorlage 105 als ein Längsverbinder ausgebildet. Der achte Vertikalverbindungsleiter 68 ist als ein Nachbarlagenverbinder ausgebildet, welcher sich in der dritten Richtung 15 zwischen der zweiten und der ersten Statorlage 105, 104 erstreckt. Der vierte Horizontalverbindungsleiter 48 ist auf der durch die zweite Statorlage 105 ausgebildeten und in der dritten Richtung 15 benachbart zu der ersten Statorlage 104 angeordneten Nachbarstatorlage der ersten Statorlage 104 angeordnet. Insbesondere ist der vierte Horizontalverbindungsleiter 48 auf der zweiten Seite 724 der ersten Trägerplatte 720 angeordnet.

Wie in Fig. 16 dargestellt ist, ist der erste Rückleiter 132 an seinem ersten Ende in der vierten Statorlage 107 mit dem an der ersten Seite 152 des ersten Dreiphasensystems 150 angeordneten vierten Vertikalverbindungsleiter 64 elektrisch leitend verbunden. Über den vierten Vertikalverbindungsleiter 64 ist der erste Rückleiter 132 mit dem in Fig. 15 dargestellten Sternpunkt 157 des ersten Dreiphasensystems 150 elektrisch leitend verbunden. Der Sternpunkt 157 kann, wie dargestellt, in der dritten Statorlage 106 ausgebildet sein. An dem Sternpunkt 157 können die erste Phase U, die zweite Phase V und die dritte Phase W insbesondere, wie dargestellt, über einen in der als Statorschräglage ausgebildeten Längsverbinder elektrisch leitend miteinander verbunden sein. Der Längsverbinder des Sternpunkts 157 ist an der ersten Seite 152 des ersten Dreiphasensystems 150 angeordnet.

Der vierte Vertikalverbindungsleiter 64 ist als Nachbarlagenverbinder ausgebildet und erstreckt sich in der dritten Richtung 15 von der vierten Statorlage 107 bis zu der die Nachbarstatorlage der vierten Statorlage 106 bildenden dritten Statorlage 106. Der vierte Vertikalverbindungsleiter 64 kann ausgebildet sein, wie es im Zusammenhang mit der in Fig. 12 dargestellten zweiten Vertikalverbindungsstruktur 735 beschrieben wird.

Der in der vierten Statorlage 107 angeordnete und in Fig. 16 dargestellte zweite Rückleiter 142 ist an seinem zweiten Ende mit der zweiten Anschlussstruktur 92 elektrisch leitend verbunden. Insbesondere ist der zweite Rückleiter 142 an seinem zweiten Ende in der vierten Statorlage 107 mit dem an der zweiten Seite 158 des ersten Dreiphasensystems 150 angeordneten sechsten Vertikalverbindungsleiter 66 elektrisch leitend verbunden. Der sechste Vertikalverbindungsleiter 66 ist als ein Nachbarlagenverbinder ausgebildet und erstreckt sich in der dritten Richtung 15 zwischen der vierten Statorlage 107 und der dritten Statorlage 106.

Der sechste Vertikalverbindungsleiter 66 ist in der dritten Statorlage 105 elektrisch leitend mit einem in der dritten Statorlage 105 und an der zweiten Seite 158 des ersten Dreiphasensystems 150 angeordneten fünften Horizontalverbindungsleiter 49 verbunden. Der fünfte Horizontalverbindungsleiter 49 ist in der dritten Statorlage 106 mit einem an der zweiten Seite 158 des ersten Dreiphasensystems 150 angeordneten neunten Vertikalverbindungsleiter 69 elektrisch leitend verbunden. Der neunte Vertikalverbindungsleiter 69 ist als ein Durchgangsverbinder ausgebildet und erstreckt sich in der dritten Richtung 15 zwischen der vierten und ersten Statorlage 107, 104 und zwischen der Unterseite 102 und der Oberseite 101 der Statoreinheit 100.

Der neunte Vertikalverbindungsleiter 69 ist in der der ersten Statorlage 104 mit dem weiteren zweiten Hinleiter 143 an dessen zweitem Ende elektrisch leitend verbunden, so dass der zweite Rückleiter 142 über den sechsten Vertikalverbindungsleiter 66, den fünften Horizontalverbindungsleiter 49, den neunten Vertikalverbindungsleiter 69 und den weiteren zweiten Hinleiter 143 elektrisch leitend mit der zweiten Anschlussstruktur 92 verbunden ist. Insbesondere ist der weitere zweite Hinleiter 143 an der zweiten Seite 158 des Dreiphasensystems 150 elektrisch leitend mit dem sechsten Vertikalverbindungsleiter 66 verbunden. Dies bedeutet, dass alle Leiter, über die der weitere zweite Hinleiter 143 mit dem sechsten Vertikalverbindungsleiter 66 und dem zweiten Rückleiter 142 verbunden ist, an der zweiten Seite 158 des Dreiphasensystems 150 angeordnet sind.

Der fünfte Horizontalverbindungsleiter 49 ist in der dritten Statorlage 106 als ein Längsverbinder ausgebildet. Der fünfte Horizontalverbindungsleiter 49 ist auf einer durch die dritte Statorlage 106 ausgebildeten und in der dritten Richtung 15 benachbart zu der vierten Statorlage 107 angeordneten Nachbarstatorlage der vierten Statorlage 107 angeordnet. Der fünfte Horizontalverbindungsleiter 49 ist auf der zweiten Seite 734 der zweiten Trägerplatte 730 angeordnet.

Der zweite Rückleiter 142 und der weitere zweite Hinleiter 143 können über den sechsten Vertikalverbindungsleiter 66, den fünften Horizontalverbindungsleiter 49 und den neunten Vertikalverbindungsleiter 69 miteinander verbunden sein, wie es in Fig. 12 für die Verbindung der ersten Spulenleiter 125 über die vierte Vertikalverbindungsstruktur 741, die dritte Leiterstruktur 744 und die dritte Vertikalverbindungsstruktur 740 beschrieben wird. Insbesondere kann der sechste Vertikalverbindungsleiter 66 als die vierte Vertikalverbindungsstruktur 741, der fünfte Horizontalverbindungsleiter 49 als die dritte Leiterstruktur 744 und der neunte Vertikalverbindungsleiter 69 als die dritte Vertikalverbindungsstruktur 740 ausgebildet sein.

Der in Fig. 16 dargestellte zweite Hinleiter 141 ist an seinem zweiten Ende mit dem Sternpunkt 157 des ersten Dreiphasensystems 150 elektrisch leitend verbunden. Insbesondere ist der zweite Hinleiter 141 an seinem zweiten Ende in der vierten Statorlage 107 mit dem an der zweiten Seite 158 des ersten Dreiphasensystems 150 angeordneten fünften Vertikalverbindungsleiter 65 elektrisch leitend verbunden. Der fünfte Vertikalverbindungsleiter 65 ist als ein Durchgangsverbinder ausgebildet.

Der fünfte Vertikalverbindungsleiter 65 ist in der zweiten Statorlage 105 mit einem in der zweiten Statorlage 105 und an der zweiten Seite 158 des ersten Dreiphasensystems 150 angeordneten sechsten Horizontalverbindungsleiter 50 elektrisch leitend verbunden. Der sechste Horizontalverbindungsleiter 50 ist in der zweiten Statorlage 105 mit einem zehnten Vertikalverbindungsleiter 70 elektrisch leitend verbunden. Der zehnte Vertikalverbindungsleiter 70 ist als ein Nachbarlagenverbinder ausgebildet und erstreckt sich in der dritten Richtung 15 zwischen der zweiten Statorlage 105 und der ersten Statorlage 104. Der sechste Horizontalverbindungsleiter 50 ist auf der durch die zweite Statorlage 105 gebildeten Nachbarstatorlage der ersten Statorlage 104 angeordnet.

Der zehnte Vertikalverbindungsleiter 70 ist in der ersten Statorlage 104 mit dem weiteren zweiten Rückleiter 144 an dessen zweitem Ende elektrisch leitend verbunden. Der weitere zweite Rückleiter 144 ist an seinem ersten Ende in der ersten Statorlage 104 mit dem an der ersten Seite 152 des ersten Dreiphasensystems 150 angeordneten siebten Vertikalverbindungsleiter 67 elektrisch leitend verbunden. Der siebte Vertikalverbindungsleiter 67 ist als Durchgangsverbinder ausgebildet. Der siebte Vertikalverbindungsleiter 67 ist in der dritten Statorlage 106 mit dem Sternpunkt 157 elektrisch leitend verbunden. Damit ist der zweite Hinleiter 141 an seinem zweiten Ende über den fünften Vertikalverbindungsleiter 65, den sechsten Horizontalverbindungsleiter 50, den zehnten Vertikalverbindungsleiter 70, den weiteren zweiten Rückleiter 144 und den siebten Vertikalverbindungsleiter 67 elektrisch leitend mit dem Sternpunkt 157 verbunden. Insbesondere ist der zweite Hinleiter 141 über den fünften Vertikalverbindungsleiter 65 mit dem Sternpunkt 157 elektrisch leitend verbunden. Außerdem ist der weitere zweite Rückleiter 144 an der zweiten Seite 158 des Dreiphasensystems 150 mit dem fünften Vertikalverbindungsleiter 65 elektrisch leitend verbunden, nämlich mittels des zehnten Vertikalverbindungsleiters 70 und des sechsten Horizontalverbindungsleiters 50, welche beide an der zweiten Seite 158 des ersten Dreiphasensystems 150 angeordnet sind.

Der in Fig. 16 dargestellte dritte Rückleiter 147 ist an seinem ersten Ende mit dem Sternpunkt 157 elektrisch leitend verbunden. Insbesondere ist der dritte Rückleiter 147 in der vierten Statorlage 107 mit einem an der ersten Seite 152 des ersten Dreiphasensystems 150 angeordneten elften Vertikalverbindungsleiter 74 elektrisch leitend verbunden. Der elfte Vertikalverbindungsleiter 74 ist als ein sich in der dritten Richtung 15 zwischen der vierten und der dritten Statorlage 107, 106 erstreckender Nachbarlagenverbinder ausgebildet. Der elfte Vertikalverbindungsleiter 74 ist in der dritten Statorlage 106 mit dem Horizontalverbindungsleiter des Sternpunkts 157 elektrisch leitend verbunden, so dass der dritte Rückleiter 147 über den elften Vertikalverbindungsleiter 74 mit dem Sternpunkt 157 elektrisch leitend verbunden ist.

Der in Fig. 16 dargestellte dritte Hinleiter 146 ist an seinem ersten Ende mit der dritten Anschlussstruktur 93 zur Einspeisung der dritten Phase W elektrisch leitend verbunden. Insbesondere ist der dritte Hinleiter 146 in der vierten Statorlage 107 an seinem ersten Ende mit einem an der ersten Seite 152 des ersten Dreiphasensystems 150 angeordneten zwölften Vertikalverbindungsleiter 75 elektrisch leitend verbunden. Der zwölfte Vertikalverbindungsleiter 75 ist als ein Durchgangsverbinder ausgebildet.

Der zwölfte Vertikalverbindungsleiter 75 ist in der zweiten Statorlage 105 elektrisch leitend mit einem in der zweiten Statorlage 105 und an der ersten Seite 152 des ersten Dreiphasensystems 150 angeordneten siebten Horizontalverbindungsleiter 51 verbunden. Der siebte Horizontalverbindungsleiter 51 ist als ein Längsverbinder ausgebildet und in der zweiten Statorlage 105 elektrisch leitend mit einem an der ersten Seite des ersten Dreiphasensystems 150 angeordneten dreizehnten Vertikalverbindungsleiter 76 verbunden. Der dreizehnte Vertikalverbindungsleiter 76 ist als ein sich in der dritten Richtung 15 zwischen der zweiten und der ersten Statorlage 105, 104 erstreckender Nachbarlagenverbinder ausgebildet.

In der ersten Statorlage 104 ist der dreizehnte Vertikalverbindungsleiter 76 elektrisch leitend mit dem weiteren dritten Rückleiter 149 an dessen erstem Ende verbunden. Damit ist der dritte Hinleiter 146 an der ersten Seite 152 des ersten Dreiphasensystems 150 über den zwölften Vertikalverbindungsleiter 75, den siebten Horizontalverbindungsleiter 51 und den dreizehnten Vertikalverbindungsleiter 76 elektrisch leitend mit dem weiteren dritten Rückleiter 149 an dessen erstem Ende verbunden. Weiter ist der dritte Hinleiter 146 über den weiteren dritten Rückleiter 149 und den weiteren dritten Hinleiter 148 elektrisch leitend mit der dritten Anschlussstruktur 93 verbunden.

An der ersten Seite 152 des ersten Dreiphasensystems 150 sind der zwischen der ersten und zweiten Statorlage 104, 105 als Nachbarlagenverbinder ausgebildete dreizehnte Vertikalverbindungsleiter 76 und der zwischen der dritten und vierten Statorlage 106, 107 als Nachbarlagenverbinder ausgebildete elfte Vertikalverbindungsleiter 74 in der dritten Richtung 15 übereinander angeordnet. An der zweiten Seite 158 des ersten Dreiphasensystems 150 sind der zwischen der ersten und zweiten Statorlage 104, 105 als Nachbarlagenverbinder ausgebildete zehnte Vertikalverbindungsleiter 70 und der zwischen der dritten und vierten Statorlage 106, 107 als Nachbarlagenverbinder ausgebildete sechste Vertikalverbindungsleiter 66 in der dritten Richtung 15 übereinander angeordnet. Ebenso sind der in der zweiten Statorlage 105 angeordnete sechste Horizontalverbindungsleiter 50 und der in der dritten Statorlage 106 angeordnete fünfte Horizontalverbindungsleiter 49 in der dritten Richtung 15 übereinander angeordnet.

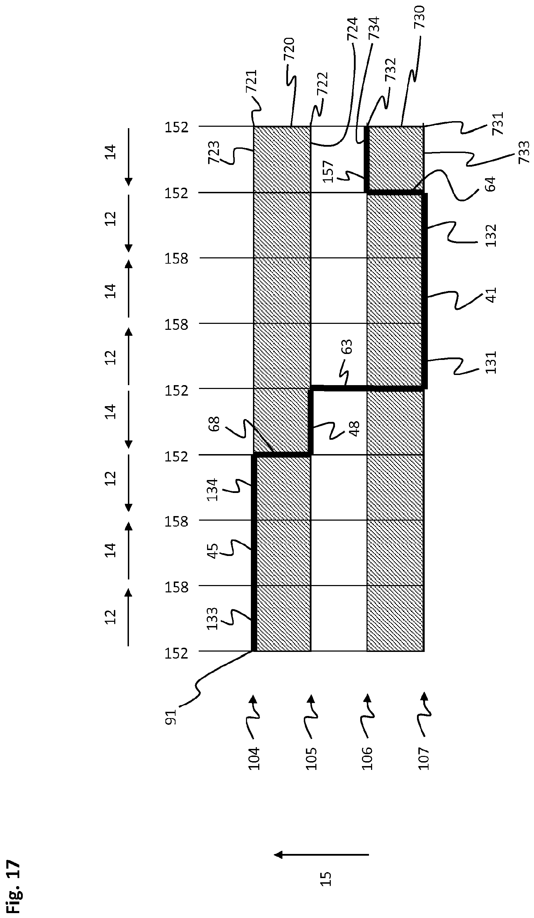

**Fig. 17** zeigt eine sehr stark vereinfachte, schematische Darstellung der Verschaltung der Leiterstrukturen zum Leiten der ersten Phase U des Antriebsstroms auf der die erste und zweite Trägerplatte 720, 730 umfassenden Statoreinheit 100. In Fig. 17 ist in vertikaler Richtung die dritte Richtung 15 dargestellt. In der horizontalen Richtung ist von links nach rechts der Verlauf der Leiterstrukturen zum Leiten der ersten Phase U von der ersten Kontaktstruktur 91 bis zum Sternpunkt 157 dargestellt. Dabei sind alle Leiterstrukturen innerhalb der einzelnen Statorlagen 104, 105, 106, 107 jeweils derart orientiert dargestellt, dass die positive Stromflussrichtung der ersten Phase U von links nach rechts orientiert ist. Insofern stellt Fig. 17 eine Abwicklung der Leiterstrukturen entlang der positiven Stromflussrichtung der ersten Phase U dar. Vertikale Markierungen zeigen jeweils die erste und zweite Seite 152, 158 des ersten Dreiphasensystems 150 an. Horizontale Pfeile zeigen jeweils die Orientierung der ersten und zweiten Richtung 12, 14 entlang der dargestellten Abwicklung an.

Der weitere erste Hinleiter 133 ist an der ersten Seite 152 des ersten Dreiphasensystems 150 in der durch die erste Statorlage 104 gebildeten ersten Statorlängslage 721 mit der ersten Anschlussstruktur 91 zum Einspeisen der ersten Phase U des Antriebsstroms verbunden. An der zweiten Seite 158 des ersten Dreiphasensystems 150 ist der weitere erste Hinleiter 133 in der ersten Statorlängslage 721 über den weiteren ersten Horizontalverbinder 45 mit dem weiteren ersten Rückleiter 134 verbunden. An der ersten Seite 152 des Dreiphasensystems 150 ist der weitere erste Rückleiter 134 über den achten Vertikalverbindungsleiter 68, den auf der zweiten Statorlage 105 ausgebildeten vierten Horizontalverbindungsleiter 48 und den dritten Vertikalverbindungsleiter 63 mit dem in der durch die vierte Statorlage 107 gebildeten zweiten Statorlängslage 731 angeordneten ersten Hinleiter 131 elektrisch leitend verbunden.

An der zweiten Seite 158 des Dreiphasensystems 150 ist der erste Hinleiter 131 in der zweiten Statorlängslage 731 über den ersten Horizontalverbinder 41 mit dem ersten Rückleiter 132 verbunden. Der erste Rückleiter 132 ist an der ersten Seite 152 des Dreiphasensystems 150 über den vierten Vertikalverbindungsleiter 64 elektrisch leitend mit dem in der durch die dritte Statorlage 106 gebildeten zweiten Statorschräglage 732 angeordneten Sternpunkt 157 verbunden.

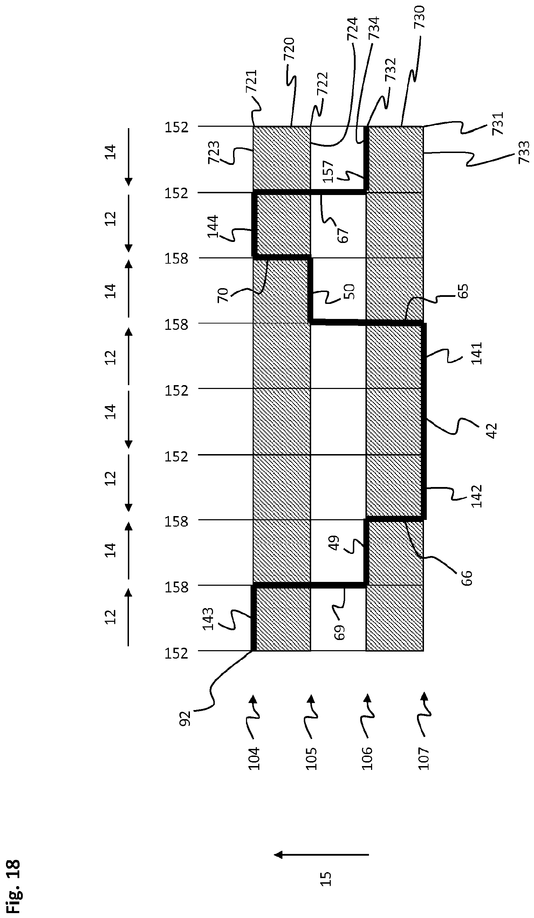

**Fig. 18** zeigt eine sehr stark vereinfachte, schematische Darstellung der Verschaltung der Leiterstrukturen zum Leiten der zweiten Phase V des Antriebsstroms auf der die erste und zweite Trägerplatte 720, 730 umfassenden Statoreinheit 100. In Fig. 18 ist in vertikaler Richtung die dritte Richtung 15 dargestellt. In der horizontalen Richtung ist von links nach rechts der Verlauf der Leiterstrukturen zum Leiten der zweiten Phase V von der zweiten Kontaktstruktur 92 bis zum Sternpunkt 157 dargestellt. Dabei sind alle Leiterstrukturen innerhalb der einzelnen Statorlagen 104, 105, 106, 107 jeweils derart orientiert dargestellt, dass die positive Stromflussrichtung der zweiten Phase V von links nach rechts orientiert ist. Insofern stellt Fig. 18 eine Abwicklung der Leiterstrukturen entlang der positiven Stromflussrichtung der zweiten Phase V dar. Vertikale Markierungen zeigen jeweils die erste und zweite Seite 152, 158 des ersten Dreiphasensystems 150 an. Horizontale Pfeile zeigen jeweils die Orientierung der ersten und zweiten Richtung 12, 14 entlang der dargestellten Abwicklung an.

Der weitere zweite Hinleiter 143 ist an der ersten Seite 152 des ersten Dreiphasensystems 150 in der durch die erste Statorlage 104 gebildeten ersten Statorlängslage 721 mit der zweiten Anschlussstruktur 92 zum Einspeisen der zweiten Phase V des Antriebsstroms verbunden. An der zweiten Seite 158 des ersten Dreiphasensystems 150 ist der weitere zweite Hinleiter 143 über den neunten Vertikalverbindungsleiter 69, den auf der dritten Statorlage 106 ausgebildeten fünften Horizontalverbindungsleiter 49 und den sechsten Vertikalverbindungsleiter 66 mit dem in der durch die dritte Statorlage 106 gebildeten zweiten Statorlängslage 731 angeordneten zweiten Rückleiter 142 verbunden.

An der ersten Seite 152 des Dreiphasensystems 150 ist der zweite Rückleiter 142 in der zweiten Statorlängslage 731 über den zweiten Horizontalverbindungsleiter 42 mit dem zweiten Hinleiter 141 verbunden. Der zweite Hinleiter 141 ist an der zweiten Seite 158 des ersten Dreiphasensystems 150 über den fünften Vertikalverbindungsleiter 65, den auf der zweiten Statorlage 105 ausgebildeten sechsten Horizontalverbindungsleiter 50 und den zehnten Vertikalverbindungsleiter 70 mit dem in der ersten Statorlängslage 721 angeordneten weiteren zweiten Rückleiter 144 verbunden. Der weitere zweite Rückleiter 144 ist an der ersten Seite 152 des ersten Dreiphasensystems 150 über den siebten Vertikalverbindungsleiter 67 mit dem in der durch die dritte Statorlage 106 gebildeten zweiten Statorschräglage 732 angeordneten Sternpunkt 157 verbunden.

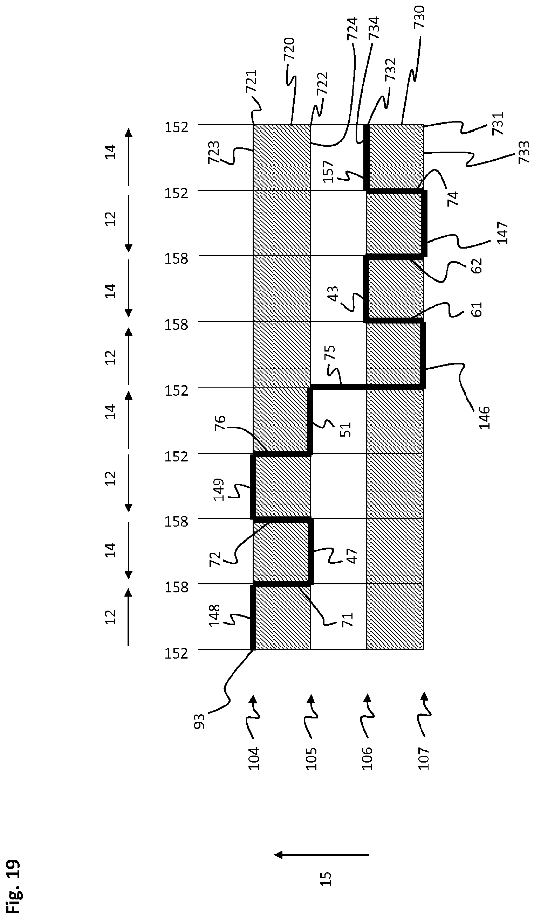

**Fig. 19** zeigt eine sehr stark vereinfachte, schematische Darstellung der Verschaltung der Leiterstrukturen zum Leiten der dritten Phase W des Antriebsstroms auf der die erste und zweite Trägerplatte 720, 730 umfassenden Statoreinheit 100. In Fig. 19 ist in vertikaler Richtung die dritte Richtung 15 dargestellt. In der horizontalen Richtung ist von links nach rechts der Verlauf der Leiterstrukturen zum Leiten der dritten Phase W von der dritten Kontaktstruktur 93 bis zum Sternpunkt 157 dargestellt. Dabei sind alle Leiterstrukturen innerhalb der einzelnen Statorlagen 104, 105, 106, 107 jeweils derart orientiert dargestellt, dass die positive Stromflussrichtung der dritten Phase W von links nach rechts orientiert ist. Insofern stellt Fig. 19 eine Abwicklung der Leiterstrukturen entlang der positiven Stromflussrichtung der dritten Phase W dar. Vertikale Markierungen zeigen jeweils die erste und zweite Seite 152, 158 des ersten Dreiphasensystems 150 an. Horizontale Pfeile zeigen jeweils die Orientierung der ersten und zweiten Richtung 12, 14 entlang der dargestellten Abwicklung an.

Der weitere dritte Hinleiter 148 ist an der ersten Seite 152 des ersten Dreiphasensystems 150 in der durch die erste Statorlage 104 gebildeten ersten Statorlängslage 721 mit der dritten Anschlussstruktur 93 zum Einspeisen der dritten Phase W des Antriebsstroms verbunden. An der zweiten Seite 158 des ersten Dreiphasensystems 150 ist der weitere dritte Hinleiter 148 über den weiteren ersten Vertikalverbindungsleiter 71, den auf der zweiten Statorlage 105 ausgebildeten weiteren dritten Horizontalverbindungsleiter 47 und den weiteren zweiten Vertikalverbindungsleiter 72 mit dem weiteren dritten Rückleiter 149 verbunden. Der weitere dritte Rückleiter 149 ist an der ersten Seite 152 des ersten Dreiphasensystems 150 über den dreizehnten Vertikalverbindungsleiter 76, den auf der zweiten Statorlage 105 ausgebildeten siebten Horizontalverbindungsleiter 51 und den zwölften Vertikalverbindungsleiter 75 mit dem in der durch die vierte Statorlage 107 gebildeten zweiten Statorlängslage 731 angeordneten dritten Hinleiter 146 verbunden.

Der dritte Hinleiter 146 ist an der zweiten Seite 158 des ersten Dreiphasensystems 150 über den ersten Vertikalverbindungsleiter 61, den auf der dritten Statorlage 106 ausgebildeten dritten Horizontalverbindungsleiter 43 und den zweiten Vertikalverbindungsleiter 62 mit dem dritten Rückleiter 147 verbunden. Der dritte Rückleiter 147 ist an der ersten Seite 152 des ersten Dreiphasensystems 150 über den elften Vertikalverbindungsleiter 74 mit dem in der durch die dritte Statorlage 106 gebildeten zweiten Statorschräglage 732 angeordneten Sternpunkt 157 verbunden.

Insgesamt sind damit die ersten Hinleiter 131, 133 jeweils an ihrem an der ersten Seite 152 des ersten Dreiphasensystems 150 angeordneten ersten Ende mit der ersten Anschlussstruktur 91 verbunden. Die ersten Hinleiter 131, 133 sind jeweils an ihrem an der zweiten Seite 158 des ersten Dreiphasensystems 150 angeordneten zweiten Ende in ihrer jeweiligen Statorlage 104, 107 mit dem zweiten Ende der ersten Rückleiter 132, 134 verbunden. Die ersten Rückleiter 132, 134 sind jeweils an ihrem an der ersten Seite 152 des ersten Dreiphasensystems 150 angeordneten ersten Ende mit dem Sternpunkt 157 verbunden.

Insgesamt sind damit die dritten Hinleiter 146, 148 jeweils an ihrem an der ersten Seite 152 des ersten Dreiphasensystems 150 angeordneten ersten Ende mit der dritten Anschlussstruktur 93 verbunden. Die dritten Hinleiter 146, 148 sind jeweils an ihrem an der zweiten Seite 158 des ersten Dreiphasensystems 150 angeordneten zweiten Ende über die als Nachbarlagenverbinder ausgebildeten ersten Vertikalverbindungsleiter 61, 71, die in der Nachbarstatorlage des jeweiligen dritten Hinleiters 146, 148 angeordneten dritten Horizontalverbindungsleiter 43, 47 und die als Nachbarlagenverbinder ausgebildeten zweiten Vertikalverbindungsleiter 62, 72 mit den dritten Rückleitern 147, 149 an deren zweiten Enden verbunden. Die dritten Rückleiter 147, 149 sind jeweils an ihrem an der ersten Seite 152 des ersten Dreiphasensystems 150 angeordneten ersten Ende mit dem Sternpunkt 157 verbunden.

In der vierten Statorlage 107 ist der zweite Rückleiter 142 an seinem an der zweiten Seite 158 des ersten Dreiphasensystems 150 angeordneten zweiten Ende mit einer durch den sechsten Vertikalverbindungsleiter 66 und als Nachbarlagenverbinder ausgebildete Vertikalverbindungsstruktur verbunden. An seinem an der ersten Seite 152 des ersten Dreiphasensystems 150 angeordneten ersten Ende ist der zweite Rückleiter 142 in der vierten Statorlage 107 über eine in der vierten Statorlage 107 angeordnete, durch den zweiten Horizontalverbindungsleiter 42 gebildete und als Querverbinder ausgebildete Horizontalverbindungsstruktur mit dem ersten Ende des zweiten Hinleiters 141 verbunden. Der zweite Hinleiter 141 ist an seinem zweiten Ende in der vierten Statorlage 107 mit einer durch den fünften Vertikalverbindungsleiter 65 gebildeten und als Durchgangsverbinder ausgebildeten Vertikalverbindungsstruktur verbunden.

Die ersten Spulenleiter 125 der ersten Dreiphasensysteme 150 der übrigen ersten Statorsegmente 120 sind auf die gleiche Weise miteinander verbunden, wie es für die ersten Spulenleiter 125 des äußeren ersten Statorsegments 120 des ersten Statorsektors 110 beschrieben wurde. Dies gilt sowohl für die weiteren ersten Statorsegmente 120 des ersten Statorsektors 110, als auch für die weiteren ersten Statorsegmente 120 des zweiten, dritten und vierten Statorsektors 112, 113, 114. Dabei sind die ersten Seiten 152 der ersten Dreiphasensysteme 150 jeweils in der Mitte der Statoreinheit 100 und an der Kontaktanordnung 420 angeordnet und die zweiten Seiten 158 der ersten Dreiphasensysteme 150 sind in der ersten Richtung 12 jeweils den ersten Seiten 152 gegenüberliegend am äußeren Rand der Statoreinheit 100 angeordnet.

Die zweiten Spulenleiter 126 der zweiten Dreiphasensysteme 151 des ersten Statorsektors 110 sind jeweils in analoger Weise miteinander verbunden, wie es für die ersten Spulenleiter 125 der ersten Statorsegments 120 des ersten Statorsektors 110 beschrieben wird. Die zweiten Dreiphasensysteme 151 weisen jeweils eine der ersten Seite 154 der zweiten Dreiphasensysteme 151 in der zweiten Richtung 14 gegenüberliegende zweite Seite 159 auf. Die ersten Seiten 153 der zweiten Dreiphasensysteme 151 sind in der zweiten Richtung1 14 jeweils in der Mitte der Statoreinheit 100 und an der Kontaktanordnung 420 angeordnet. Die zweiten Seiten 159 der zweiten Dreiphasensysteme 151 sind jeweils in der zweiten Richtung 14 den ersten Seiten 153 gegenüberliegend am äußeren Rand der Statoreinheit 100 angeordnet.

Die zweite Statorlage 105 umfasst den weiteren ersten, den weiteren zweiten und den weiteren dritten Hinleiter 133, 143, 148, sowie den weiteren ersten, den weiteren zweiten und den weiteren dritten Rückleiter 134, 144, 149 der zweiten Dreiphasensysteme 151. Die zweite Statorlage 105 bildet die Anschlussstatorlage der zweiten Dreiphasensysteme 151, in der die in der zweiten Statorlage 105 angeordneten weiteren Hinleiter 133, 143, 148 mit den Anschlussstrukturen der Kontaktanordnung 420 elektrisch leitend verbunden sind. Die erste Statorlage 104 bildet die Nachbarstatorlage der zweiten Statorlage 105, auf der die Horizontalverbindungsleiter, welche mit den zweiten Spulenleitern 126 der zweiten Statorlage 105 über Nachbarlagenverbinder verbunden sind, angeordnet sind. Die dritte Statorlage 106 umfasst den ersten, zweiten und dritten Hinleiter 131, 141, 146, sowie den ersten, zweiten und dritten Rückleiter 132, 142, 147 der zweiten Dreiphasensysteme 151. Die vierte Statorlage 107 bildet die Nachbarstatorlage der dritten Statorlage 106, auf der die Horizontalverbindungsleiter, welche mit den zweiten Spulenleitern 126 der dritten Statorlage 106 über Nachbarlagenverbinder verbunden sind, angeordnet sind. Insbesondere sind die Sternpunkte 157 der zweiten Dreiphasensysteme 151 in der vierten Statorlage 107 angeordnet.

Die Anordnung der Leiterstrukturen der zweiten Dreiphasensysteme 151 auf den Trägerplatten 720, 730 der Statoreinheit 100 entspricht der in den Figuren 17 bis 19 dargestellten Anordnung, wobei die Anordnung der Leiterstrukturen der einzelnen Trägerplatten 720, 730 jeweils in der dritten Richtung 15 an der Mittenebene der einzelnen Trägerplatten 720, 730 gespiegelt ist. Beispielsweise sind bei den zweiten Dreiphasensystemen 151, anders als in Fig. 18 dargestellt, der weitere zweite Hinleiter 143 in der ersten Statorschräglage 722 auf der zweiten Seite 724 der ersten Trägerplatte 720, der fünfte Horizontalverbindungsleiter 49 in der zweiten Statorlängslage 731 auf der ersten Seite 733 der zweiten Trägerplatte 730 und der zweite Rückleiter 142 in der zweiten Statorschräglage 732 auf der zweiten Seite 734 der zweiten Trägerplatte 730 angeordnet.

Bei der Statoreinheit 100 wird die Anschlussstatorlage der zweiten Dreiphasensysteme 151 durch die in der dritten Richtung 15 oberste Statorschräglage 711 der Statoreinheit 100 gebildet. Die Statorlage mit dem ersten, zweiten und dritten Hinleiter 131, 141, 146, sowie mit dem ersten, zweiten und dritten Rückleiter 132, 142, 147 der zweiten Dreiphasensysteme 151 wird durch die in der dritten Richtung 15 unterste Statorschräglage 711 der Statoreinheit 100 gebildet. Die Nachbarstatorlage mit den Sternpunkten 157 der zweiten Dreiphasensysteme 151 wird durch die in der dritten Richtung 15 unterste Statorlängslage 711 der Statoreinheit 100 gebildet.

Alternative Ausführungsformen der Statoreinheit 100 können neben den vier Statorlagen 104, 105, 106, 107 weitere Statorlagen umfassen.

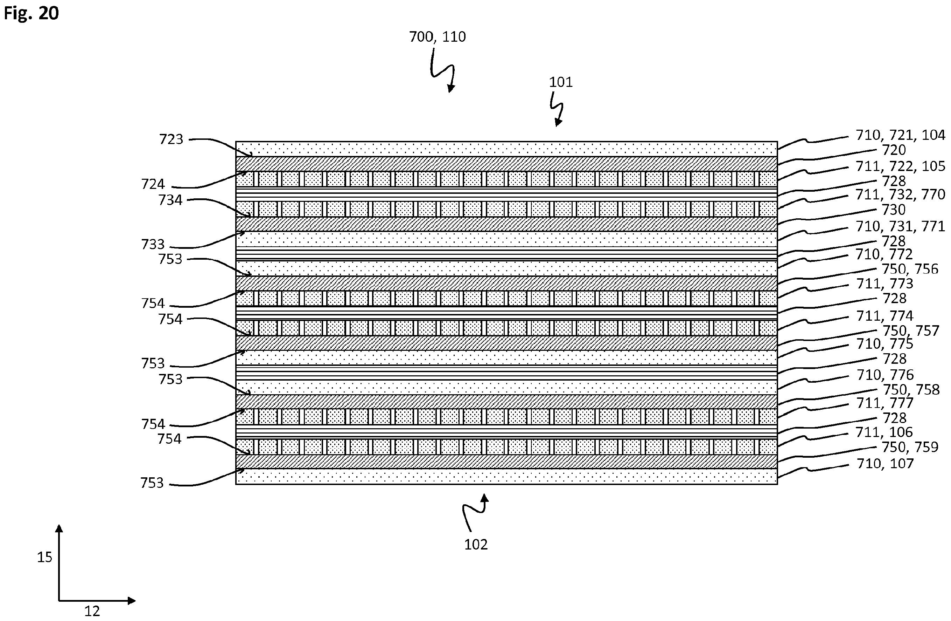

**Fig. 20** zeigt eine schematische, nicht maßstabsgetreue Darstellung einer weiteren Statoreinheit 700 des Statormoduls 10 in einer Schnittansicht, bei der die Schnittebene senkrecht zu der zweiten Richtung 14 orientiert ist. Soweit keine Unterschiede beschrieben werden, ist die weitere Statoreinheit 700 ausgebildet, wie es für die Statoreinheit 100 beschrieben wird. Bei der weiteren Statoreinheit 700 ist insbesondere die erste Richtung 12 senkrecht zu der zweiten Richtung 14 orientiert.

Die weitere Statoreinheit 700 wird in der deutschen Patentanmeldung 10 2018 117 981.2 im Zusammenhang mit den dortigen Figuren 9 bis 11 ausführlich beschrieben. Diese Beschreibung wird durch Bezugnahme auch zum Gegenstand der vorliegenden Anmeldung gemacht.

Die weitere Statoreinheit 700 weist eine erste Anordnung von insgesamt sechs Statorlängslagen 710 und eine zweite Anordnung von insgesamt sechs Statorschräglagen 711 auf. Die weitere Statoreinheit 700 weist in der dritten Richtung 15 unter einer obersten Statorlängslage 710 der Reihe nach zwei Statorschräglagen 711, zwei Statorlängslagen 710, zwei Statorschräglagen 711, zwei Statorlängslagen 710, zwei Statorschräglagen 711 und eine Statorlängslage 710 auf.

Wie die Statoreinheit 100, kann auch die weitere Statoreinheit 700 in der dritten Richtung 15 übereinander angeordnete zweilagige Trägerplatten umfassen, auf deren erster Seite jeweils eine Statorlängslage 710 und auf deren zweiter Seite jeweils eine Statorschräglage 711 angeordnet ist.

Wie die Statoreinheit 100, weist auch die weitere Statoreinheit 700 eine erste Trägerplatte 720 und eine zweite Trägerplatte 730 auf. Die erste Trägerplatte 720 der weiteren Statoreinheit 700 ist ausgebildet, wie es für die erste Trägerplatte 720 der Statoreinheit 100 beschrieben wird. Die zweite Trägerplatte 730 der weiteren Statoreinheit 700 ist ausgebildet, wie es für die zweite Trägerplatte 730 der Statoreinheit 100 beschrieben wird. Insbesondere ist auf einer ersten Seite 723 der ersten Trägerplatte 720 eine als erste Statorlängslage 721 bezeichnete Statorlängslage 710, auf einer der ersten Seite 723 in der dritten Richtung 15 gegenüberliegenden zweiten Seite 724 der ersten Trägerplatte 720 eine als erste Statorschräglage 722 bezeichnete Statorschräglage 711, auf einer ersten Seite 733 der zweiten Trägerplatte 730 eine als zweite Statorlängslage 731 bezeichnete Statorlängslage 710 und auf einer der ersten Seite 733 in der dritten Richtung 15 gegenüberliegenden zweiten Seite 734 der zweiten Trägerplatte 720 eine als zweite Statorschräglage 732 bezeichnete Statorschräglage 711 angeordnet.

Die erste Seite 723 der ersten Trägerplatte 720 ist in der dritten Richtung 15 über der zweiten Seite 724 der ersten Trägerplatte 720 angeordnet. Die erste Seite 733 der zweiten Trägerplatte 730 ist in der dritten Richtung 15 unter der zweiten Seite 734 der zweiten Trägerplatte 730 angeordnet. Die erste Trägerplatte 720 und die zweite Trägerplatte 730 sind in der dritten Richtung 15 nebeneinander angeordnet, wobei die erste Trägerplatte 720 über der zweiten Trägerplatte 730 angeordnet ist. Die zweite Seite 724 der ersten Trägerplatte 720 ist der zweiten Seite 734 der zweiten Trägerplatte 730 zugewandt angeordnet.

Die weitere Statoreinheit 700 umfasst neben der ersten und der zweiten Trägerplatte 720, 730 noch vier weitere Trägerplatten 750. Soweit keine Unterschiede beschrieben werden, sind die weiteren Trägerplatten 750 ausgebildet und angeordnet, wie es für die erste und zweite Trägerplatte 720, 730 beschrieben wird. Insbesondere weisen die weiteren Trägerplatten 750 jeweils eine erste Seite 753 mit einer Statorlängslage 710 und eine zweite Seite 754 mit einer Statorschräglage 711 auf. Die Trägerplatten 720, 730, 750 der ersten weiteren Statoreinheit 700 sind in der dritten Richtung 15 übereinander und parallel zueinander ausgerichtet angeordnet. Dabei sind einander zugewandte Seiten nebeneinander angeordneter Trägerplatten 720, 730, 750 in der dritten Richtung 15 abwechselnd als einander zugewandte erste Seiten 723, 733, 753 oder als einander zugewandte zweite Seiten 724, 734, 754 ausgebildet.

Bei der weiteren Statoreinheit 700 ist die erste Trägerplatte 720 als oberste Trägerplatte in der dritten Richtung 15 über allen übrigen Trägerplatten 730, 750 angeordnet. Die erste Statorlängslage 721 bildet die oberste Statorlage und die erste Statorschräglage 722 bildet die zweitoberste Statorlage der weiteren Statoreinheit 700. Die erste Seite 723 der ersten Trägerplatte 720 bildet eine Oberseite 101 der weiteren Statoreinheit 700.

In der dritten Richtung 15 unter der ersten Trägerplatte 720 sind der Reihe nach die zweite Trägerplatte 730, eine erste weitere Trägerplatte 756, eine zweite weitere Trägerplatte 757, eine dritte weitere Trägerplatte 758 und eine vierte weitere Trägerplatte 759 angeordnet. Die erste Seite 733 der zweiten Trägerplatte 730 ist der ersten Seite 753 der ersten weiteren Trägerplatte 756, die zweite Seite 754 der ersten weiteren Trägerplatte 756 ist der zweiten Seite 754 der zweiten weiteren Trägerplatte 757, die erste Seite 753 der zweiten weiteren Trägerplatte 757 ist der ersten Seite 753 der dritten weiteren Trägerplatte 758 und die zweite Seite 754 der dritten weiteren Trägerplatte 758 ist der zweiten Seite 754 der vierten weiteren Trägerplatte 759 zugewandt angeordnet. Die erste Seite 753 der vierten weiteren Trägerplatte 759 bildet die Unterseite 102 der weiteren Statoreinheit 700.

Zwischen den Trägerplatten 720, 730, 750 ist jeweils eine Isolierlage 728 angeordnet, die ausgebildet ist, wie die Isolierlage 728 der Statoreinheit 100.

Die weitere Statoreinheit 700 umfasst insgesamt eine mehrlagige Statorlagenanordnung mit einer geraden Anzahl von Statorlagen. Die weitere Statoreinheit 700 umfasst insbesondere eine zwölflagige Statorlagenanordnung. Die weitere Statoreinheit 700 umfasst mehrere in der dritten Richtung 15 übereinander angeordnete zweilagige Trägerplatten 720, 730, 750. Insbesondere umfasst die weitere Statoreinheit 700 sechs in der dritten Richtung 15 übereinander angeordnete zweilagige Trägerplatten 720, 730, 750.

Bei der weiteren Statoreinheit 700 ist im Inneren der Statoreinheit 700, also abgesehen von der obersten Statorlage und der untersten Statorlage, in der dritten Richtung 15 neben jeder Statorlängslage 710 eine Statorschräglage 711 und neben jeder Statorschräglage 711 eine Statorlängslage 710 angeordnet. Dabei ist jede Statorlängslage 710 auf der ersten Seite 723, 733, 753 und jede benachbart angeordnete Statorschräglage 711 auf der zweiten Seite 724, 734, 754 der jeweils zweilagigen Trägerplatten 720, 730, 750 angeordnet. Insbesondere umfasst die weitere Statoreinheit 700 jeweils ausschließlich zweilagige Trägerplatten 720, 730, 750 auf deren erster Seite 723, 733, 753 eine Statorlängslage 710 und auf deren zweiter Seite 724, 734, 754 eine Statorschräglage 711 angeordnet ist.

Wie die Statoreinheit 100 weist die weitere Statoreinheit 700 die erste Statorlage 104, die zweite Statorlage 105, die dritte Statorlage 106 und die vierte Statorlage 107 auf. Die erste Statorlage 104 ist in der dritten Richtung 15 an der Oberseite 101 der weiteren Statoreinheit 700 angeordnet. Wie bei der Statoreinheit 100, ist bei der weiteren Statoreinheit 700 die zweite Statorlage 105 in der dritten Richtung 15 benachbart zu und unter der ersten Statorlage 104 angeordnet und bildet die Nachbarstatorlage der ersten Statorlage 104. Die vierte Statorlage 107 ist, wie bei der Statoreinheit 100, in der dritten Richtung 15 an der Unterseite 102 der weiteren Statoreinheit 700 angeordnet. Die dritte Statorlage 106 ist in der dritten Richtung 15 benachbart zu der und über der vierten Statorlage 107 angeordnet und bildet die Nachbarstatorlage der vierten Statorlage 107.

In der dritten Richtung 15 zwischen der zweiten Statorlage 105 und der dritten Statorlage 106 sind bei der weiteren Statoreinheit 700 der Reihe nach eine als Statorschräglage 711 ausgebildete fünfte Statorlage 770, eine als Statorlängslage 710 ausgebildete sechste Statorlage 771, eine als Statorlängslage 710 ausgebildete siebte Statorlage 772, eine als Statorschräglage 711 ausgebildete achte Statorlage 773, eine als Statorschräglage 711 ausgebildete neunte Statorlage 774, eine als Statorlängslage 710 ausgebildete zehnte Statorlage 775, eine als Statorlängslage 710 ausgebildete elfte Statorlage 776 und eine als Statorschräglage 711 ausgebildete zwölfte Statorlage 777 angeordnet.

Die fünfte Statorlage 770 ist auf der zweiten Seite 734 der zweiten Trägerplatte 730 und die sechste Statorlage 771 ist auf der ersten Seite 731 der zweiten Trägerplatte 730 angeordnet. Damit bilden die fünfte Statorlage 770 und die sechste Statorlage 771 auf gegenüberliegenden Seiten der zweiten Trägerplatte 730 angeordnete Nachbarstatorlagen. Die siebte Statorlage 772 ist auf der ersten Seite 753 der ersten weiteren Trägerplatte 756 und die achte Statorlage 773 ist auf der zweiten Seite 754 der ersten weiteren Trägerplatte 756 angeordnet. Damit bilden die siebte Statorlage 772 und die achte Statorlage 773 auf gegenüberliegenden Seiten der ersten weiteren Trägerplatte 756 angeordnete Nachbarstatorlagen.

Die neunte Statorlage 774 ist auf der zweiten Seite 754 der zweiten weiteren Trägerplatte 757 und die zehnte Statorlage 775 ist auf der ersten Seite 753 der zweiten weiteren Trägerplatte 757 angeordnet. Damit bilden die neunte Statorlage 774 und die zehnte Statorlage 775 auf gegenüberliegenden Seiten der zweiten weiteren Trägerplatte 757 angeordnete Nachbarstatorlagen. Die elfte Statorlage 776 ist auf der ersten Seite 735 der dritten weiteren Trägerplatte 758 und die zwölfte Statorlage 777 ist auf der zweiten Seite 754 der dritten weiteren Trägerplatte 758 angeordnet. Damit bilden die elfte Statorlage 776 und die zwölfte Statorlage 777 auf gegenüberliegenden Seiten der dritten weiteren Trägerplatte 758 angeordnete Nachbarstatorlagen.

Die dritte Statorlage 106 ist auf der zweiten Seite 754 der vierten weiteren Trägerplatte 759 und die vierte Statorlage 107 ist auf der ersten Seite 753 der vierten weiteren Trägerplatte 759 angeordnet. Damit bilden die dritte Statorlage 106 und die vierte Statorlage 107 auf gegenüberliegenden Seiten der vierten weiteren Trägerplatte 759 angeordnete Nachbarstatorlagen.

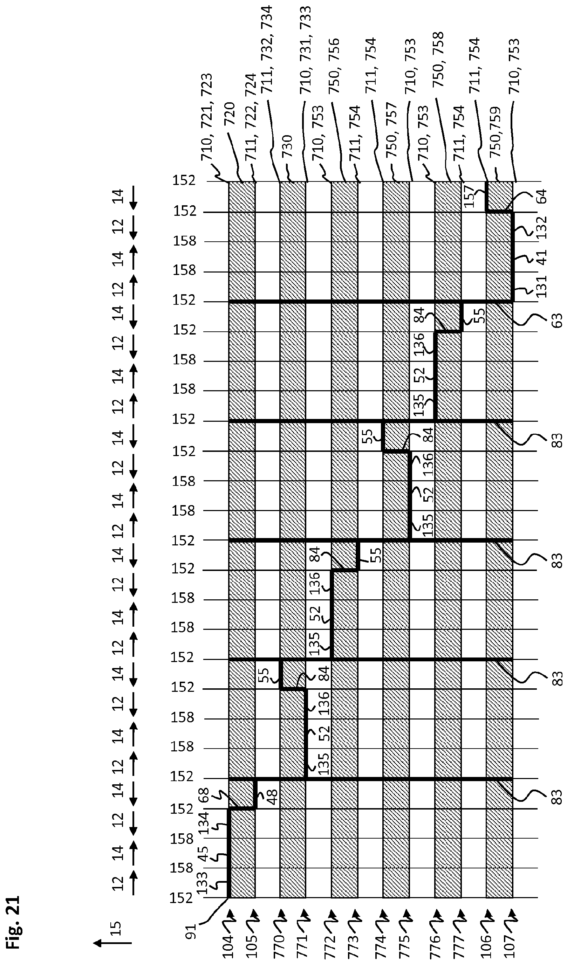

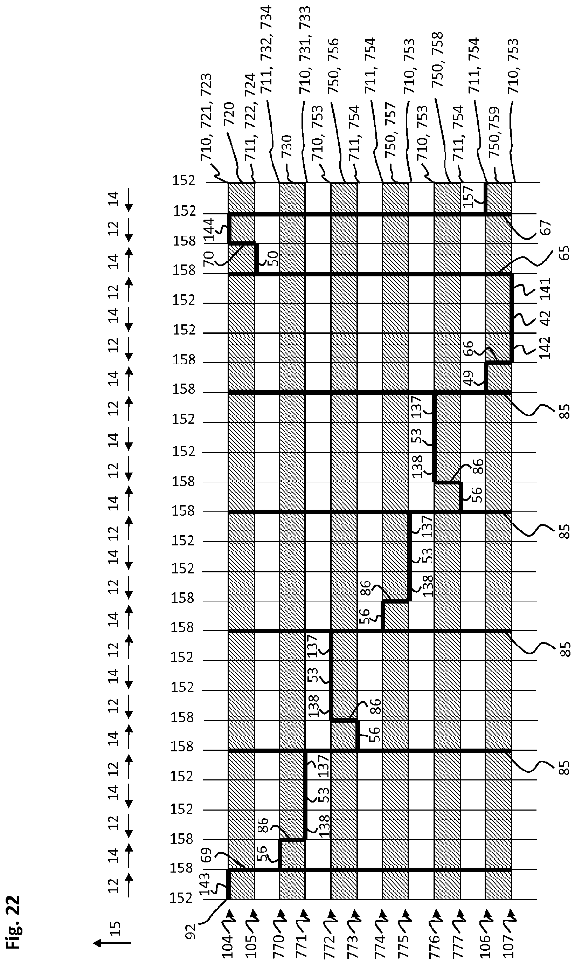

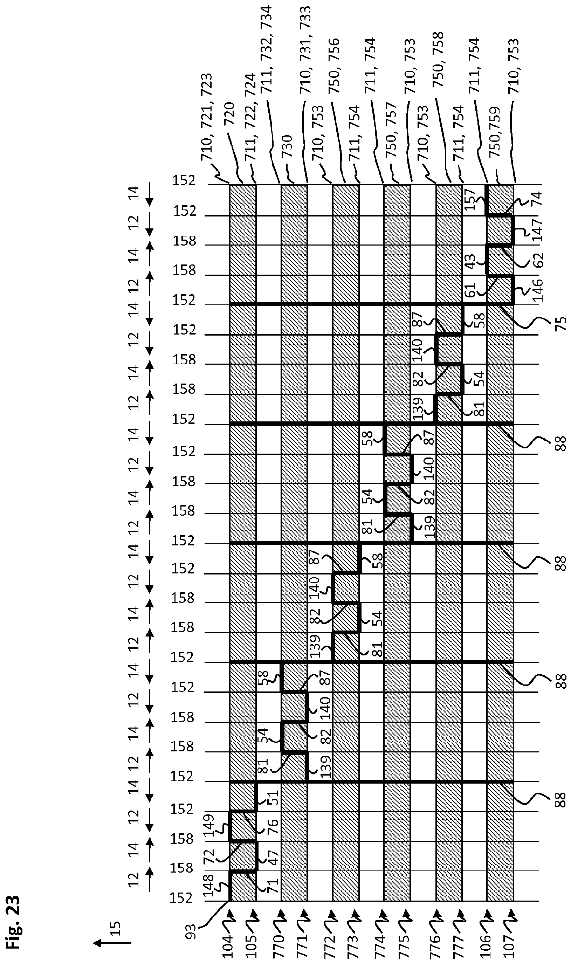

**Fig. 21** zeigt eine sehr stark vereinfachte, schematische Darstellung der Verschaltung der Leiterstrukturen zum Leiten der ersten Phase U des Antriebsstroms auf der weiteren Statoreinheit 700. **Fig. 22** zeigt eine schematische Darstellung der Verschaltung der Leiterstrukturen zum Leiten der zweiten Phase V des Antriebsstroms auf der weiteren Statoreinheit 700. **Fig. 23** zeigt eine schematische Darstellung der Verschaltung der Leiterstrukturen zum Leiten der dritten Phase W des Antriebsstroms auf der weiteren Statoreinheit 700. Die Darstellung in Fig. 21 zeigt eine Abwicklung der Leiterstrukturen zum Leiten der ersten Phase U des Antriebsstroms, die der in Fig. 17 dargestellten Abwicklung entspricht. Die Darstellung in Fig. 22 zeigt eine Abwicklung der Leiterstrukturen zum Leiten der zweiten Phase V des Antriebsstroms, die der in Fig. 18 dargestellten Abwicklung entspricht. Die Darstellung in Fig. 23 zeigt eine Abwicklung der Leiterstrukturen zum Leiten der dritten Phase W des Antriebsstroms, die der in Fig. 19 dargestellten Abwicklung entspricht.

Soweit keine Unterscheide beschrieben werden, ist die erste Statorlage 104 der weiteren Statoreinheit 700 ausgebildet wie es für die erste Statorlage 104 der Statoreinheit 100 beschrieben wird. Insbesondere umfasst die erste Statorlage 104 der weiteren Statoreinheit 700 den weiteren ersten, den weiteren zweiten und den weiteren dritten Hinleiter 133, 143, 148, den weiteren ersten, den weiteren zweiten und den weiteren dritten Rückleiter 134, 144, 149, sowie den weiteren ersten Horizontalverbindungsleiter 45.

Soweit keine Unterscheide beschrieben werden, ist die zweite Statorlage 105 der weiteren Statoreinheit 700 ausgebildet wie es für die zweite Statorlage 105 der Statoreinheit 100 beschrieben wird. Insbesondere umfasst die zweite Statorlage 105 der weiteren Statoreinheit 700 den dritten Horizontalverbindungsleiter 47, den vierten Horizontalverbindungsleiter 48, den sechsten Horizontalverbindungsleiter 50, sowie den siebten Horizontalverbindungsleiter 51.

Soweit keine Unterscheide beschrieben werden, ist die dritte Statorlage 106 der weiteren Statoreinheit 700 ausgebildet wie es für die dritte Statorlage 106 der Statoreinheit 100 beschrieben wird. Insbesondere umfasst die dritte Statorlage 106 der weiteren Statoreinheit 700 den dritten Horizontalverbindungsleiter 43, den fünften Horizontalverbindungsleiter 49, sowie den Sternpunkt 157 der ersten Dreiphasensysteme 150.

Soweit keine Unterscheide beschrieben werden, ist die vierte Statorlage 107 der weiteren Statoreinheit 700 ausgebildet wie es für die vierte Statorlage 107 der Statoreinheit 100 beschrieben wird. Insbesondere umfasst die vierte Statorlage 107 der weiteren Statoreinheit 700 den ersten, den zweiten und den dritten Hinleiter 131, 141, 146, den ersten, den zweiten und den dritten Rückleiter 132, 142, 147, sowie den ersten und zweiten Horizontalverbindungsleiter 41, 42.

Wie in **Fig. 21** dargestellt ist, ist der weitere erste Hinleiter 133 an seinem ersten Ende in der ersten Statorlage 104 mit der an der ersten Seite 152 des ersten Dreiphasensystems 150 angeordneten ersten Anschlussstruktur 91 zur Einspeisung der ersten Phase U elektrisch leitend verbunden. Der erste Hinleiter 133 ist in der ersten Statorlage 104 an seinem zweiten Ende über den an der zweiten Seite 158 des ersten Dreiphasensystems 150 angeordneten weiteren ersten Horizontalverbindungsleiter 45 mit dem weiteren ersten Rückleiter 134 an dessen zweitem Ende verbunden. Der weitere zweite Rückleiter 134 ist an seinem ersten Ende in der ersten Statorlage 104 mit dem an der ersten Seite 152 des ersten Dreiphasensystems 150 angeordneten achten Vertikalverbindungsleiter 68 elektrisch leitend verbunden. Der achte Vertikalverbindungsleiter 68 ist in der zweiten Statorlage 105 mit dem an der ersten Seite 152 des ersten Dreiphasensystems 150 angeordneten vierten Horizontalverbindungsleiter 48 elektrisch leitend verbunden.

Die weitere Statoreinheit 700 weist in der sechsten Statorlage 771, der siebten Statorlage 772, der zehnten Statorlage 775 und der elften Statorlage 776 jeweils einen zusätzlichen ersten Hinleiter 135, einen zusätzlichen ersten Rückleiter 136 und einen zusätzlichen ersten Horizontalverbindungsleiter 52 zum Leiten der ersten Phase U auf. Die zusätzlichen ersten Hinleiter 135 sind ausgebildet wie es für den ersten Hinleiter 131 der vierten Statorlage 107 beschrieben wird, die zusätzlichen ersten Rückleiter 135 sind ausgebildet, wie es für den ersten Rückleiter 132 der vierten Statorlage 107 beschrieben wird, und die zusätzlichen ersten Horizontalverbindungsleiter 52 sind ausgebildet, wie es für den ersten Horizontalverbindungsleiter 41 der vierten Statorlage 107 beschrieben wird.

Die zusätzlichen ersten Hinleiter 135 sind an ihrem zweiten Ende und in ihrer jeweiligen Statorlage 771, 772, 775, 776 jeweils über einen der an der zweiten Seite 158 des ersten Dreiphasensystems 150 angeordneten zusätzlichen ersten Horizontalverbindungsleiter 52 mit dem zusätzlichen ersten Rückleiter 136 elektrisch leitend verbunden.

Die zusätzlichen ersten Rückleiter 136 sind an ihrem ersten Ende und in ihrer jeweiligen Statorlage 771, 772, 775, 776 jeweils mit einem an der ersten Seite 152 des ersten Dreiphasensystems 150 angeordneten und als Nachbarlagenverbinder ausgebildeten zusätzlichen vierten Vertikalverbindungsleiter 84 elektrisch leitend verbunden. Soweit keine Unterschiede beschrieben werden, sind die zusätzlichen vierten Vertikalverbindungsleiter 84 ausgebildet, wie es für den vierten Vertikalverbindungsleiter 64 beschrieben wird.

Die zusätzlichen vierten Vertikalverbindungsleiter 84 sind in der Nachbarstatorlage der betreffenden Statorlage 771, 772, 775, 776 jeweils mit einem zusätzlichen vierten Horizontalverbindungsleiter 55 elektrisch leitend verbunden. Soweit keine Unterschiede beschrieben werden, sind die zusätzlichen vierten Horizontalverbindungsleiter 55 ausgebildet, wie es für den vierten Horizontalverbindungsleiter 48 beschrieben wird.

Der in der fünften Statorlage 770 angeordnete zusätzliche vierte Horizontalverbindungsleiter 55 ist über den zwischen der fünften und der sechsten Statorlage 770, 771 als Durchgangsverbinder durch die zweite Trägerplatte 730 ausgebildeten zusätzlichen vierten Vertikalverbindungsleiter 84 elektrisch leitend mit dem ersten Ende des zusätzlichen ersten Rückleiters 136 der sechsten Statorlage 771 verbunden. Der in der achten Statorlage 773 angeordnete zusätzliche vierte Horizontalverbindungsleiter 55 ist über den zwischen der siebten und der achten Statorlage 772, 773 als Durchgangsverbinder durch die erste weitere Trägerplatte 756 ausgebildeten zusätzlichen vierten Vertikalverbindungsleiter 84 elektrisch leitend mit dem ersten Ende des zusätzlichen ersten Rückleiters 136 der siebten Statorlage 772 verbunden.

Der in der neunten Statorlage 774 angeordnete zusätzliche vierte Horizontalverbindungsleiter 55 ist über den zwischen der neunten und der zehnten Statorlage 774, 775 als Durchgangsverbinder durch die zweite weitere Trägerplatte 757 ausgebildeten zusätzlichen vierten Vertikalverbindungsleiter 84 elektrisch leitend mit dem ersten Ende des zusätzlichen ersten Rückleiters 136 der zehnten Statorlage 775 verbunden. Der in der zwölften Statorlage 777 angeordnete zusätzliche vierte Horizontalverbindungsleiter 55 ist über den zwischen der elften und der zwölften Statorlage 776, 777 als Durchgangsverbinder durch die dritte weitere Trägerplatte 758 ausgebildeten zusätzlichen vierten Vertikalverbindungsleiter 84 elektrisch leitend mit dem ersten Ende des zusätzlichen ersten Rückleiters 136 der elften Statorlage 776 verbunden.

Der in der dritten Statorlage 106 angeordnete Horizontalverbindungsleiter des Sternpunkts 157 des ersten Dreiphasensystems 150 ist über den zwischen der dritten und der vierten Statorlage 106, 107 als Durchgangsverbinder durch die vierte weitere Trägerplatte 758 ausgebildeten vierten Vertikalverbindungsleiter 64 elektrisch leitend mit dem ersten Ende des ersten Rückleiters 132 der vierten Statorlage 104 verbunden.

Die weitere Statoreinheit 700 umfasst vier zusätzliche dritte Vertikalverbindungsleiter 83. Die zusätzlichen dritten Vertikalverbindungsleiter 83 sind als Durchgangsverbinder ausgebildet und an der ersten Seite 152 des ersten Dreiphasensystems 150 angeordnet. Soweit keine Unterschiede beschrieben werden, sind die zusätzlichen dritten Vertikalverbindungsleiter 83 ausgebildet, wie es für den dritten Vertikalverbindungsleiter 63 beschrieben wird.

Die zusätzlichen ersten Hinleiter 135 sind an ihrem ersten Ende und in ihrer Statorlage 771, 772, 775, 776 jeweils mit einem der zusätzlichen dritten Vertikalverbindungsleiter 83 elektrisch leitend verbunden. Über die zusätzlichen dritten Vertikalverbindungsleiter 83 sind die zusätzlichen ersten Hinleiter 135 an ihrem ersten Ende jeweils mit der ersten Anschlussstruktur 91 elektrisch leitend verbunden. Insbesondere sind die zusätzlichen ersten Hinleiter 135 einer Statorlage 771, 772, 775, 776, 107 an ihren ersten Enden über die zusätzlichen dritten Vertikalverbindungsleiter 83 jeweils mit dem weiteren ersten Hinleiter 133, den zusätzlichen ersten Hinleitern 135, dem weiteren ersten Rückleiter 134 und den zusätzlichen ersten Rückleitern 136 der über der betreffenden Statorlage 771, 772, 775, 776, 107 angeordneten nächsten Statorlängslagen 710 verbunden. Insbesondere sind die zusätzlichen ersten Hinleiter 135 einer jeweiligen Statorlage 771, 772, 775, 776, 107 über die zusätzlichen dritten Vertikalverbindungsleiter 83 jeweils mit allen Hinleitern und allen Rückleitern der ersten Phase U, die in den über der betreffenden Statorlage 771, 772, 775, 776, 107 angeordneten Statorlängslagen 710 angeordnet sind, verbunden.

Einer der zusätzlichen dritten Vertikalverbindungsleiter 83 ist in der elften Statorlage 776 mit dem dortigen zusätzlichen ersten Hinleiter 135 und in der neunten Statorlage 774 mit dem dortigen zusätzlichen vierten Horizontalverbindungsleiter 55 verbunden. Einer der zusätzlichen dritten Vertikalverbindungsleiter 83 ist in der zehnten Statorlage 775 mit dem dortigen zusätzlichen ersten Hinleiter 135 und in der achten Statorlage 773 mit dem dortigen zusätzlichen vierten Horizontalverbindungsleiter 55 verbunden. Einer der zusätzlichen dritten Vertikalverbindungsleiter 83 ist in der siebten Statorlage 772 mit dem dortigen zusätzlichen ersten Hinleiter 135 und in der fünften Statorlage 770 mit dem dortigen zusätzlichen vierten Horizontalverbindungsleiter 55 verbunden.

Einer der zusätzlichen dritten Vertikalverbindungsleiter 83 ist in der sechsten Statorlage 771 mit dem dortigen zusätzlichen ersten Hinleiter 135 und in der zweiten Statorlage 105 mit dem dortigen vierten Horizontalverbindungsleiter 48 verbunden. Bei der weiteren Statoreinheit 700 ist der erste Hinleiter 131 in der vierten Statorlage 107 mit dem dritten Vertikalverbindungsleiter 63 elektrisch leitend verbunden und der dritte Vertikalverbindungsleiter 63 ist in der zwölften Statorlage 777 mit dem dortigen zusätzlichen vierten Horizontalverbindungsleiter 55 elektrisch leitend verbunden.

Wie bei der Statoreinheit 100, ist bei der weiteren Statoreinheit 700 der vierte Horizontalverbindungsleiter 48 der zweiten Statorlage 105 mit dem an der ersten Seite 152 des ersten Dreiphasensystems 150 angeordneten dritten Vertikalverbindungsleiter 63 elektrisch leitend verbunden. Anders als bei der Statoreinheit 100, ist bei der weiteren Statoreinheit 700 der vierte Horizontalverbindungsleiter 48 nicht direkt und in der zweiten Statorlage 105 mit dem dritten Vertikalverbindungsleiter 63 verbunden. Der vierte Horizontalverbindungsleiter 48 ist stattdessen über die zusätzlichen dritten Vertikalverbindungsleiter 83, die zusätzlichen ersten Hin- und Rückleiter 135, 136, die zusätzlichen ersten Horizontalverbindungsleiter 52, die zusätzlichen vierten Vertikalverbindungsleiter 84 und die zusätzlichen vierten Horizontalverbindungsleiter 55 mit dem dritten Vertikalverbindungsleiter 63 elektrisch leitend verbunden.

Bei den Statoreinheiten 100, 700 sind in jeder Statorlängslage 710 die Hinleiter 131, 133, 135 der ersten Phase U jeweils über die in der betreffenden Statorlängslage 710 und an der zweiten Seite 158 des ersten Dreiphasensystems 150 angeordneten Horizontalverbindungsleiter 41, 45, 52 mit den Rückleitern 132, 134, 135 der ersten Phase U an deren zweitem Ende elektrisch leitend in Reihe geschaltet. Mit Ausnahme der Anschlussstatorlage, sind die Hinleiter 131, 133, 135 der ersten Phase U an ihrem ersten Ende in jeder Statorlängslage 710 mit einem an der ersten Seite 152 des ersten Dreiphasensystems 150 angeordneten und als Durchgangsverbinder ausgebildeten Vertikalverbindungsleiter 63, 83 elektrisch leitend verbunden. Über die Vertikalverbindungsleiter 63, 83 sind die Hinleiter 131, 133, 135 der ersten Phase U mit einem als Längsverbinder ausgebildeten Horizontalverbindungsleiter 48, 55 der in der dritten Richtung 15 übernächsten Statorschräglage 711 elektrisch leitend verbunden. Über die Vertikalverbindungsleiter 63, 83 sind die Hinleiter 131, 133, 135 der ersten Phase U mit der ersten Anschlussstruktur 91 zur Einspeisung der ersten Phase U elektrisch leitend verbunden.

Bei den Statoreinheiten 100, 700 sind in jeder Statorlängslage 710 die Rückleiter 131, 133, 135 der ersten Phase U an ihrem ersten Ende jeweils mit einem als Nachbarlagenverbinder ausgebildeten und an der ersten Seite 152 des ersten Dreiphasensystems 150 angeordneten Vertikalverbindungsleiter 64, 68, 84 elektrisch leitend verbunden. Über die Vertikalverbindungsleiter 64, 68, 84 sind die Rückleiter 131, 133, 135 der ersten Phase U mit einem in der als Statorschräglage 711 ausgebildeten Nachbarstatorlage der betreffenden Statorlängslage 710 und an der ersten Seite 152 des ersten Dreiphasensystems 150 angeordneten Horizontalverbindungsleiter 48, 55 elektrisch leitend verbunden. Über die Vertikalverbindungsleiter 64, 68, 84 sind die Rückleiter 131, 133, 135 der ersten Phase U mit dem Sternpunkt 157 des ersten Dreiphasensystems 150 elektrisch leitend verbunden. Dabei können die Rückleiter 131, 133, 135 der ersten Phase U, wie dargestellt, außer über die Vertikalverbindungsleiter 64, 68, 84 über weitere Leiterstrukturen mit dem Sternpunkt 157 des ersten Dreiphasensystems 150 elektrisch leitend verbunden sein.

Insbesondere sind die zusätzlichen ersten Rückleiter 136 an ihrem ersten Ende jeweils über die zusätzlichen vierten Vertikalverbindungsleiter 84 mit dem Sternpunkt 157 des ersten Dreiphasensystems 150 elektrisch leitend verbunden. Dabei können die zusätzlichen ersten Rückleiter 136 außer über die zusätzlichen vierten Vertikalverbindungsleiter 84 über weitere Leiterstrukturen mit dem Sternpunkt 157 des ersten Dreiphasensystems 150 elektrisch leitend verbunden sein.

Wie in **Fig. 22** dargestellt ist, ist bei der weiteren Statoreinheit 700 der weitere zweite Hinleiter 143 an seinem ersten Ende in der ersten Statorlage 104 mit der an der ersten Seite 152 des ersten Dreiphasensystems 150 angeordneten zweiten Anschlussstruktur 92 zur Einspeisung der zweiten Phase V elektrisch leitend verbunden. Der weitere zweite Hinleiter 143 ist an seinem zweiten Ende in der ersten Statorlage 104 mit der an der zweiten Seite 158 des ersten Dreiphasensystems 150 angeordneten und als Durchgangsverbinder ausgebildeten neunten Vertikalverbindungsstruktur 69 elektrisch leitend verbunden.

Die weitere Statoreinheit 700 weist in der sechsten Statorlage 771, der siebten Statorlage 772, der zehnten Statorlage 775 und der elften Statorlage 776 jeweils einen zusätzlichen zweiten Hinleiter 137, einen zusätzlichen zweiten Rückleiter 138 und einen zusätzlichen zweiten Horizontalverbindungsleiter 53 zum Leiten der zweiten Phase V auf. Die zusätzlichen zweiten Hinleiter 137 sind ausgebildet wie es für den zweiten Hinleiter 141 der vierten Statorlage 107 beschrieben wird, die zusätzlichen zweiten Rückleiter 138 sind ausgebildet, wie es für den zweiten Rückleiter 142 der vierten Statorlage 107 beschrieben wird, und die zusätzlichen zweiten Horizontalverbindungsleiter 53 sind ausgebildet, wie es für den zweiten Horizontalverbindungsleiter 42 der vierten Statorlage 107 beschrieben wird.

Die zusätzlichen zweiten Hinleiter 137 sind an ihrem ersten Ende und in ihrer jeweiligen Statorlage 771, 772, 775, 776 jeweils über einen der an der ersten Seite 152 des ersten Dreiphasensystems 150 angeordneten zusätzlichen zweiten Horizontalverbindungsleiter 53 mit dem zusätzlichen zweiten Rückleiter 138 elektrisch leitend verbunden.

Die zusätzlichen zweiten Rückleiter 138 sind an ihrem zweiten Ende und in ihrer jeweiligen Statorlage 771, 772, 775, 776 jeweils mit einem an der zweiten Seite 158 des ersten Dreiphasensystems 150 angeordneten und als Nachbarlagenverbinder ausgebildeten zusätzlichen sechsten Vertikalverbindungsleiter 86 elektrisch leitend verbunden. Soweit keine Unterschiede beschrieben werden, sind die zusätzlichen sechsten Vertikalverbindungsleiter 86 ausgebildet, wie es für den sechsten Vertikalverbindungsleiter 66 beschrieben wird.

Die zusätzlichen sechsten Vertikalverbindungsleiter 86 sind in der Nachbarstatorlage der betreffenden Statorlage 771, 772, 775, 776 jeweils mit einem zusätzlichen fünften Horizontalverbindungsleiter 56 elektrisch leitend verbunden. Soweit keine Unterschiede beschrieben werden, sind die zusätzlichen fünften Horizontalverbindungsleiter 56 ausgebildet, wie es für den fünften Horizontalverbindungsleiter 49 beschrieben wird.

Der in der fünften Statorlage 770 angeordnete zusätzliche fünfte Horizontalverbindungsleiter 56 ist über den zwischen der fünften und der sechsten Statorlage 770, 771 als Durchgangsverbinder durch die zweite Trägerplatte 730 ausgebildeten zusätzlichen sechsten Vertikalverbindungsleiter 86 elektrisch leitend mit dem zweiten Ende des zusätzlichen zweiten Rückleiters 138 der sechsten Statorlage 771 verbunden. Der in der achten Statorlage 773 angeordnete zusätzliche fünfte Horizontalverbindungsleiter 56 ist über den zwischen der siebten und der achten Statorlage 772, 773 als Durchgangsverbinder durch die erste weitere Trägerplatte 756 ausgebildeten zusätzlichen sechsten Vertikalverbindungsleiter 86 elektrisch leitend mit dem zweiten Ende des zusätzlichen zweiten Rückleiters 138 der siebten Statorlage 772 verbunden.

Der in der neunten Statorlage 774 angeordnete zusätzliche fünfte Horizontalverbindungsleiter 56 ist über den zwischen der neunten und der zehnten Statorlage 774, 775 als Durchgangsverbinder durch die zweite weitere Trägerplatte 757 ausgebildeten zusätzlichen sechsten Vertikalverbindungsleiter 86 elektrisch leitend mit dem zweiten Ende des zusätzlichen zweiten Rückleiters 138 der zehnten Statorlage 775 verbunden. Der in der zwölften Statorlage 777 angeordnete zusätzliche fünfte Horizontalverbindungsleiter 56 ist über den zwischen der elften und der zwölften Statorlage 776, 777 als Durchgangsverbinder durch die dritte weitere Trägerplatte 758 ausgebildeten zusätzlichen sechsten Vertikalverbindungsleiter 86 elektrisch leitend mit dem zweiten Ende des zusätzlichen zweiten Rückleiters 138 der elften Statorlage 776 verbunden.

Der in der dritten Statorlage 106 angeordnete fünfte Horizontalverbindungsleiter 49 ist über den zwischen der dritten und der vierten Statorlage 106, 107 als Durchgangsverbinder durch die vierte weitere Trägerplatte 758 ausgebildeten sechsten Vertikalverbindungsleiter 66 elektrisch leitend mit dem ersten Ende des zweiten Rückleiters 142 der vierten Statorlage 104 verbunden.

Die weitere Statoreinheit 700 umfasst vier zusätzliche fünfte Vertikalverbindungsleiter 85. Die zusätzlichen fünften Vertikalverbindungsleiter 85 sind als Durchgangsverbinder ausgebildet und an der zweiten Seite 158 des ersten Dreiphasensystems 150 angeordnet. Soweit keine Unterschiede beschrieben werden, sind die zusätzlichen fünften Vertikalverbindungsleiter 85 ausgebildet, wie es für den fünften Vertikalverbindungsleiter 65 beschrieben wird.

Die zusätzlichen zweiten Hinleiter 137 sind an ihrem zweiten Ende und in ihrer Statorlage 771, 772, 775, 776 jeweils mit einem der zusätzlichen fünften Vertikalverbindungsleiter 85 elektrisch leitend verbunden. Über die zusätzlichen fünften Vertikalverbindungsleiter 85 sind die zusätzlichen zweiten Hinleiter 137 an ihrem zweiten Ende jeweils mit dem Sternpunkt 157 des ersten Dreiphasensystems 150 elektrisch leitend verbunden. Insbesondere sind die zusätzlichen zweiten Hinleiter 137 einer Statorlage 771, 772, 775, 776 über die zusätzlichen fünften Vertikalverbindungsleiter 85 jeweils mit dem zweiten Hinleiter 142, den zusätzlichen zweiten Hinleitern 137, dem zweiten Rückleiter 141 und den zusätzlichen zweiten Rückleitern 138 der unter der betreffenden Statorlage 771, 772, 775, 776 angeordneten Statorlängslagen 710 verbunden. Insbesondere sind die zusätzlichen zweiten Hinleiter 137 einer jeweiligen Statorlage 771, 772, 775, 776 über die zusätzlichen fünften Vertikalverbindungsleiter 85 jeweils mit allen Hinleitern und allen Rückleitern der zweiten Phase V, die in den unter der betreffenden Statorlage 771, 772, 775, 776, 104 angeordneten Statorlängslagen 710 angeordnet sind, verbunden.

Einer der zusätzlichen fünften Vertikalverbindungsleiter 85 ist in der elften Statorlage 776 mit dem dortigen zusätzlichen zweiten Hinleiter 137 und in der dritten Statorlage 106 mit dem dortigen fünften Horizontalverbindungsleiter 49 verbunden. Einer der zusätzlichen fünften Vertikalverbindungsleiter 85 ist in der zehnten Statorlage 775 mit dem dortigen zusätzlichen zweiten Hinleiter 137 und in der zwölften Statorlage 777 mit dem dortigen zusätzlichen fünften Horizontalverbindungsleiter 56 verbunden. Einer der zusätzlichen fünften Vertikalverbindungsleiter 85 ist in der siebten Statorlage 772 mit dem dortigen zusätzlichen zweiten Hinleiter 137 und in der neunten Statorlage 774 mit dem dortigen zusätzlichen vierten Horizontalverbindungsleiter 55 verbunden.

Einer der zusätzlichen fünften Vertikalverbindungsleiter 85 ist in der sechsten Statorlage 771 mit dem dortigen zusätzlichen zweiten Hinleiter 137 und in der achten Statorlage 773 mit dem dortigen zusätzlichen fünften Horizontalverbindungsleiter 56 verbunden. Bei der weiteren Statoreinheit 700 ist der weitere zweite Hinleiter 143 in der ersten Statorlage 107 mit dem neunten Vertikalverbindungsleiter 69 elektrisch leitend verbunden und der neunte Vertikalverbindungsleiter 69 ist in der fünften Statorlage 770 mit dem dortigen zusätzlichen fünften Horizontalverbindungsleiter 56 elektrisch leitend verbunden.

Wie bei der Statoreinheit 100, ist bei der weiteren Statoreinheit 700 der zweite Rückleiter 142 der vierten Statorlage 107 über den sechsten Vertikalverbindungsleiter 66 elektrisch leitend mit der zweiten Anschlussstruktur 92 verbunden. Dabei kann der zweite Rückleiter 142 der vierten Statorlage 107, wie dargestellt, außer über den sechsten Vertikalverbindungsleiter 66 über weitere Leiterstrukturen, die zwischen dem sechsten Vertikalverbindungsleiter 66 und der zweiten Anschlussstruktur 92 angeordnet sind, mit der zweiten Anschlussstruktur 92 verbunden sein.

Wie bei der Statoreinheit 100, ist bei der weiteren Statoreinheit 700 der zweite Hinleiter 141 der vierten Statorlage 107 in der vierten Statorlage 107 mit dem an der zweiten Seite 158 des Dreiphasensystems 150 angeordneten fünften Vertikalverbindungsleiter 65 elektrisch leitend verbunden. Über den fünften Vertikalverbindungsleiter 65 ist der zweite Hinleiter 141 mit dem Sternpunkt 157 des ersten Dreiphasensystems 150 elektrisch leitend verbunden. Der fünfte Vertikalverbindungsleiter 65 ist als ein Durchgangsverbinder ausgebildet. Dabei kann der zweite Hinleiter 141, wie dargestellt, außer über den fünften Vertikalverbindungsleiter 65 über weitere Leiterstrukturen, die zwischen dem fünften Vertikalverbindungsleiter 65 und dem Sternpunkt 157 angeordnet sind, mit dem Sternpunkt 157 verbunden sein.

Wie bei der Statoreinheit 100, ist bei der weiteren Statoreinheit 700 der weitere zweite Rückleiter 144 in der ersten Statorlage 104 an der zweiten Seite 158 des Dreiphasensystems 150 mit dem fünften Vertikalverbindungsleiter 65 elektrisch leitend verbunden. Wie bei der Statoreinheit 100, ist bei der weiteren Statoreinheit 700 der weitere zweite Rückleiter 144 in der ersten Statorlage 104 an der zweiten Seite 158 des Dreiphasensystems 150 über den zehnten Vertikalverbindungsleiter 70 und den sechsten Horizontalverbindungsleiter 50 mit dem fünften Vertikalverbindungsleiter 65 elektrisch leitend verbunden.

Wie bei der Statoreinheit 100, ist bei der weiteren Statoreinheit 700 der weitere zweite Rückleiter 144 an der ersten Seite 152 des Dreiphasensystems 150 in der ersten Statorlage 104 mit dem siebten Vertikalverbindungsleiter 67 und über den siebten Vertikalverbindungsleiter 67 mit dem Sternpunkt 157 des ersten Dreiphasensystems 150 elektrisch leitend verbunden.

Bei den Statoreinheiten 100, 700 sind, mit Ausnahme der Anschlussstatorlage, in jeder Statorlängslage 710 die Hinleiter 137, 141, 143 der zweiten Phase V jeweils über die in der betreffenden Statorlängslage 710 an der ersten Seite 152 des ersten Dreiphasensystems 150 angeordneten Horizontalverbindungsleiter 42, 53 mit den Rückleitern 138, 142, 144 der zweiten Phase V an deren erstem Ende elektrisch leitend in Reihe geschaltet. Die Hinleiter 137, 141, 143 der zweiten Phase V sind an ihrem zweiten Ende in jeder Statorlängslage 710 mit einem an der ersten Seite 152 des ersten Dreiphasensystems 150 angeordneten und als Durchgangsverbinder ausgebildeten Vertikalverbindungsleiter 65, 69, 85 elektrisch leitend verbunden.

Mit Ausnahme der vierten Statorlage 107 sind die Hinleiter 137, 143 der zweiten Phase V über die Vertikalverbindungsleiter 65, 69, 85 mit einem als Längsverbinder ausgebildeten Horizontalverbindungsleiter 49, 56 der entgegen der dritten Richtung 15 übernächsten Statorschräglage 711 elektrisch leitend verbunden. Über die Vertikalverbindungsleiter 65, 69, 85 sind die Hinleiter 137, 141, 143 der zweiten Phase V mit dem Sternpunkt 157 des ersten Dreiphasensystems 150 elektrisch leitend verbunden. Dabei können die Hinleiter 137, 141, 143 der zweiten Phase V, wie dargestellt, außer über die Vertikalverbindungsleiter 65, 69, 85 über weitere Leiterstrukturen, die zwischen den Hinleitern 137, 141, 143 und dem Sternpunkt 157 des ersten Dreiphasensystems 150 angeordnet sind, mit dem Sternpunkt 157 des ersten Dreiphasensystems 150 verbunden sein.

Bei den Statoreinheiten 100, 700 sind in jeder Statorlängslage 710 die Rückleiter 138, 142, 144 der zweiten Phase V an ihrem zweiten Ende jeweils mit einem als Nachbarlagenverbinder ausgebildeten und an der zweiten Seite 158 des ersten Dreiphasensystems 150 angeordneten Vertikalverbindungsleiter 66, 70, 86 elektrisch leitend verbunden. Über die Vertikalverbindungsleiter 66, 70, 86 sind die Rückleiter 138, 142, 144 der zweiten Phase V mit einem in der als Statorschräglage 711 ausgebildeten Nachbarstatorlage der betreffenden Statorlängslage 710 und an der zweiten Seite 158 des ersten Dreiphasensystems 150 angeordneten Horizontalverbindungsleiter 49, 50, 56 elektrisch leitend verbunden. Über die Vertikalverbindungsleiter 66, 70, 86 sind die Rückleiter 138, 142, 144 der zweiten Phase V mit der zweiten Anschlussstruktur 92 zur Einspeisung der zweiten Phase V elektrisch leitend verbunden. Dabei können die Rückleiter 138, 142, 144 der zweiten Phase V, wie dargestellt, außer über die Vertikalverbindungsleiter 66, 70, 86 über weitere Leiterstrukturen, die zwischen den Rückleitern 138, 142, 144 und der zweiten Anschlussstruktur 92 angeordnet sind, mit der zweiten Anschlussstruktur 92 verbunden sein.

Insbesondere sind die zusätzlichen zweiten Rückleiter 138 jeweils an ihrem zweiten Ende über die zusätzlichen sechsten Vertikalverbindungsleiter 86 mit der zweiten Anschlussstruktur 92 des ersten Dreiphasensystems 150 elektrisch leitend verbunden. Dabei können die zusätzlichen zweiten Rückleiter 138 der zweiten Phase V, wie dargestellt, außer über die zusätzlichen sechsten Vertikalverbindungsleiter 86 über weitere Leiterstrukturen, die zwischen den zusätzlichen zweiten Rückleitern 138 und der zweiten Anschlussstruktur 92 angeordnet sind, mit der zweiten Anschlussstruktur 92 verbunden sein.

Wie in **Fig. 23** dargestellt ist, ist bei der weiteren Statoreinheit 700 der weitere dritte Hinleiter 148 an seinem ersten Ende in der ersten Statorlage 104 mit der an der ersten Seite 152 des ersten Dreiphasensystems 150 angeordneten dritten Anschlussstruktur 93 zur Einspeisung der dritten Phase W elektrisch leitend verbunden. Der weitere dritte Hinleiter 148 ist an seinem zweiten Ende in der ersten Statorlage 104 mit der an der zweiten Seite 158 des ersten Dreiphasensystems 150 angeordneten und als Nachbarlagenverbinder ausgebildeten weiteren ersten Vertikalverbindungsstruktur 71 elektrisch leitend verbunden.

Die weitere erste Vertikalverbindungsstruktur 71 ist in der zweiten Statorlage 105 mit dem an der zweiten Seite 158 des ersten Dreiphasensystems 150 angeordneten weiteren dritten Horizontalverbindungsleiter 47 elektrisch leitend verbunden. Der weitere dritte Horizontalverbindungsleiter 47 ist in der zweiten Statorlage 105 mit dem an der zweiten Seite 158 des ersten Dreiphasensystems 150 angeordneten und als Nachbarlagenverbinder ausgebildeten weiteren zweiten Vertikalverbindungsleiter 72 elektrisch leitend verbunden. Der weitere zweite Vertikalverbindungsleiter 72 ist in der ersten Statorlage 104 mit dem weiteren dritten Rückleiter 149 elektrisch leitend verbunden. Damit sind an der zweiten Seite 158 des ersten Dreiphasensystems 150 der weitere dritte Hinleiter 148 und der weitere dritte Rückleiter 149 an ihren zweiten Enden elektrisch leitend miteinander verbunden.

Die weitere Statoreinheit 700 weist in der sechsten Statorlage 771, der siebten Statorlage 772, der zehnten Statorlage 775 und der elften Statorlage 776 jeweils einen zusätzlichen dritten Hinleiter 139 und einen zusätzlichen dritten Rückleiter 140 zum Leiten der dritten Phase W auf. Die zusätzlichen dritten Hinleiter 139 sind ausgebildet wie es für den dritten Hinleiter 146 der vierten Statorlage 107 beschrieben wird und die zusätzlichen dritten Rückleiter 140 sind ausgebildet, wie es für den dritten Rückleiter 147 der vierten Statorlage 107 beschrieben wird.

Die weitere Statoreinheit 700 weist in der fünften Statorlage 770, in der achten Statorlage 773, in der neunten Statorlage 774 und in der zwölften Statorlage 777 jeweils einen zusätzlichen dritten Horizontalverbindungsleiter 54 und einen zusätzlichen siebten Horizontalverbindungsleiter 58 auf. Die zusätzlichen dritten Horizontalverbindungsleiter 54 sind ausgebildet, wie es für den dritten Horizontalverbindungsleiter 43 beschrieben wird. Insbesondere sind die zusätzlichen dritten Horizontalverbindungsleiter 54 an der zweiten Seite 158 des ersten Dreiphasensystems 150 angeordnet und als entlang der zweiten Richtung 14 erstreckte Längsverbinder ausgebildet. Die zusätzlichen siebten Horizontalverbindungsleiter 58 sind ausgebildet, wie es für den siebten Horizontalverbindungsleiter 51 beschrieben wird. Insbesondere sind die zusätzlichen siebten Horizontalverbindungsleiter 51 an der ersten Seite 158 des ersten Dreiphasensystems 150 angeordnet und als entlang der zweiten Richtung 14 erstreckte Längsverbinder ausgebildet.

Die zusätzlichen dritten Hinleiter 139 sind an ihrem zweiten Ende und in ihrer jeweiligen Statorlage 771, 772, 775, 776 jeweils an einen der zusätzlichen ersten Vertikalverbindungsleiter 81 angeschlossen. Die zusätzlichen dritten Rückleiter 140 sind an ihrem zweiten Ende und in ihrer jeweiligen Statorlage 771, 772, 775, 776 jeweils an einen der zusätzlichen zweiten Vertikalverbindungsleiter 82 angeschlossen. Die zusätzlichen dritten Horizontalverbindungsleiter 54 sind in ihrer jeweiligen Statorlage 770, 773, 774, 777 jeweils mit dem zusätzlichen ersten und zweiten Vertikalverbindungsleiter 81, 82 elektrisch leitend verbunden. Damit sind die zusätzlichen dritten Hinleiter 139 und die zusätzlichen dritten Rückleiter 140 an ihren zweiten Enden an der zweiten Seite 158 des ersten Dreiphasensystems 150 elektrisch leitend miteinander verbunden. Insbesondere sind die zusätzlichen dritten Hinleiter 139 und die zusätzlichen dritten Rückleiter 140 an ihren zweiten Enden an der zweiten Seite 158 des ersten Dreiphasensystems 150 über die in der Nachbarstatorlage der betreffenden zusätzlichen dritten Hin- und Rückleiter 139, 140 angeordneten dritten Horizontalverbindungsleiter 54 elektrisch leitend miteinander verbunden.

Die zusätzlichen dritten Hin- und Rückleiter 139, 140 der sechsten Statorlage 771 sind über den in der die Nachbarstatorlage der sechsten Statorlage 771 bildenden fünften Statorlage 770 angeordneten zusätzlichen dritten Horizontalverbindungsleiter 54 und über die als Nachbarlagenverbinder durch die zweite Trägerplatte 730 ausgebildeten zusätzlich ersten und zweiten Vertikalverbindungsleiter 81, 82 der zweiten Trägerplatte 730 elektrisch leitend miteinander verbunden. Die zusätzlichen dritten Hin- und Rückleiter 139, 140 der siebten Statorlage 772 sind über den in der die Nachbarstatorlage der siebten Statorlage 772 bildenden achten Statorlage 773 angeordneten zusätzlichen dritten Horizontalverbindungsleiter 54 und über die als Nachbarlagenverbinder durch die erste weitere Trägerplatte 753 ausgebildeten zusätzlich ersten und zweiten Vertikalverbindungsleiter 81, 82 der ersten weiteren Trägerplatte 753 elektrisch leitend miteinander verbunden.

Die zusätzlichen dritten Hin- und Rückleiter 139, 140 der zehnten Statorlage 775 sind über den in der die Nachbarstatorlage der zehnten Statorlage 775 bildenden neunten Statorlage 774 angeordneten zusätzlichen dritten Horizontalverbindungsleiter 54 und über die als Nachbarlagenverbinder durch die zweite weitere Trägerplatte 757 ausgebildeten zusätzlich ersten und zweiten Vertikalverbindungsleiter 81, 82 der zweiten weiteren Trägerplatte 757 elektrisch leitend miteinander verbunden. Die zusätzlichen dritten Hin- und Rückleiter 139, 140 der elften Statorlage 776 sind über den in der die Nachbarstatorlage der elften Statorlage 776 bildenden zwölften Statorlage 777 angeordneten zusätzlichen dritten Horizontalverbindungsleiter 54 und über die als Nachbarlagenverbinder durch die dritte weitere Trägerplatte 758 ausgebildeten zusätzlich ersten und zweiten Vertikalverbindungsleiter 81, 82 der dritten weiteren Trägerplatte 758 elektrisch leitend miteinander verbunden.

Die zusätzlichen dritten Rückleiter 140 sind an ihrem ersten Ende in ihrer jeweiligen Statorlage 771, 772, 775, 776 jeweils mit einem an der ersten Seite 152 des ersten Dreiphasensystems 150 angeordneten und als Nachbarlagenverbinder ausgebildeten zusätzlichen elften Vertikalverbindungsleiter 87 elektrisch leitend verbunden. Soweit keine Unterschiede beschrieben werden, sind die zusätzlichen elften Vertikalverbindungsleiter 87 ausgebildet, wie es für den elften Vertikalverbindungsleiter 74 beschrieben wird. Die zusätzlichen elften Vertikalverbindungsleiter 87 sind in der Nachbarstatorlage der betreffenden Statorlage 771, 772, 775, 776 jeweils mit einem der zusätzlichen siebten Horizontalverbindungsleiter 58 elektrisch leitend verbunden.

Der in der fünften Statorlage 770 angeordnete zusätzliche siebte Horizontalverbindungsleiter 58 ist über den zwischen der fünften und der sechsten Statorlage 770, 771 als Durchgangsverbinder durch die zweite Trägerplatte 730 ausgebildeten zusätzlichen elften Vertikalverbindungsleiter 87 elektrisch leitend mit dem ersten Ende des zusätzlichen dritten Rückleiters 140 der sechsten Statorlage 771 verbunden. Der in der achten Statorlage 773 angeordnete zusätzliche siebte Horizontalverbindungsleiter 58 ist über den zwischen der siebten und der achten Statorlage 772, 773 als Durchgangsverbinder durch die erste weitere Trägerplatte 756 ausgebildeten zusätzlichen elften Vertikalverbindungsleiter 87 elektrisch leitend mit dem ersten Ende des zusätzlichen dritten Rückleiters 136 der siebten Statorlage 772 verbunden.

Der in der neunten Statorlage 774 angeordnete zusätzliche siebte Horizontalverbindungsleiter 58 ist über den zwischen der neunten und der zehnten Statorlage 774, 775 als Durchgangsverbinder durch die zweite weitere Trägerplatte 757 ausgebildeten zusätzlichen elften Vertikalverbindungsleiter 87 elektrisch leitend mit dem ersten Ende des zusätzlichen dritten Rückleiters 140 der zehnten Statorlage 775 verbunden. Der in der zwölften Statorlage 777 angeordnete zusätzliche siebte Horizontalverbindungsleiter 58 ist über den zwischen der elften und der zwölften Statorlage 776, 777 als Durchgangsverbinder durch die dritte weitere Trägerplatte 758 ausgebildeten zusätzlichen elften Vertikalverbindungsleiter 87 elektrisch leitend mit dem ersten Ende des zusätzlichen dritten Rückleiters 140 der elften Statorlage 776 verbunden.

Der in der dritten Statorlage 106 angeordnete Horizontalverbindungsleiter des Sternpunkts 157 des ersten Dreiphasensystems 150 ist über den zwischen der dritten und der vierten Statorlage 106, 107 als Durchgangsverbinder durch die vierte weitere Trägerplatte 758 ausgebildeten elften Vertikalverbindungsleiter 74 elektrisch leitend mit dem ersten Ende des dritten Rückleiters 147 der vierten Statorlage 104 verbunden.

Die weitere Statoreinheit 700 umfasst vier zusätzliche zwölfte Vertikalverbindungsleiter 88. Die zusätzlichen zwölften Vertikalverbindungsleiter 88 sind als Durchgangsverbinder ausgebildet und an der ersten Seite 152 des ersten Dreiphasensystems 150 angeordnet. Soweit keine Unterschiede beschrieben werden, sind die zusätzlichen zwölften Vertikalverbindungsleiter 88 ausgebildet, wie es für den zwölften Vertikalverbindungsleiter 75 beschrieben wird.

Die zusätzlichen dritten Hinleiter 139 sind an ihrem ersten Ende in ihrer jeweiligen Statorlage 771, 772, 775, 776 jeweils mit einem der zusätzlichen zwölften Vertikalverbindungsleiter 88 elektrisch leitend verbunden. Über die zusätzlichen zwölften Vertikalverbindungsleiter 88 sind die zusätzlichen dritten Hinleiter 139 an ihrem ersten Ende jeweils mit der dritten Anschlussstruktur 93 elektrisch leitend verbunden. Dabei können die zusätzlichen dritten Hinleiter 139 der dritten Phase W, wie dargestellt, außer über die zusätzlichen zwölften Vertikalverbindungsleiter 88 über weitere Leiterstrukturen, die zwischen den zusätzlichen dritten Hinleitern 139 und der dritten Anschlussstruktur 93 angeordnet sind, mit der dritten Anschlussstruktur 93 verbunden sein.

Insbesondere sind die zusätzlichen dritten Hinleiter 139 einer jeweiligen Statorlage 771, 772, 775, 776, 107 über die zusätzlichen zwölften Vertikalverbindungsleiter 88 jeweils mit dem weiteren dritten Hinleiter 148, den zusätzlichen dritten Hinleitern 139, dem weiteren dritten Rückleiter 149 und den zusätzlichen dritten Rückleitern 140 der über der betreffenden Statorlage 771, 772, 775, 776, 107 angeordneten Statorlängslagen 710 verbunden. Insbesondere sind die zusätzlichen dritten Hinleiter 139 einer jeweiligen Statorlage 771, 772, 775, 776, 107 über die zusätzlichen zwölften Vertikalverbindungsleiter 88 jeweils mit allen Hinleitern und allen Rückleitern der dritten Phase W, die in den über der betreffenden Statorlage 771, 772, 775, 776, 107 angeordneten Statorlängslagen 710 angeordnet sind, verbunden.

Einer der zusätzlichen zwölften Vertikalverbindungsleiter 88 ist in der elften Statorlage 776 mit dem dortigen zusätzlichen dritten Hinleiter 139 und in der neunten Statorlage 774 mit dem dortigen zusätzlichen siebten Horizontalverbindungsleiter 58 verbunden. Einer der zusätzlichen zwölften Vertikalverbindungsleiter 88 ist in der zehnten Statorlage 775 mit dem dortigen zusätzlichen dritten Hinleiter 139 und in der achten Statorlage 773 mit dem dortigen zusätzlichen siebten Horizontalverbindungsleiter 58 verbunden. Einer der zusätzlichen zwölften Vertikalverbindungsleiter 88 ist in der siebten Statorlage 772 mit dem dortigen zusätzlichen dritten Hinleiter 139 und in der fünften Statorlage 770 mit dem dortigen zusätzlichen siebten Horizontalverbindungsleiter 58 verbunden.

Einer der zusätzlichen zwölften Vertikalverbindungsleiter 88 ist in der sechsten Statorlage 771 mit dem dortigen zusätzlichen dritten Hinleiter 139 und in der zweiten Statorlage 105 mit dem dortigen siebten Horizontalverbindungsleiter 51 verbunden. Bei der weiteren Statoreinheit 700 ist der dritte Hinleiter 146 in der vierten Statorlage 107 mit dem zwölften Vertikalverbindungsleiter 75 elektrisch leitend verbunden und der zwölfte Vertikalverbindungsleiter 75 ist in der zwölften Statorlage 777 mit dem dortigen zusätzlichen siebten Horizontalverbindungsleiter 58 elektrisch leitend verbunden.

Wie bei der Statoreinheit 100, ist bei der weiteren Statoreinheit 700 der siebte Horizontalverbindungsleiter 51 der zweiten Statorlage 105 mit dem an der ersten Seite 152 des ersten Dreiphasensystems 150 angeordneten zwölften Vertikalverbindungsleiter 75 elektrisch leitend verbunden. Anders als bei der Statoreinheit 100, ist bei der weiteren Statoreinheit 700 der siebte Horizontalverbindungsleiter 51 nicht direkt und in der zweiten Statorlage 105 mit dem zwölften Vertikalverbindungsleiter 75 verbunden. Der siebte Horizontalverbindungsleiter 51 ist stattdessen über die zusätzlichen zwölften Vertikalverbindungsleiter 88, die zusätzlichen dritten Hin- und Rückleiter 139, 140, die zusätzlichen ersten und zweiten Vertikalverbindungsleiter 81, 82, die zusätzlichen dritten Horizontalverbindungsleiter 54, die zusätzlichen elften Vertikalverbindungsleiter 87 und die zusätzlichen siebten Horizontalverbindungsleiter 58 mit dem zwölften Vertikalverbindungsleiter 75 elektrisch leitend verbunden.

Bei den Statoreinheiten 100, 700 sind in jeder Statorlängslage 710 die Hinleiter 139, 146, 148 der dritten Phase W jeweils über die in der Nachbarstatorlage der betreffenden Statorlängslage 710 an der zweiten Seite 158 des ersten Dreiphasensystems 150 angeordneten Horizontalverbindungsleiter 43, 47, 53 mit den Rückleitern 140, 147, 149 der dritten Phase W an deren zweitem Ende elektrisch leitend in Reihe geschaltet. Mit Ausnahme der Anschlussstatorlage, sind die Hinleiter 139, 146, 148 der dritten Phase W an ihrem ersten Ende in jeder Statorlängslage 710 mit einem an der ersten Seite 152 des ersten Dreiphasensystems 150 angeordneten und als Durchgangsverbinder ausgebildeten Vertikalverbindungsleiter 75, 88 elektrisch leitend verbunden. Über die Vertikalverbindungsleiter 75, 88 sind die Hinleiter 139, 146, 148 der dritten Phase W mit einem als Längsverbinder ausgebildeten Horizontalverbindungsleiter 51, 58 der in der dritten Richtung 15 übernächsten Statorschräglage 711 elektrisch leitend verbunden. Über die Horizontalverbindungsleiter 51, 58 sind die Hinleiter 139, 146, 148 der dritten Phase W mit der dritten Anschlussstruktur 93 zur Einspeisung der dritten Phase W elektrisch leitend verbunden. Dabei können die Hinleiter 139, 146, 148 der dritten Phase W, wie dargestellt, außer über die Horizontalverbindungsleiter 51, 58 über weitere Leiterstrukturen, die zwischen den Hinleitern 139, 146, 148 der dritten Phase W und der dritten Anschlussstruktur 93 angeordnet sind, mit der dritten Anschlussstruktur 93 verbunden sein.

Bei den Statoreinheiten 100, 700 sind in jeder Statorlängslage 710 die Rückleiter 140, 147, 149 der dritten Phase W an ihrem ersten Ende jeweils mit einem als Nachbarlagenverbinder ausgebildeten und an der ersten Seite 152 des ersten Dreiphasensystems 150 angeordneten Vertikalverbindungsleiter 74, 76, 87 elektrisch leitend verbunden. Über die Vertikalverbindungsleiter 74, 76, 87 sind die Rückleiter 140, 147, 149 der dritten Phase W mit einem in der als Statorschräglage 711 ausgebildeten Nachbarstatorlage der betreffenden Statorlängslage 710 und an der ersten Seite 152 des ersten Dreiphasensystems 150 angeordneten Horizontalverbindungsleiter 51, 58 elektrisch leitend verbunden. Über die Vertikalverbindungsleiter 74, 76, 87 sind die Rückleiter 140, 147, 149 der dritten Phase W mit dem Sternpunkt 157 des ersten Dreiphasensystems 150 elektrisch leitend verbunden. Dabei können die Rückleiter 140, 147, 149 der dritten Phase W, wie dargestellt, außer über die Vertikalverbindungsleiter 74, 76, 87 über weitere Leiterstrukturen, die zwischen den Rückleitern 140, 147, 149 der dritten Phase W und dem Sternpunkt 157 des ersten Dreiphasensystems 150 angeordnet sind, mit dem Sternpunkt 157 des ersten Dreiphasensystems 150 verbunden sein.

Insbesondere sind die zusätzlichen dritten Rückleiter 140 jeweils an ihrem ersten Ende über die zusätzlichen elften Vertikalverbindungsleiter 87 mit dem Sternpunkt 157 des ersten Dreiphasensystems 150 elektrisch leitend verbunden. Dabei können die zusätzlichen dritten Rückleiter 140, wie dargestellt, außer über die zusätzlichen elften Vertikalverbindungsleiter 87 über weitere Leiterstrukturen, die zwischen den zusätzlichen dritten Rückleitern 140 und dem Sternpunkt 157 des ersten Dreiphasensystems 150 angeordnet sind, mit dem Sternpunkt 157 des ersten Dreiphasensystems 150 verbunden sein.

Bei der weiteren Statoreinheit 700 können an der ersten Seite 152 des ersten Dreiphasensystems 150 der mit dem ersten Ende des weiteren ersten Rückleiters 134 verbundene achte Vertikalverbindungsleiter 68 und die mit dem ersten Ende der zusätzlichen ersten Rückleiter 136 verbundenen zusätzlichen vierten Vertikalverbindungsleiter 84 in der dritten Richtung 15 übereinander, insbesondere in der dritten Richtung 15 miteinander fluchtend, angeordnet sein. Außerdem können an der ersten Seite 152 des ersten Dreiphasensystems 150 der mit dem ersten Ende des weiteren dritten Rückleiters 149 verbundene dreizehnte Vertikalverbindungsleiter 76, die mit dem ersten Ende der zusätzlichen dritten Rückleiter 140 verbundenen zusätzlichen elften Vertikalverbindungsleiter 87 und der mit dem ersten Ende des dritten Rückleiter 147 verbundene elfte Vertikalverbindungsleiter in der dritten Richtung 15 übereinander, insbesondere in der dritten Richtung 15 miteinander fluchtend, angeordnet sein.

Bei der weiteren Statoreinheit 700 können an der zweiten Seite 152 des ersten Dreiphasensystems 150 der mit dem zweiten Ende des weiteren dritten Hinleiters 148 verbundene weitere erste Vertikalverbindungsleiter 71, die mit jeweils dem ersten Ende der zusätzlichen dritten Hinleiter 139 verbundenen zusätzlichen ersten Vertikalverbindungsleiter 81 und der mit dem ersten Ende des dritten Hinleiters 146 verbundene erste Vertikalverbindungsleiter 61 in der dritten Richtung 15 übereinander, insbesondere in der dritten Richtung 15 miteinander fluchtend, angeordnet sein. Außerdem können an der zweiten Seite 152 des ersten Dreiphasensystems 150 der mit dem zweiten Ende des weiteren dritten Rückleiters 149 verbundene weitere zweite Vertikalverbindungsleiter 72, die mit jeweils dem ersten Ende der zusätzlichen dritten Rückleiter 140 verbundenen zusätzlichen zweiten Vertikalverbindungsleiter 82 und der mit dem ersten Ende des dritten Rückleiters 147 verbundene zweite Vertikalverbindungsleiter 62 in der dritten Richtung 15 übereinander, insbesondere in der dritten Richtung 15 miteinander fluchtend, angeordnet sein. Bei der weiteren Statoreinheit 700 können an der zweiten Seite 152 des ersten Dreiphasensystems 150 der mit dem zweiten Ende des weiteren zweiten Rückleiters 144 verbundene zehnte Vertikalverbindungsleiter 70, die mit jeweils dem ersten Ende der zusätzlichen zweiten Rückleiter 138 verbundenen zusätzlichen sechsten Vertikalverbindungsleiter 86 und der mit dem zweiten Ende des zweiten Rückleiters 142 verbundene sechste Vertikalverbindungsleiter 66 in der dritten Richtung 15 übereinander, insbesondere in der dritten Richtung 15 miteinander fluchtend, angeordnet sein.

Damit sind bei der Statoreinheit 100 und bei der weiteren Statoreinheit 700 an der zweiten Seite 158 des ersten Dreiphasensystems 150 jeweils alle an die zweiten Enden der Hinleiter 139, 146, 148 der dritten Phase W angeschlossenen Vertikalverbindungsleiter 61, 71, 81 in der dritten Richtung 15 übereinander, insbesondere in der dritten Richtung 15 miteinander fluchtend, angeordnet. Außerdem sind an der zweiten Seite 158 des ersten Dreiphasensystems 150 jeweils alle an die zweiten Enden der Rückleiter 140, 147, 149 der dritten Phase W angeschlossenen Vertikalverbindungsleiter 61, 71, 81 in der dritten Richtung 15 übereinander, insbesondere in der dritten Richtung 15 miteinander fluchtend, angeordnet. Außerdem sind an der zweiten Seite 158 des ersten Dreiphasensystems 150 jeweils alle an die zweiten Enden der Rückleiter 138, 142, 144 der zweiten Phase V angeschlossenen Vertikalverbindungsleiter 66, 70, 86 in der dritten Richtung 15 übereinander, insbesondere in der dritten Richtung 15 miteinander fluchtend, angeordnet.

Damit sind bei der Statoreinheit 100 und bei der weiteren Statoreinheit 700 an der ersten Seite 152 des ersten Dreiphasensystems 150 jeweils alle an die ersten Enden der Hinleiter 139, 146, 148 der dritten Phase W angeschlossenen Vertikalverbindungsleiter 74, 76, 87 in der dritten Richtung 15 übereinander, insbesondere in der dritten Richtung 15 miteinander fluchtend, angeordnet. Außerdem sind, mit Ausnahme des vierten Vertikalverbindungsleiters 64, an der ersten Seite 152 des ersten Dreiphasensystems 150 jeweils alle an die ersten Enden der Rückleiter 132, 134, 136 der ersten Phase U angeschlossenen Vertikalverbindungsleiter 68, 84 in der dritten Richtung 15 übereinander, insbesondere in der dritten Richtung 15 miteinander fluchtend, angeordnet.

Bei der weiteren Statoreinheit 700 können an der ersten Seite 152 des ersten Dreiphasensystems 150 der vierte Horizontalverbindungsleiter 48 und die zusätzlichen vierten Horizontalverbindungsleiter 55 in der dritten Richtung 15 übereinander, insbesondere in der dritten Richtung 15 miteinander fluchtend, angeordnet sein. Außerdem können an der ersten Seite 152 des ersten Dreiphasensystems 150 der siebte Horizontalverbindungsleiter 51 und die zusätzlichen siebten Horizontalverbindungsleiter 58 in der dritten Richtung 15 übereinander, insbesondere in der dritten Richtung 15 miteinander fluchtend, angeordnet sein.

Bei der weiteren Statoreinheit 700 können an der zweiten Seite 152 des ersten Dreiphasensystems 150 der dritte Horizontalverbindungsleiter 43, die zusätzlichen dritten Horizontalverbindungsleiter 54 und der weitere dritte Horizontalverbindungsleiter 47 in der dritten Richtung 15 übereinander, insbesondere in der dritten Richtung 15 miteinander fluchtend, angeordnet sein. Außerdem können an der ersten Seite 152 des ersten Dreiphasensystems 150 der fünfte Horizontalverbindungsleiter 49, der sechste Horizontalverbindungsleiter 50 und die zusätzlichen fünften Horizontalverbindungsleiter 56 in der dritten Richtung 15 übereinander, insbesondere in der dritten Richtung 15 miteinander fluchtend, angeordnet sein.

Bei den Statoreinheiten 100, 700 wird die Anschlussstatorlage der ersten Dreiphasensysteme 150 durch die in der dritten Richtung 15 oberste Statorlängslage 710 der Statoreinheiten 100, 700 gebildet. Die Statorlage mit dem ersten, zweiten und dritten Hinleiter 131, 141, 146, sowie mit dem ersten, zweiten und dritten Rückleiter 132, 142, 147 der ersten Dreiphasensysteme 150 wird durch die in der dritten Richtung 15 unterste Statorlängslage 710 der Statoreinheiten 100, 700 gebildet. Die Nachbarstatorlage mit den Sternpunkten 157 der ersten Dreiphasensysteme 150 wird durch die in der dritten Richtung 15 unterste Statorschräglage 710 der Statoreinheiten 100, 700 gebildet.

Bei den Statoreinheiten 100, 700 wird die Anschlussstatorlage der zweiten Dreiphasensysteme 151 durch die in der dritten Richtung 15 oberste Statorschräglage 711 der Statoreinheiten 100, 700 gebildet. Die Statorlage mit dem ersten, zweiten und dritten Hinleiter 131, 141, 146, sowie mit dem ersten, zweiten und dritten Rückleiter 132, 142, 147 der zweiten Dreiphasensysteme 151 wird durch die in der dritten Richtung 15 unterste Statorschräglage 711 der Statoreinheiten 100, 700. Die Nachbarstatorlage mit den Sternpunkten 157 der zweiten Dreiphasensysteme 151 wird durch die in der dritten Richtung 15 unterste Statorlängslage 711 der Statoreinheiten 100, 700 gebildet.

Die Verschaltung der ersten Spulenleiter 125 in den ersten Dreiphasensystemen 150 der Statorlängslagen 721 und die Verschaltung der zweiten Spulenleiter 126 in den zweiten Dreiphasensystemen der Statorschräglagen 722 weisen damit die folgenden gemeinsamen Merkmale auf.

Die ersten Hinleiter der einzelnen Statorlagen 721, 722 sind jeweils in ihrer Statorlage 721, 722 an der zweiten Seite 158 ihres Dreiphasensystems 150, 151 mittels eines in der betreffenden Statorlage 721, 722 und an der zweiten Seite 158, 159 des betreffenden Dreiphasensystems 150, 151 angeordneten ersten Horizontalverbindungsleiters elektrisch leitend mit dem ersten Rückleiter der betreffenden Statorlage 721, 722 verbunden. Mit Ausnahme der Anschlussstatorlage sind alle zweiten Hinleiter der einzelnen Statorlagen 721, 722 an der ersten Seite 152 ihres Dreiphasensystems 150, 151 mittels eines in der betreffenden Statorlage 721, 722 und an der ersten Seite 152, 153 des betreffenden Dreiphasensystems 150, 151 angeordneten zweiten Horizontalverbindungsleiters elektrisch leitend mit dem zweiten Rückleiter der betreffenden Statorlage 721, 722 verbunden.

Die dritten Hinleiter der einzelnen Statorlagen 721, 722 sind jeweils an der zweiten Seite 158, 159 ihres Dreiphasensystems 150, 151 mittels eines an der zweiten Seite 158, 159 des betreffenden Dreiphasensystems 150, 151 angeordneten dritten Horizontalverbindungsleiters elektrisch leitend mit dem dritten Rückleiter der betreffenden Statorlage 721, 722 verbunden, wobei der Horizontalverbindungsleiter in einer in der dritten Richtung 15 benachbart zu der betreffenden Statorlage 721, 722 und auf der der betreffenden Statorlage 721, 722 gegenüberliegenden Seite der Trägerplatte 720, 730, 750 der betreffenden Statorlage 721, 722 ausgebildeten Nachbarstatorlage angeordnet ist. Dabei sind der dritte Hinleiter und der dritte Rückleiter jeweils über Vertikalverbindungsleiter, die als Nachbarlagenverbinder durch die betreffende Trägerplatte 720, 730, 750 ausgebildet sind, mit dem jeweiligen dritten Horizontalverbindungsleiter elektrisch leitend verbunden.

Die einzelnen ersten Horizontalverbindungsleiter der ersten Dreiphasensysteme 150 können auf den Statorschräglagen 721 in der dritten Richtung 15 übereinander liegend, insbesondere miteinander fluchtend, ausgerichtet sein. Die einzelnen ersten Horizontalverbindungsleiter der zweiten Dreiphasensysteme 151 können auf den Statorlängslagen 720 in der dritten Richtung 15 übereinander liegend, insbesondere miteinander fluchtend, ausgerichtet sein.

Die einzelnen zweiten Horizontalverbindungsleiter der ersten Dreiphasensysteme 150 können auf den Statorschräglagen 721 in der dritten Richtung 15 übereinander liegend, insbesondere miteinander fluchtend, ausgerichtet sein. Die einzelnen zweiten Horizontalverbindungsleiter der zweiten Dreiphasensysteme 151 können auf den Statorlängslagen 720 in der dritten Richtung 15 übereinander liegend, insbesondere miteinander fluchtend, ausgerichtet sein.

Die einzelnen dritten Horizontalverbindungsleiter der ersten Dreiphasensysteme 150 können auf den Statorschräglagen 721 in der dritten Richtung 15 übereinander liegend, insbesondere miteinander fluchtend, ausgerichtet sein. Die einzelnen dritten Horizontalverbindungsleiter der zweiten Dreiphasensysteme 151 können auf den Statorlängslagen 720 in der dritten Richtung 15 übereinander liegend, insbesondere miteinander fluchtend, ausgerichtet sein.

Ebenso können die Vertikalverbindungsleiter der ersten Dreiphasensysteme 150, die die dritten Hinleiter mit den dritten Horizontalverbindungsleitern elektrisch leitend verbinden, in der dritten Richtung 15 übereinander, insbesondere fluchtend miteinander, ausgerichtet sein. Ebenso können die Vertikalverbindungsleiter der zweiten Dreiphasensysteme 150, die die dritten Hinleiter mit den dritten Horizontalverbindungsleitern elektrisch leitend verbinden, in der dritten Richtung 15 übereinander, insbesondere fluchtend miteinander, ausgerichtet sein.

Auch können die Vertikalverbindungsleiter der zweiten Dreiphasensysteme 151, die die dritten Rückleiter mit den dritten Horizontalverbindungsleitern elektrisch leitend verbinden, in der dritten Richtung 15 übereinander, insbesondere fluchtend miteinander, ausgerichtet sein. Auch können die Vertikalverbindungsleiter der zweiten Dreiphasensysteme 151, die die dritten Rückleiter mit den dritten Horizontalverbindungsleitern elektrisch leitend verbinden, in der dritten Richtung 15 übereinander, insbesondere fluchtend miteinander, ausgerichtet sein.

Die erste Phase U des Antriebsstroms wird in allen Statorlagen 721, 722 jeweils an der ersten Seite 152, 153 des betreffenden Dreiphasensystems 150, 151 in die ersten Hinleiter eingespeist. Die zweite Phase V des Antriebsstroms wird in allen Statorlagen 721, 722 jeweils an der zweiten Seite 152, 153 des betreffenden Dreiphasensystems 150, 151 in die zweiten Rückleiter eingespeist. Die dritte Phase W des Antriebsstroms wird in allen Statorlagen 721, 722 jeweils an der ersten Seite 152, 153 des betreffenden Dreiphasensystems 150, 151 in die dritten Hinleiter eingespeist.

### Bezugszeichenliste

- 1: Planarantriebssystem
- 8: Oberseite
- 9: Unterseite
- 10: Statormodul
- 11: Statorfläche
- 12: erste Richtung
- 14: zweite Richtung
- 15: dritte Richtung
- 19: Modulgehäuse
- 30: Außenkante der Statorfläche
- 32: Seitenfläche der Statoreinheit
- 41: erster Horizontalverbindungsleiter
- 42: zweiter Horizontalverbindungsleiter
- 43: dritter Horizontalverbindungsleiter
- 45: weiterer erster Horizontalverbindungsleiter
- 47: weiterer dritter Horizontalverbindungsleiter
- 48: vierter Horizontalverbindungsleiter
- 49: fünfter Horizontalverbindungsleiter
- 50: sechster Horizontalverbindungsleiter
- 51: siebter Horizontalverbindungsleiter
- 52: zusätzlicher erster Horizontalverbindungsleiter
- 53: zusätzlicher zweiter Horizontalverbindungsleiter
- 54: zusätzlicher dritter Horizontalverbindungsleiter
- 55: zusätzlicher vierter Horizontalverbindungsleiter
- 56: zusätzlicher fünfter Horizontalverbindungsleiter
- 58: zusätzlicher siebter Horizontalverbindungsleiter
- 61: erster Vertikalverbindungsleiter
- 62: zweiter Vertikalverbindungsleiter
- 63: dritter Vertikalverbindungsleiter
- 64: vierter Vertikalverbindungsleiter
- 65: fünfter Vertikalverbindungsleiter
- 66: sechster Vertikalverbindungsleiter
- 67: siebter Vertikalverbindungsleiter
- 68: achter Vertikalverbindungsleiter
- 69: neunter Vertikalverbindungsleiter
- 70: zehnten Vertikalverbindungsleiter
- 71: weiterer erster Vertikalverbindungsleiter
- 72: weiterer zweiter Vertikalverbindungsleiter
- 73: weiterer dritter Vertikalverbindungsleiter
- 74: elfter Vertikalverbindungsleiter
- 75: zwölfter Vertikalverbindungsleiter
- 76: dreizehnter Vertikalverbindungsleiter
- 81: zusätzlicher erster Vertikalverbindungsleiter
- 82: zusätzlicher zweiter Vertikalverbindungsleiter
- 83: zusätzlicher dritter Vertikalverbindungsleiter
- 84: zusätzlicher vierter Vertikalverbindungsleiter
- 85: zusätzlicher fünfter Vertikalverbindungsleiter
- 86: zusätzlicher sechster Vertikalverbindungsleiter
- 87: zusätzlicher elfter Vertikalverbindungsleiter
- 88: zusätzlicher zwölfter Vertikalverbindungsleiter
- 91: erste Anschlussstruktur
- 92: zweite Anschlussstruktur
- 93: dritte Anschlussstruktur
- 100: Statoreinheit
- 101: Oberseite der Statoreinheit
- 102: Unterseite der Statoreinheit
- 104: erste Statorlage
- 105: zweite Statorlage
- 106: dritte Statorlage
- 107: vierte Statorlage
- 110: erster Statorsektor
- 112: zweiter Statorsektor
- 113: dritter Statorsektor
- 114: vierter Statorsektor
- 120: erste Statorsegmente
- 121: zweite Statorsegmente
- 125: erste Spulenleiter
- 126: zweite Spulenleiter
- 131: erster Hinleiter
- 132: erster Rückleiter
- 133: weiterer erster Hinleiter
- 134: weiterer erster Rückleiter
- 135: zusätzlicher erste Hinleiter
- 136: zusätzlicher erster Rückleiter
- 137: zusätzlicher zweiter Hinleiter
- 138: zusätzlicher zweiter Rückleiter
- 139: zusätzlicher dritter Hinleiter
- 140: zusätzlicher dritter Rückleiter
- 141: zweiter Hinleiter
- 142: zweiter Rückleiter
- 143: weiterer zweiter Hinleiter
- 144: weiterer zweiter Rückleiter
- 146: dritter Hinleiter
- 147: dritter Rückleiter
- 148: weiterer dritter Hinleiter
- 149: weiterer dritter Rückleiter
- 150: erste Dreiphasensysteme
- 151: zweite Dreiphasensysteme
- 152: erste Seite des ersten Dreiphasensystems
- 153: erste Seite des zweiten Dreiphasensystems
- 154: erster Anschlusspunkt
- 155: zweiter Anschlusspunkt
- 156: dritter Anschlusspunkt
- 157: Sternpunkt
- 158: zweite Seite des ersten Dreiphasensystems
- 159: zweite Seite des zweiten Dreiphasensystems
- 200: Läufer
- 201: Magnetanordnung
- 206: erste Läuferrichtung
- 208: zweite Läuferrichtung
- 210: erste Magneteinheit
- 211: erster Antriebsmagnet
- 220: zweite Magneteinheit
- 221: zweiter Antriebsmagnet
- 230: dritte Magneteinheit
- 240: vierte Magneteinheit
- 420: Kontaktanordnung
- 421: erste Kontaktstruktur
- 422: zweite Kontaktstruktur
- 423: dritte Kontaktstruktur
- 424: vierte Kontaktstruktur
- 700: weitere Statoreinheit
- 710: Statorlängslage
- 711: Statorschräglage
- 720: erste Trägerplatte
- 721: erste Statorlängslage
- 722: erste Statorschräglage
- 723: erste Seite der ersten Trägerplatte
- 724: zweite Seite der ersten Trägerplatte
- 725: erste Vertikalverbindungsstruktur
- 726: erste Leiterstruktur
- 727: weitere erste Vertikalverbindungsstruktur
- 728: Isolierlage
- 730: zweite Trägerplatte
- 731: zweite Statorlängslage
- 732: zweite Statorschräglage
- 733: erste Seite der zweiten Trägerplatte
- 734: zweite Seite der zweiten Trägerplatte
- 735: zweite Vertikalverbindungsstruktur
- 736: zweite Leiterstruktur
- 737: weitere zweite Vertikalverbindungsstruktur
- 740: dritte Vertikalverbindungsstruktur
- 741: vierte Vertikalverbindungsstruktur
- 744: dritte Leiterstruktur
- 750: weitere Trägerplatte
- 753: erste Seite der weiteren Trägerplatte
- 754: zweite Seite der weiteren Trägerplatte
- 756: erste weitere Trägerplatte
- 757: zweite weitere Trägerplatte
- 758: dritte weitere Trägerplatte
- 759: vierte weitere Trägerplatte
- 770: fünfte Statorlage
- 771: sechste Statorlage
- 772: siebte Statorlage
- 773: achte Statorlage
- 774: neunte Statorlage
- 775: zehnte Statorlage
- 776: elfte Statorlage
- 777: zwölfte Statorlage

## Patentansprüche

1. Statoreinheit (100, 700) zum Antreiben eines Läufers (200) eines elektrischen Planarmotors (1),
wobei die Statoreinheit (100, 700) in einer Statorlage (107) der Statoreinheit (100, 700) angeordnete Spulenleiter (125) umfasst,
wobei die Spulenleiter (125) in einer ersten Richtung (12) länglich ausgedehnt sind und in einer zu der ersten Richtung (12) senkrecht orientierten zweiten Richtung (14) nebeneinander angeordnet sind,
wobei die Spulenleiter (125) auf der Statoreinheit (100, 700) zu einem Dreiphasensystem (150) mit einer ersten Phase (U), einer zweiten Phase (V) und einer dritten Phase (W) verschaltet sind,
wobei die Spulenleiter (125) als ein erster Hinleiter (131) und als ein mit dem ersten Hinleiter (131) in Reihe geschalteter erster Rückleiter (132) der ersten Phase (U), als ein zweiter Hinleiter (141) und als ein mit dem zweiten Hinleiter (141) in Reihe geschalteter zweiter Rückleiter (142) der zweiten Phase (V) und als ein dritter Hinleiter (146) und als ein mit dem dritten Hinleiter (146) in Reihe geschalteter dritter Rückleiter (147) der dritten Phase (W) ausgebildet sind,
wobei der erste Hinleiter (131) und der erste Rückleiter (132) mittels eines in der Statorlage (107) angeordneten ersten Horizontalverbindungsleiters (41) elektrisch leitend in Reihe geschaltet sind,
wobei der zweite Hinleiter (141) und der zweite Rückleiter (142) mittels eines in der Statorlage (107) angeordneten zweiten Horizontalverbindungsleiters (42) elektrisch leitend in Reihe geschaltet sind,
**dadurch gekennzeichnet, dass**
das Dreiphasensystem (150) eine erste Seite (152) und eine der ersten Seite (152) gegenüberliegende zweite Seite (158) aufweist, die entlang der zweiten Richtung (14) verlaufen, wobei der erste Horizontalverbindungsleiter (41) die an der zweite Seite (158) des Dreiphasensystem (150) liegenden Enden des ersten Hinleiters (131) und des ersten Rückleiters (132) und der zweite
Horizontalverbindungsleiter (42) die an der ersten Seite (158) des Dreiphasensystem (150) liegenden Enden des zweiten Hinleiters (141) und des zweiten Rückleiters (142) verbindet, und wobei der erste Horizontalverbindungsleiter (41) und der zweite Horizontalverbindungsleiter (42) in der Statorlage (107) jeweils als Querverbinder in Form von Leiterbahnen ausgebildet sind.

2. Statoreinheit (100, 700) nach Anspruch 1,
wobei der dritte Hinleiter (146) und der dritte Rückleiter (147) mittels eines an der zweiten Seite (158) des Dreiphasensystems (800) angeordneten dritten Horizontalverbindungsleiters (43) elektrisch leitend miteinander verbunden sind,
wobei der dritte Horizontalverbindungsleiter (43) in einer der Statorlage (107) benachbart angeordneten Nachbarstatorlage (106) angeordnet ist,
wobei der dritte Hinleiter (146) über einen ersten Vertikalverbindungsleiter (61) mit dem dritten Horizontalverbindungsleiter (43) elektrisch leitend verbunden ist,
wobei der dritte Rückleiter (147) über einen zweiten Vertikalverbindungsleiter (62) mit dem dritten Horizontalverbindungsleiter (43) elektrisch leitend verbunden ist.

3. Statoreinheit (100, 700) nach Anspruch 2,
wobei die Statoreinheit (100, 700) eine mit zwei Statorlagen versehene Trägerplatte (730, 759) umfasst, wobei die Statorlage (107) auf einer ersten Seite (733, 753) der Trägerplatte (730, 759) und die Nachbarstatorlage (106) auf einer zweiten Seite (734, 754) der Trägerplatte (730, 759) angeordnet sind.

4. Statoreinheit (100, 700) nach den Ansprüchen 2 und 3, wobei sich der erste Vertikalverbindungsleiter (61) und der zweite Vertikalverbindungsleiter (62) jeweils von der ersten Seite (733, 753) der Trägerplatte (730, 759) bis zu der zweiten Seite (734, 754) der Trägerplatte (730, 759) erstrecken.

5. Statoreinheit (100, 700) nach einem der vorhergehenden Ansprüche,
wobei die Statoreinheit (100, 700) eine erste Anschlussstruktur (91) zur Einspeisung der ersten Phase (U) und eine zweite Anschlussstruktur (92) zur Einspeisung der zweiten Phase (V) umfasst,
wobei der erste Hinleiter (131) in der Statorlage (107) mit einem an der ersten Seite (152) angeordneten dritten Vertikalverbindungsleiter (63) elektrisch leitend verbunden ist,
wobei der erste Hinleiter (131) über den dritten Vertikalverbindungsleiter (63) mit der ersten Anschlussstruktur (91) elektrisch leitend verbunden ist, wobei der erste Rückleiter (132) in der Statorlage (107) mit einem an der ersten Seite (152) angeordneten vierten Vertikalverbindungsleiter (64) elektrisch leitend verbunden ist,
wobei der erste Rückleiter (132) über den vierten Vertikalverbindungsleiter (64) mit einem Sternpunkt (157) des Dreiphasensystems (150) elektrisch leitend verbunden ist,
wobei der zweite Hinleiter (141) in der Statorlage (107) mit einem an der zweiten Seite (158) angeordneten fünften Vertikalverbindungsleiter (65) elektrisch leitend verbunden ist,
wobei der zweite Hinleiter (141) über den fünften Vertikalverbindungsleiter (65) mit dem Sternpunkt (157) elektrisch leitend verbunden ist,
wobei der zweite Rückleiter (142) in der Statorlage (107) mit einem an der zweiten Seite (158) angeordneten sechsten Vertikalverbindungsleiter (66) elektrisch leitend verbunden ist,
wobei der zweite Rückleiter (142) über den sechsten Vertikalverbindungsleiter (66) mit der zweiten Anschlussstruktur (92) elektrisch leitend verbunden ist.

6. Statoreinheit (100, 700) nach Anspruch 5,
wobei die erste Anschlussstruktur (91) und die zweite Anschlussstruktur (92) an der ersten Seite (152) des Dreiphasensystems (150) angeordnet sind.

7. Statoreinheit (100, 700) nach Anspruch 6,
wobei die Statoreinheit (100, 700) eine Anschlussstatorlage (104) umfasst,
wobei die Anschlussstatorlage (104) einen weiteren ersten Hinleiter (133) der ersten Phase (U), einen weiteren ersten Rückleiter (134) der ersten Phase (U) und einen weiteren zweiten Hinleiter (143) der zweiten Phase (V) umfasst, wobei die erste Anschlussstruktur (91) in der Anschlussstatorlage (104) mit dem weiteren ersten Hinleiter (133) und die zweite Anschlussstruktur (92) in der Anschlussstatorlage (104) mit dem weiteren zweiten Hinleiter (143) elektrisch leitend verbunden ist,
wobei der weitere erste Hinleiter (133) mittels eines in der Anschlussstatorlage (104) und an der zweiten Seite (158) des Dreiphasensystems (150) angeordneten weiteren ersten Horizontalverbindungsleiters (45) elektrisch leitend mit dem weiteren ersten Rückleiter (134) verbunden ist, wobei der weitere zweite Hinleiter (143) an der zweiten Seite (158) des Dreiphasensystems (150) mit dem sechsten Vertikalverbindungsleiter (66) elektrisch leitend verbunden ist.

8. Statoreinheit (100, 700) nach einem der Ansprüche 5 bis 7, wobei Statoreinheit (100, 700) einen weiteren zweiten Rückleiter (144) der zweiten Phase (V) umfasst,
wobei der weitere zweite Rückleiter (144) an der zweiten Seite (158) des Dreiphasensystems (150) mit dem fünften Vertikalverbindungsleiter (65) elektrisch leitend verbunden ist,
wobei der weitere zweite Rückleiter (144) an der ersten Seite (152) des Dreiphasensystems (150) über einen siebten Vertikalverbindungsleiter (67) mit dem Sternpunkt (157) des Dreiphasensystems (150) elektrisch leitend verbunden ist.

9. Statoreinheit (100, 700) nach Anspruch 7 und 8,
wobei der weitere zweite Rückleiter (144) in der Anschlussstatorlage (104) angeordnet und in der Anschlussstatorlage (104) mit dem siebten Vertikalverbindungsleiter (67) elektrisch leitend verbunden ist.

10. Statoreinheit (100, 700) nach einem der Ansprüche 5 bis 9, wobei der Sternpunkt (157) des Dreiphasensystems (150) in der Nachbarstatorlage (106) angeordnet ist.

## Claims

1. Stator unit (100, 700) for driving a rotor (200) of an electric planar motor (1),
wherein the stator unit (100, 700) comprises coil conductors (125) arranged in a stator layer (107) of the stator unit (100, 700),
wherein the coil conductors (125) are extended in an elongate manner in a first direction (12) and are arranged next to one another in a second direction (14) oriented perpendicularly to the first direction (12), wherein the coil conductors (125) are interconnected on the stator unit (100, 700) to form a three-phase system (150) comprising a first phase (U), a second phase (V) and a third phase (W),
wherein the coil conductors (125) are embodied as a first forward conductor (131) and as a first return conductor (132), connected in series with the first forward conductor (131), of the first phase (U), as a second forward conductor (141) and as a second return conductor (142), connected in series with the second forward conductor (141), of the second phase (V), and as a third forward conductor (146) and as a third return conductor (147), connected in series with the third forward conductor (146), of the third phase (W),
wherein the first forward conductor (131) and the first return conductor (132) are electrically conductively connected in series by means of a first horizontal connecting conductor (41) arranged in the stator layer (107),
wherein the second forward conductor (141) and the second return conductor (142) are electrically conductively connected in series by means of a second horizontal connecting conductor (42) arranged in the stator layer (107),
**characterized in that**
the three-phase system (150) has a first side (152) and a second side (158) situated opposite the first side (152), which first side and second side run along the second direction (14), wherein the first horizontal connecting conductor (41) connects the ends, situated on the second side (158) of the three-phase system (150), of the first forward conductor (131) and of the first return conductor (132) and the second horizontal connecting conductor (42) connects the ends, situated on the first side (158) of the three-phase system (150), of the second forward conductor (141) and of the second return conductor (142), and wherein the first horizontal connecting conductor (41) and the second horizontal connecting conductor (42) are each embodied as transverse connectors in the form of conductor tracks in the stator layer (107).

2. Stator unit (100, 700) according to Claim 1, wherein the third forward conductor (146) and the third return conductor (147) are electrically conductively connected to one another by means of a third horizontal connecting conductor (43) arranged on the second side (158) of the three-phase system (800),
wherein the third horizontal connecting conductor (43) is arranged in a neighbouring stator layer (106) arranged adjacent to the stator layer (107),
wherein the third forward conductor (146) is electrically conductively connected to the third horizontal connecting conductor (43) via a first vertical connecting conductor (61),
wherein the third return conductor (147) is electrically conductively connected to the third horizontal connecting conductor (43) via a second vertical connecting conductor (62) .

3. Stator unit (100, 700) according to Claim 2, wherein the stator unit (100, 700) comprises a carrier plate (730, 759) provided with two stator layers, wherein the stator layer (107) is arranged on a first side (733, 753) of the carrier plate (730, 759) and the neighbouring stator layer (106) is arranged on a second side (734, 754) of the carrier plate (730, 759).

4. Stator unit (100, 700) according to Claims 2 and 3, wherein the first vertical connecting conductor (61) and the second vertical connecting conductor (62) each extend from the first side (733, 753) of the carrier plate (730, 759) to the second side (734, 754) of the carrier plate (730, 759) .

5. Stator unit (100, 700) according to one of the preceding claims,
wherein the stator unit (100, 700) comprises a first connection structure (91) for feeding the first phase (U) and a second connection structure (92) for feeding the second phase (V),
wherein the first forward conductor (131) is electrically conductively connected to a third vertical connecting conductor (63), arranged on the first side (152), in the stator layer (107),
wherein the first forward conductor (131) is electrically conductively connected to the first connection structure (91) via the third vertical connecting conductor (63), wherein the first return conductor (132) is electrically conductively connected to a fourth vertical connecting conductor (64), arranged on the first side (152), in the stator layer (107),
wherein the first return conductor (132) is electrically conductively connected to a star point (157) of the three-phase system (150) via the fourth vertical connecting conductor (64),
wherein the second forward conductor (141) is electrically conductively connected to a fifth vertical connecting conductor (65), arranged on the second side (158), in the stator layer (107),
wherein the second forward conductor (141) is electrically conductively connected to the star point (157) via the fifth vertical connecting conductor (65), wherein the second return conductor (142) is electrically conductively connected to a sixth vertical connecting conductor (66), arranged on the second side (158), in the stator layer (107),
wherein the second return conductor (142) is electrically conductively connected to the second connection structure (92) via the sixth vertical connecting conductor (66).

6. Stator unit (100, 700) according to Claim 5, wherein the first connection structure (91) and the second connection structure (92) are arranged on the first side (152) of the three-phase system (150).

7. Stator unit (100, 700) according to Claim 6, wherein the stator unit (100, 700) comprises a connection stator layer (104),
wherein the connection stator layer (104) comprises a further first forward conductor (133) of the first phase (U), a further first return conductor (134) of the first phase (U) and a further second forward conductor (143) of the second phase (V),
wherein the first connection structure (91) is electrically conductively connected to the further first forward conductor (133) in the connection stator layer (104) and the second connection structure (92) is electrically conductively connected to the further second forward conductor (143) in the connection stator layer (104),
wherein the further first forward conductor (133) is electrically conductively connected to the further first return conductor (134) by means of a further first horizontal connecting conductor (45) arranged in the connection stator layer (104) and on the second side (158) of the three-phase system (150),
wherein the further second forward conductor (143) is electrically conductively connected to the sixth vertical connecting conductor (66) on the second side (158) of the three-phase system (150).

8. Stator unit (100, 700) according to one of Claims 5 to 7,
wherein stator unit (100, 700) comprises a further second return conductor (144) of the second phase (V),
wherein the further second return conductor (144) is electrically conductively connected to the fifth vertical connecting conductor (65) on the second side (158) of the three-phase system (150),
wherein the further second return conductor (144) is electrically conductively connected to the star point (157) of the three-phase system (150) on the first side (152) of the three-phase system (150) via a seventh vertical connecting conductor (67).

9. Stator unit (100, 700) according to Claims 7 and 8, wherein the further second return conductor (144) is arranged in the connection stator layer (104) and is electrically conductively connected to the seventh vertical connecting conductor (67) in the connection stator layer (104).

10. Stator unit (100, 700) according to one of Claims 5 to 9,
wherein the star point (157) of the three-phase system (150) is arranged in the neighbouring stator layer (106).

## Revendications

1. Unité de stator (100, 700) destinée à entraîner un rotor (200) d'un moteur électrique plan (1),
l'unité de stator (100, 700) comprenant des conducteurs de bobine (125) disposés dans une couche de stator (107) de l'unité de stator (100, 700),
les conducteurs de bobine (125) étant allongés dans une première direction (12) et étant disposés les uns à côté des autres dans une deuxième direction (14) orientée perpendiculairement à la première direction (12),
les conducteurs de bobine (125) étant montés sur l'unité de stator (100, 700) de manière à former un système triphasé (150) comprenant une première phase (U), une deuxième phase (V) et une troisième phase (W), les conducteurs de bobine (125) étant conçus comme un premier conducteur aller (131) et comme un premier conducteur retour (132) de la première phase (U) monté en série avec le premier conducteur aller (131), comme un deuxième conducteur aller (141) et comme un deuxième conducteur retour (142) de la deuxième phase (V) monté en série avec le deuxième conducteur aller (141) et comme un troisième conducteur aller (146) et comme un troisième conducteur retour (147) de la troisième phase (W) monté en série avec le troisième conducteur aller (141),
le premier conducteur aller (131) et le premier conducteur retour (132) étant montés de manière électriquement conductrice en série au moyen d'un premier conducteur de liaison horizontal (41) disposé dans la couche de stator (107),
le deuxième conducteur aller (141) et le deuxième conducteur retour (142) étant montés de manière électriquement conductrice en série au moyen d'un deuxième conducteur de liaison horizontal (42) disposé dans la couche de stator (107),
**caractérisée en ce que**
le système triphasé (150) comporte un premier côté (152) et un deuxième côté (158) opposé au premier côté (152), lesquels s'étendent dans la deuxième direction (14),
le premier conducteur de liaison horizontal (41) reliant les extrémités du premier conducteur aller (131) et du premier conducteur retour (132), lesquelles sont situées sur le deuxième côté (158) du système triphasé (150), et le deuxième conducteur de liaison horizontal (42) reliant les extrémités du deuxième conducteur aller (141) et du deuxième conducteur retour (142), lesquelles sont situées sur le premier côté (158) du système triphasé (150), et le premier conducteur de liaison horizontal (41) et le deuxième conducteur de liaison horizontal (42) étant conçus dans la couches de stator (107) respectivement sous forme de pistes conductrices.

2. Unité de stator (100, 700) selon la revendication 1,
le troisième conducteur aller (146) et le troisième conducteur retour (147) étant reliés électriquement l'un à l'autre au moyen d'un troisième conducteur de liaison horizontal (43) disposé sur le deuxième côté (158) du système triphasé (800),
le troisième conducteur de liaison horizontal (43) étant disposé dans une couche de stator voisine (106) disposée de manière adjacente à la couche de stator (107),
le troisième conducteur aller (146) étant relié électriquement au troisième conducteur de liaison horizontal (43) par le bais d'un premier conducteur de liaison vertical (61),
le troisième conducteur retour (147) étant relié électriquement au troisième conducteur de liaison horizontal (43) par le biais d'un deuxième conducteur de liaison vertical (62).

3. Unité de stator (100, 700) selon la revendication 2,
l'unité de stator (100, 700) comprenant une plaque de support (730, 759) munie de deux couches de stat,
la couche de stator (107) étant disposée sur un premier côté (733, 753) de la plaque de support (730, 759) et la couche de stator voisine (106) étant disposée sur un deuxième côté (734, 754) de la plaque de support (730, 759) .

4. Unité de stator (100, 700) selon les revendications 2 et 3,
le premier conducteur de liaison vertical (61) et le deuxième conducteur de liaison vertical (62) s'étendant chacun du premier côté (733, 753) de la plaque de support (730, 759) jusqu'au deuxième côté (734, 754) de la plaque de support (730, 759).

5. Unité de stator (100, 700) selon l'une des revendications précédentes,
l'unité de stator (100, 700) comprenant une première structure de raccordement (91) destinée à l'injection de la première phase (U) et une deuxième structure de raccordement (92) destinée à l'injection de la deuxième phase (V),
le premier conducteur aller (131) de la couche de stator (107) étant relié électriquement à un troisième conducteur de liaison vertical (63) disposé sur le premier côté (152),
le premier conducteur aller (131) étant relié électriquement à la première structure de raccordement (91) par le biais du troisième conducteur de liaison vertical (63),
le premier conducteur retour (132) de la couche de stator (107) étant relié électriquement à un quatrième conducteur de liaison vertical (64) disposé sur le premier côté (152),
le premier conducteur retour (132) étant relié électriquement à un point neutre (157) du système triphasé (150) par le biais du quatrième conducteur de liaison vertical (64),
le deuxième conducteur aller (141) de la couche de stator (107) étant relié électriquement à un cinquième conducteur de liaison vertical (65) disposé sur le deuxième côté (158),
le deuxième conducteur aller (141) étant relié électriquement au point neutre (157) par le biais du cinquième conducteur de liaison vertical (65),
le deuxième conducteur retour (142) de la couche de stator (107) étant relié électriquement à un sixième conducteur de liaison vertical (66) disposé sur le deuxième côté (158),
le deuxième conducteur retour (142) étant relié électriquement à la deuxième structure de raccordement (92) par le biais du sixième conducteur de liaison vertical (66).

6. Unité de stator (100, 700) selon la revendication 5,
la première structure de raccordement (91) et la deuxième structure de raccordement (92) étant disposées sur le premier côté (152) du système triphasé (150).

7. Unité de stator (100, 700) selon la revendication 6,
l'unité de stator (100, 700) comprenant une couche de stator de raccordement (104),
la couche de stator de raccordement (104) comprenant un autre premier conducteur aller (133) de la première phase (U), un autre premier conducteur retour (134) de la première phase (U) et un autre deuxième conducteur aller (143) de la deuxième phase (V),
la première structure de raccordement (91) de la couche de stator de raccordement (104) étant reliée électriquement à l'autre premier conducteur aller (133) et la deuxième structure de raccordement (92) de la couche de stator de raccordement (104) étant reliée électriquement à l'un autre deuxième conducteur aller (143),
l'autre premier conducteur aller (133) étant relié électriquement à l'autre premier conducteur retour (134) au moyen d'un autre premier conducteur de liaison horizontal (45) disposé dans la couche de stator de raccordement (104) et sur le deuxième côté (158) du système triphasé (150),
l'autre deuxième conducteur aller (143) étant relié électriquement au sixième conducteur de liaison vertical (66) sur le deuxième côté (158) du système triphasé (150).

8. Unité de stator (100, 700) selon l'une des revendications 5 à 7,
l'unité de stator (100, 700) comprenant un autre deuxième conducteur retour (144) de la deuxième phase (V),
l'autre deuxième conducteur retour (144) sur le deuxième côté (158) du système triphasé (150) est connecté électriquement au cinquième conducteur de connexion vertical (65),
l'autre deuxième conducteur de retour (144) étant relié électriquement au point neutre (157) du système triphasé (150) par le biais d'un septième conducteur de liaison vertical (67) sur le premier côté (152) du système triphasé (150).

9. Unité de stator (100, 700) selon les revendications 7 et 8,
l'autre deuxième conducteur retour (144) étant disposé dans la couche de stator de raccordement (104) et étant relié électriquement au septième conducteur de liaison vertical (67) dans la couche de stator de raccordement (104) .

10. Unité de stator (100, 700) selon l'une des revendications 5 à 9,
le point neutre (157) du système triphasé (150) étant disposé dans la couche de stator voisine (106).
